(19) Europäisches Patentamt
European Patent Office
Office européen des brevets

(11) **EP 3 862 386 A1**

(12) **EUROPEAN PATENT APPLICATION**
published in accordance with Art. 153(4) EPC

(43) Date of publication:
**11.08.2021 Bulletin 2021/32**

(51) Int Cl.:
*C08J 9/18* (2006.01)    *C08K 5/20* (2006.01)
*C08L 23/00* (2006.01)    *C08L 23/08* (2006.01)
*C08L 33/06* (2006.01)

(21) Application number: **19869025.7**

(22) Date of filing: **02.10.2019**

(86) International application number:
**PCT/JP2019/038913**

(87) International publication number:
**WO 2020/071423 (09.04.2020 Gazette 2020/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.10.2018   JP 2018188634**
**12.12.2018   JP 2018232840**
**12.12.2018   JP 2018232841**

(71) Applicant: **Kaneka Corporation**
**Osaka-shi, Osaka 530-8288 (JP)**

(72) Inventors:
• **YOSHIDA, Toru**
**Settsu-shi, Osaka 566-0072 (JP)**
• **MATSUMIYA, Yutaka**
**Settsu-shi, Osaka 566-0072 (JP)**
• **MIURA, Shintaro**
**Settsu-shi, Osaka 566-0072 (JP)**

(74) Representative: **Vossius & Partner**
**Patentanwälte Rechtsanwälte mbB**
**Siebertstraße 3**
**81675 München (DE)**

(54) **FOAMED POLYOLEFIN RESIN PARTICLES, METHOD FOR MANUFACTURING FOAMED POLYOLEFIN RESIN PARTICLES, AND IN-MOLD FOAMED POLYOLEFIN RESIN MOLDING**

(57)    An object is to provide novel polyolefin-based resin expanded particles which enable a polyolefin-based resin in-mold foamed molded product that is less prone to cracking and chipping when recovered from a mold. The object is attained by employing polyolefin-based resin expanded particles that contain a polyolefin-based resin (a) having a specific flexural rigidity, a higher fatty acid amide (b), and an ethylene-based copolymer (c) in respective specific amounts.

**Description**

Technical Field

The present invention relates to (i) polyolefin-based resin expanded particles, (ii) a method of producing polyolefin-based resin expanded particles, and (iii) a polyolefin-based resin in-mold foamed molded product.

Background Art

Polyolefin-based resin in-mold foamed molded products (also referred to here simply as "molded products") are used in a wide variety of applications, including shipping materials (such as shock-absorbing packing materials, returnable containers, and shock-absorbing materials for transport by truck), thermal insulating materials, civil engineering and construction materials, and automotive components (such as tool boxes and floor core materials).
For example, Patent Literature 1 discloses, as expanded particles for use in production of a molded product, polypropylene-based resin expanded particles in which: a base material resin containing a polypropylene-based resin as a main component has a flexural rigidity, measured in accordance with JIS K7106, of 4000 $kg/cm^2$ to 8000 $kg/cm^2$; and particles of the base material resin contain a metal salt of a fatty acid and a fatty acid amide.
During the production of a molded product, when the molded product ejected from a mold is recovered, the molded product is allowed to fall onto equipment called a chute. The chute is configured to absorb a shock, such as being composed of a foamed product or having a hammock-like structure.
A mixture of a higher fatty acid amide and an ethylene-based copolymer has conventionally been known as a slip additive (for example, Patent Literature 2), and a molded product using the slip additive has been developed (for example, Patent Literature 3).

Citation List

[Patent Literature]

[Patent Literature 1]
Japanese Patent Application Publication, *Tokukaihei,* No. 8-59876
[Patent Literature 2]
PCT International Publication No. WO2004/046242
[Patent Literature 3]
Japanese Patent Application Publication, Tokukai, No. 2008-138020

Summary of Invention

Technical Problem

The inventors of the present invention have found on their own that, according to the foregoing conventional techniques, when a molded product is recovered from a mold, the obtained molded product develops cracks and chips in some cases. The phrase "when a molded product is recovered from a mold" means, for example, (a) the moment at which the molded product is ejected from the mold, (b) a period during which the ejected molded product is falling into the chute, (c) the moment at which the molded product contacts the chute, or the like. For example, during the period (b), the obtained molded product may develop cracks and chips in cases where the molded product contacts equipment other than the chute (e.g., frame of molding machine), and, at the moment (c), the obtained molded product may develop cracks and chips when a corner of the molded product contacts the chute.
Therefore, the conventional techniques are insufficient and have some room for improvement, in terms of providing polyolefin-based resin expanded particles which enable a polyolefin-based resin in-mold foamed molded product that is less prone to cracking and chipping when recovered from a mold and that is excellent in strength.
An embodiment of the present invention has been accomplished in view of the above problems. An object of an embodiment of the present invention is to provide (i) novel polyolefin-based resin expanded particles which enable a polyolefin-based resin in-mold foamed molded product that is less prone to cracking and chipping when recovered from a mold and that is excellent in strength and (ii) a method of producing the polyolefin-based resin expanded particles.

Solution to Problem

As a result of diligent research in view of the above issue, the inventors of the present invention arrived at an embodiment of the present invention upon novelly finding that polyolefin-based resin expanded particles that can attain the above object can be obtained when a polyolefin-based resin (a) having a flexural rigidity of more than 8000 kg/cm$^2$ and not more than 13500 kg/cm$^2$, a higher fatty acid amide (b), and an ethylene-based copolymer (c) are contained.

Specifically, polyolefin-based resin expanded particles in accordance with an embodiment of the present invention contain: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), in which the polyolefin-based resin (a) has a flexural rigidity, measured in accordance with JIS K7106, of more than 8000 kg/cm$^2$ and not more than 13500 kg/cm$^2$, and the ethylene-based copolymer (c) contains, as structural units: a structural unit (c1) derived from ethylene; and at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

A method of producing polyolefin-based resin expanded particles in accordance with an embodiment of the present invention includes the steps of: obtaining a dispersion slurry, which includes (i) an aqueous dispersion medium and (ii) polyolefin-based resin particles and an inorganic blowing agent which are dispersed in the aqueous dispersion medium, by mixing the polyolefin-based resin particles, the aqueous dispersion medium, and the inorganic blowing agent in a pressure-resistant vessel; and obtaining polyolefin-based resin expanded particles by raising a temperature and a pressure inside the pressure-resistant vessel and then expelling the dispersion slurry from the pressure-resistant vessel into an area having a pressure lower than the raised pressure inside the pressure-resistant vessel, so that the polyolefin-based resin particles are expanded, in which the polyolefin-based resin particles contain: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), the polyolefin-based resin (a) has a flexural rigidity, measured in accordance with JIS K7106, of more than 8000 kg/cm$^2$ and not more than 13500 kg/cm$^2$, and the ethylene-based copolymer (c) contains, as structural units: a structural unit (c1) derived from ethylene; and at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

Advantageous Effects of Invention

An embodiment of the present invention makes it possible to provide polyolefin-based resin expanded particles which enable a polyolefin-based resin in-mold foamed molded product that is less prone to cracking and chipping when recovered from a mold and that is excellent in strength.

Brief Description of Drawings

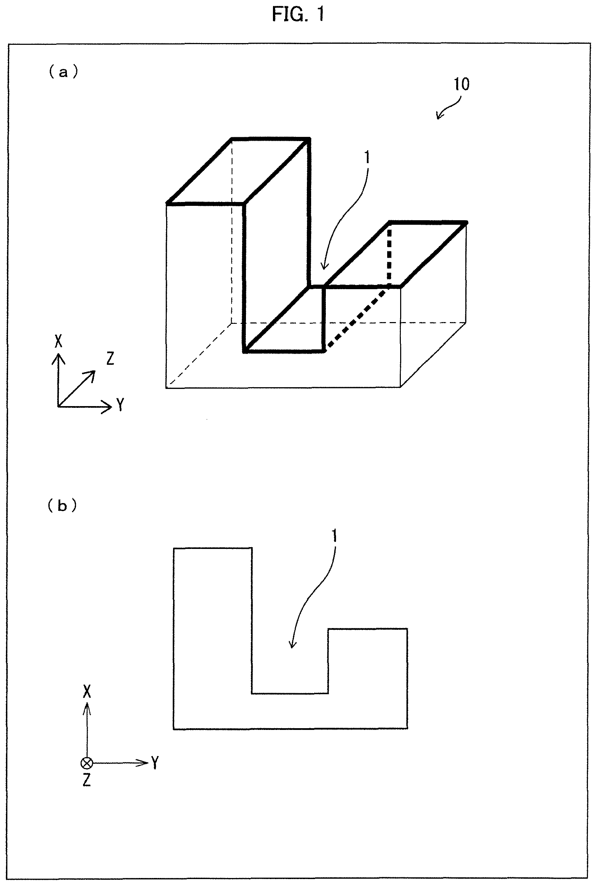

(a) of Fig. 1 is a perspective view of a polyolefin-based resin in-mold foamed molded product in accordance with an embodiment of the present invention seen from a certain direction. (b) of Fig. 1 is a plan view of (a) of Fig. 1 seen along Z direction.

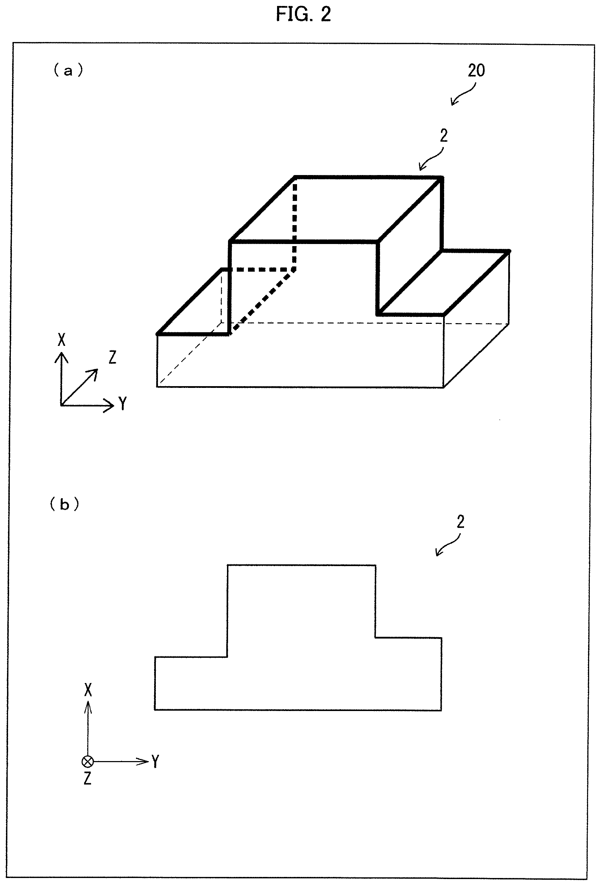

(a) of Fig. 2 is a perspective view of a polyolefin-based resin in-mold foamed molded product in accordance with an embodiment of the present invention seen from a certain direction. (b) of Fig. 2 is a plan view of (a) of Fig. 2 seen along Z direction.

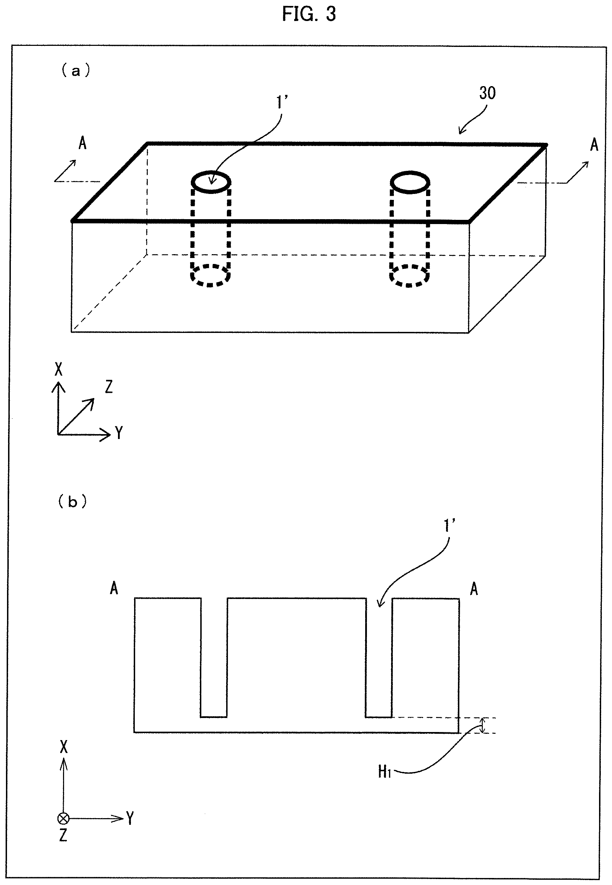

(a) of Fig. 3 is a perspective view of a polyolefin-based resin in-mold foamed molded product in accordance with an embodiment of the present invention seen from a certain direction. (b) of Fig. 3 is a cross-sectional view taken along line A-A in (a) of Fig. 3.

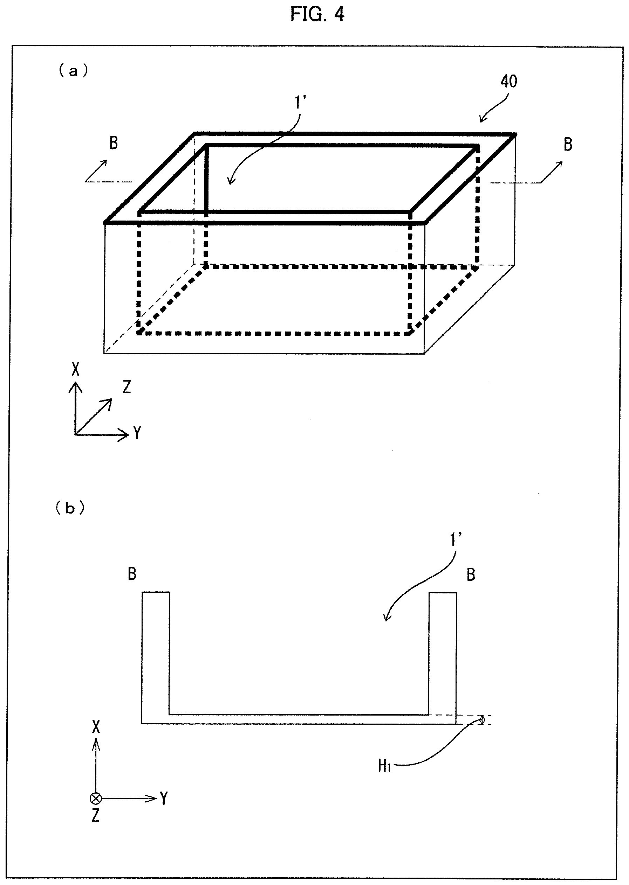

(a) of Fig. 4 is a perspective view of a polyolefin-based resin in-mold foamed molded product in accordance with an embodiment of the present invention seen from a certain direction. (b) of Fig. 4 is a cross-sectional view taken along line B-B in (a) of Fig. 4.

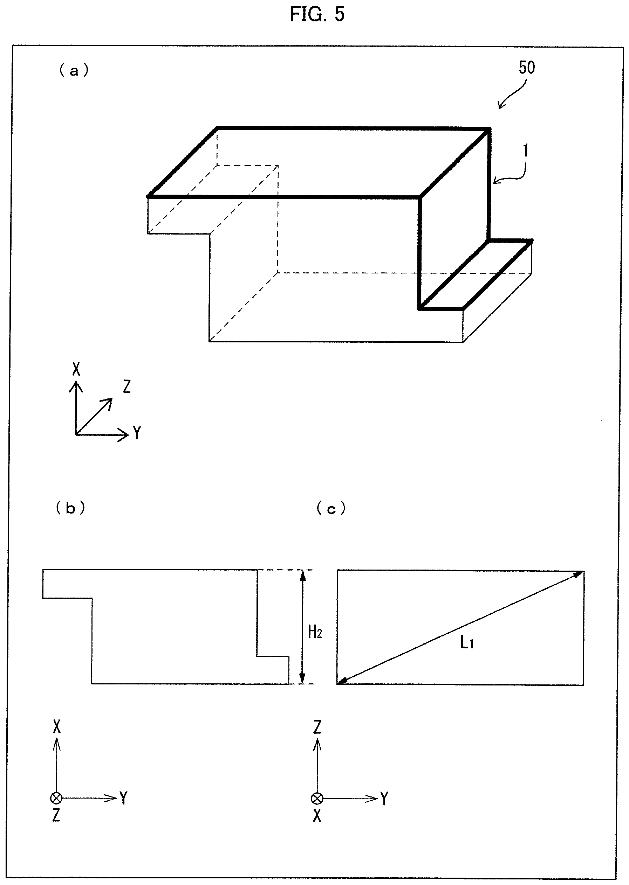

(a) of Fig. 5 is a perspective view of a polyolefin-based resin in-mold foamed molded product in accordance with an embodiment of the present invention seen from a certain direction. (b) of Fig. 5 is a projection obtained by shining light in Z direction in (a) of Fig. 5. (c) of Fig. 5 is a projection obtained by shining light in X direction in (a) of Fig. 5.

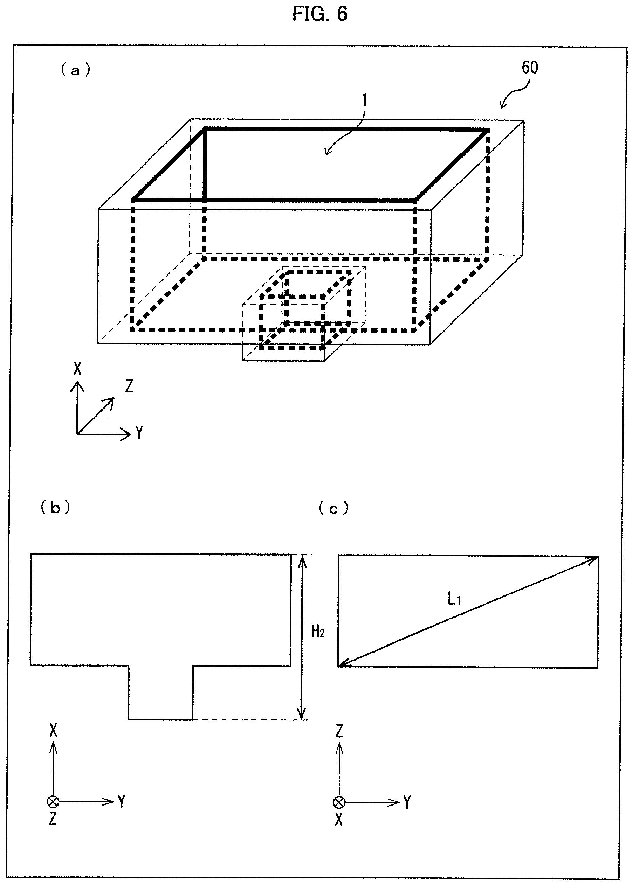

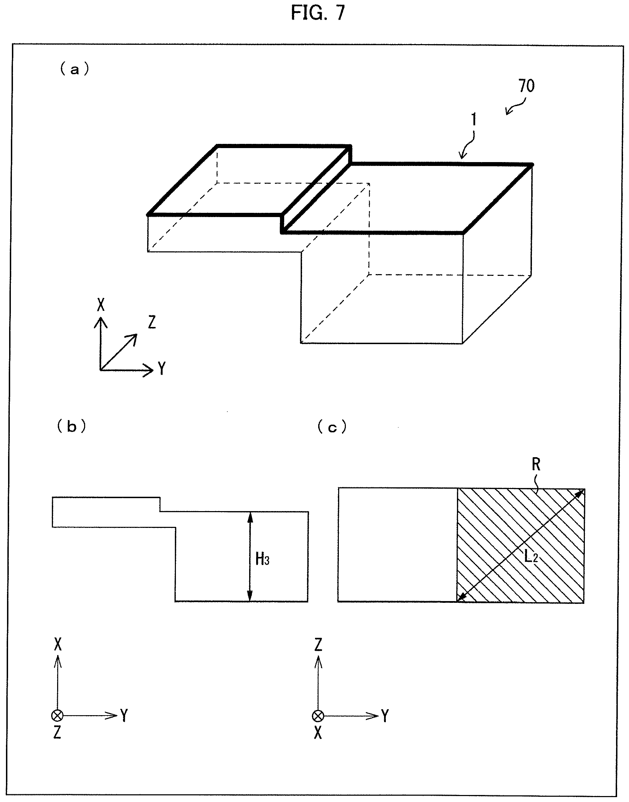

(a) of Fig. 6 is a perspective view of a polyolefin-based resin in-mold foamed molded product in accordance with an embodiment of the present invention seen from a certain direction. (b) of Fig. 6 is a projection obtained by shining light in Z direction in (a) of Fig. 6. (c) of Fig. 6 is a projection obtained by shining light in X direction in (a) of Fig. 6. (a) of Fig. 7 is a perspective view of a polyolefin-based resin in-mold foamed molded product in accordance with an embodiment of the present invention seen from a certain direction. (b) of Fig. 7 is a plan view of (a) of Fig. 7 seen along Z direction. (c) of Fig. 7 is a projection obtained by shining light in X direction in (a) of Fig. 7.

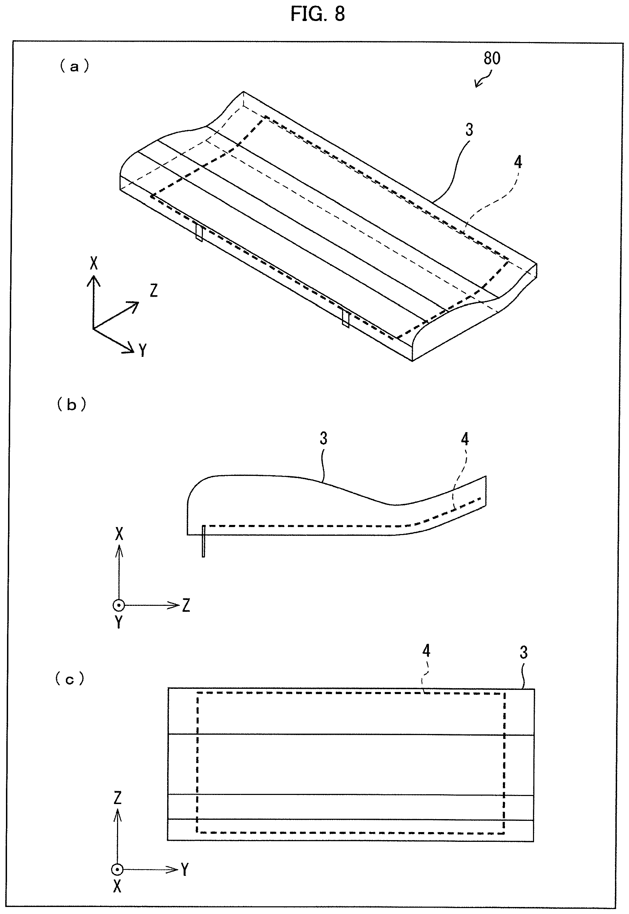

(a) of Fig. 8 is a perspective view of a polyolefin-based resin in-mold foamed molded product in accordance with an embodiment of the present invention seen from a certain direction. (b) of Fig. 8 is a plan view of (a) of Fig. 8 seen along Y direction. (c) of Fig. 8 is a plan view of (a) of Fig. 8 seen along X direction.

Description of Embodiments

The following description will discuss embodiments of the present invention. The present invention is not, however, limited to the embodiments below. The present invention is not limited to the configurations described below, but may be altered in various ways within the scope of the claims by a person skilled in the art. The present invention also encompasses, in its technical scope, any embodiment or example derived by combining technical means disclosed in respective differing embodiments and Examples. Further, it is possible to form a new technical feature by combining the technical means disclosed in the respective embodiments. All academic and patent documents cited in the present specification are incorporated herein by reference.

Any numerical range expressed as "A to B" in the present specification means "not less than A and not more than B (i.e., a range from A to B which includes both A and B)" unless otherwise stated.

Furthermore, in the present specification, a copolymer containing, as structural units, a structural unit derived from monomer $X_1$, a structural unit derived from monomer $X_2$, ... , and a structural unit derived from monomer $X_n$ (where $n$ is an integer of 2 or more) may be referred to as "$X_1$-$X_2$- ... -$X_n$ copolymer", unless otherwise stated. Such a $X_1$-$X_2$- ... -$X_n$ copolymer is not particularly limited as to the manner in which the structural units of the polymer are arranged, and may be a random copolymer, a block copolymer, or a graft copolymer.

[1. Technical idea of an embodiment of the present invention]

As a result of diligent research, the inventors found that the foregoing Document 1 has room for improvement or problems as described below.

In the case of the technique disclosed in Patent Literature 1, when the flexural rigidity is more than 8000 kg/cm$^2$, a molded product obtained by molding the resulting expanded particles tends to have low plasticity and low tensile elongation, develop chips and cracks in particles in the vicinity of a location of blade insertion, and become poor in appearance due to a depression at the location of blade insertion, during cutting. On the contrary, when the flexural rigidity is not more than 8000 kg/cm$^2$, a molded product obtained by molding the resulting expanded particles has low compressive strength, and therefore it becomes impossible to achieve a reduction in weight of the molded product.

Furthermore, in the automobile industry, automotive components are required to be more lightweight for improving fuel efficiency. Therefore, there is a demand for a foamed product that has high strength and that is lightweight.

An embodiment of the present invention has been accomplished in view of the above issue, and an object thereof is to obtain polyolefin-based resin expanded particles which enable a polyolefin-based resin in-mold foamed molded product that is less prone to cracking and chipping when recovered from a mold and that is excellent in strength.

The following can also be included in other embodiments of the present invention. In some cases, a polyolefin-based resin in-mold foamed molded product is required to have electric conductivity, punchability, and/or the like. There are conventionally known polyolefin-based resin expanded particles containing a fatty acid amide as an additive in order to improve electric conductivity and punchability and a conventionally known polyolefin-based resin in-mold foamed molded product obtained by subjecting the polyolefin-based resin expanded particles to in-mold foam molding.

For example, Japanese Patent Application Publication, *Tokukaihei,* No. 7-300536 discloses polypropylene-based resin expanded particles that contain (i) conductive carbon and (ii) a higher fatty acid amide and/or a metal salt of a higher fatty acid. The foregoing Patent Literature 1 discloses polypropylene-based resin expanded particles that contain a higher fatty acid amide and a metal salt of a higher fatty acid.

However, conventional techniques such as those disclosed in Japanese Patent Application Publication, *Tokukaihei,* No. 7-300536 and Patent Literature 1 are insufficient and have some room for improvement, in terms providing polyolefin-based resin expanded particles which enable a polyolefin-based resin in-mold foamed molded product excellent in colorability with no color unevenness.

The following description specifically discusses Japanese Patent Application Publication, *Tokukaihei,* No. 7-300536 and Patent Literature 1. Polyolefin-based resin expanded particles that contain a fatty acid amide, like the techniques disclosed in Japanese Patent Application Publication, *Tokukaihei,* No. 7-300536 and Patent Literature 1, have a smaller cell diameter than polyolefin-based resin expanded particles containing no fatty acid amides. The decrease in cell diameter of polyolefin-based resin expanded particles, brought about by the fatty acid amide, is notable especially in cases where polyolefin-based resin expanded particles were produced by a pressure-release expansion method.

As a result of diligent research, the inventors of the present invention have found on their own that, when a pressure-release expansion method is carried out, the cell diameter becomes notably small in cases where an inorganic blowing agent such as carbon dioxide gas is used as a blowing agent, as compared to cases where an organic blowing agent such as butane is used. It is considered that a reduction of a decrease in cell diameter brought about by an organic blowing agent is due to the plasticizing effect of the organic blowing agent.

There is a tendency that many of the polyolefin-based resin in-mold foamed molded products used in components of automotive interiors and the like are polyolefin-based resin in-mold foamed molded products colored with a coloring agent or the like. As a result of diligent research, the inventors of the present invention have found on their own that (i) in cases where a coloring agent is added, the cell diameter of polyolefin-based resin expanded particles becomes smaller and (ii) the decrease in cell diameter adversely affects the polyolefin-based resin expanded particles containing the coloring agent, in terms of color unevenness and colorability. Note that the color unevenness and colorability of polyolefin-based resin expanded particles can directly affect the color unevenness and colorability of a polyolefin-based resin in-mold foamed molded product obtained by subjecting the polyolefin-based resin expanded particles to in-mold foaming.

That is, another embodiment of the present invention was made in view of the above issue relating to color unevenness and colorability. A preferred object of another embodiment of the present invention is to achieve the following: providing novel polyolefin-based resin expanded particles which enable a polyolefin-based resin in-mold foamed molded product excellent in colorability with no color unevenness. Specifically, a preferred object of another embodiment of the present invention is to achieve the following: obtaining, via reducing (which can be expressed as lessening or preventing) a decrease in cell diameter, polyolefin-based resin expanded particles which enable a polyolefin-based resin in-mold foamed molded product excellent in colorability with no color unevenness.

As a result of diligent research in view of the above issue relating to color unevenness and colorability, the inventors have novelly found that polyolefin-based resin expanded particles that are capable of attaining the above object can be obtained when a polyolefin-based resin (a), a higher fatty acid amide (b), an ethylene-based copolymer (c), and a coloring agent (g) are contained.

Specifically, polyolefin-based resin expanded particles in accordance with another embodiment of the present invention contain: 100 parts by weight of a polyolefin-based resin (a); not less than 0.1 parts by weight and less than 2.5 parts by weight of a higher fatty acid amide (b); not less than 0.01 parts by weight and not more than 5.00 parts by weight of an ethylene-based copolymer (c); and not less than 0.01 parts by weight and not more than 10.00 parts by weight of a coloring agent (g), in which the ethylene-based copolymer (c) is a copolymer obtained by polymerizing a composition that contains: ethylene (c1); and at least two types of vinyl monomers (c2) selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

A method of producing polyolefin-based resin expanded particles in accordance with another embodiment of the present invention includes the steps of: obtaining a dispersion slurry, which includes (i) an aqueous dispersion medium and (ii) polyolefin-based resin particles and an inorganic blowing agent which are dispersed in the aqueous dispersion medium, by mixing the polyolefin-based resin particles, the aqueous dispersion medium, and the inorganic blowing agent in a pressure-resistant vessel; and obtaining polyolefin-based resin expanded particles by raising a temperature and a pressure inside the pressure-resistant vessel and then expelling the dispersion slurry from the pressure-resistant vessel into an area having a pressure lower than the raised pressure inside the pressure-resistant vessel, so that the polyolefin-based resin particles are expanded, in which the polyolefin-based resin particles contain: 100 parts by weight of a polyolefin-based resin (a); not less than 0.1 parts by weight and less than 2.5 parts by weight of a higher fatty acid amide (b); not less than 0.01 parts by weight and not more than 5.00 parts by weight of an ethylene-based copolymer (c); and not less than 0.01 parts by weight and not more than 10.00 parts by weight of a coloring agent (g), and in which the ethylene-based copolymer (c) is a copolymer obtained by polymerizing a composition that contains: ethylene (c1); and at least two types of vinyl monomers (c2) selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

For polyolefin-based resin expanded particles and a method of producing polyolefin-based resin expanded particles in accordance with another embodiment of the present invention, there is no particular limitation on the flexural rigidity of the polyolefin-based resin (a). For polyolefin-based resin expanded particles and a method of producing polyolefin-based resin expanded particles in accordance with another embodiment of the present invention, the polyolefin-based resin (a) which has a flexural rigidity of not more than 8000 kg/cm$^2$, in terms of flexural rigidity measured in accordance with JIS K7106, can also be used.

Another embodiment of the present invention makes it possible to provide polyolefin-based resin expanded particles which enable a polyolefin-based resin in-mold foamed molded product excellent in colorability with no color unevenness.

The following can also be included in other embodiments of the present invention. A molded product can be produced by a molding method by which polyolefin-based expanded particles are filled into a mold and foamed and molded, i.e., so-called in-mold foam molding. In this molding method, a mold composed of a movable mold that can be driven and a stationary mold that cannot be driven is used. An ejecting apparatus for ejecting the obtained molded product from the mold is typically provided to the stationary mold. Therefore, for the purpose of making use of the ejecting apparatus, when the movable mold is opened and the molded product is to be ejected from the mold, the molded product needs to be ejected from the movable mold and remain in the stationary mold. However, the molded product sometimes sticks to the movable mold when the molded product is to be ejected. In such a case, the ejecting apparatus provided to the stationary mold cannot be made use of, and the molded product cannot be ejected from the mold properly.

A commonly used method to address this is a method in which, when the molded product is to be ejected, an air pressure is applied to a movable chamber and air is emitted from the movable mold, thereby keeping the molded product in the stationary mold. However, this method may result in cracking in the movable mold after repeated ejection of the molded product. To address this, various kinds of development have been done in order to keep the molded product in the stationary mold when the molded product is to be ejected.

For example, Japanese Patent Application Publication, *Tokukaihei,* No. 11-322995 discloses a mold that includes a stationary mold and a movable mold, in which a plate member is disposed on one of the stationary and movable molds and an undercut pin is attached to the plate member such that the head of the undercut pin is disposed in the molding cavity.

Japanese Registered Utility Model No. 3181302 discloses a molding apparatus including a temporarily holding means that holds a foamed molded product, molded by closing a pair of molds, on one of the pair of molds. Japanese Registered Utility Model No. 3181302 discloses that the temporarily holding means is in the shape of an undercut.

However, conventional techniques such as those disclosed in Japanese Patent Application Publication, *Tokukaihei,* No. 11-322995 and Japanese Registered Utility Model No. 3181302 impair the appearance of a molded product, and have some room for an improvement in terms of the quality of a molded product.

Specifically, according to Japanese Patent Application Publication, *Tokukaihei,* No. 11-322995, the molded product can be held on the mold by the undercut pin. According to Japanese Registered Utility Model No 3181302, the molded product can be held on the mold by the temporarily holding means in the shape of an undercut. Therefore, the resulting molded product will have an undesired indentation attributed to the undercut pin or the temporarily holding means, and the appearance will be impaired.

As has been described, the conventional techniques employ a method by which mainly a mold is improved, in order to allow the molded product to remain in one of the molds (e.g., stationary mold) when the molded product is to be ejected. The inventors have noticed an issue that the improvement in the mold, such as installation of an undercut pin, results in poor appearance of the resulting mold. An object of a further embodiment of the present invention is to obtain a polyolefin-based resin in-mold foamed molded product that achieves excellent mold release properties without impairing the appearance thereof, i.e., without compromising the quality of the molded product. On the basis of the object, the inventors have made a novel finding that can attain the object, as a result of diligent research based on the following technical idea that could not have been easily arrived at from conventional techniques: an idea of improving polyolefin-based resin expanded particles which are a material for a polyolefin-based resin in-mold foamed molded product, instead of improving a mold.

A further embodiment of the present invention was made in view of the above issue concerning the quality of a molded product. A preferred object of a further embodiment of the present invention is to achieve the following: providing novel polyolefin-based resin expanded particles which enable a polyolefin-based resin in-mold foamed molded product with excellent quality and excellent mold release properties.

The inventors have conducted diligent research in view of the above issue concerning the quality of a molded product. As a result, the inventors have novelly found that polyolefin-based resin expanded particles that can attain the above object can be obtained when a polyolefin-based resin (a), a higher fatty acid amide (b), and an ethylene-based copolymer (c) are contained.

Specifically, polyolefin-based resin expanded particles in accordance with a further embodiment of the present invention contain: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), in which the ethylene-based copolymer (c) contains, as structural units: a structural unit (c1) derived from ethylene; and at least two types of structural units (c2) respectively derived from at least two types of vinyl monomers selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

For polyolefin-based resin expanded particles in accordance with a further embodiment of the present invention, there is no particular limitation on the flexural rigidity of the polyolefin-based resin (a). For polyolefin-based resin expanded particles and a method of producing polyolefin-based resin expanded particles in accordance with a further embodiment of the present invention, the polyolefin-based resin (a) which has a flexural rigidity of not more than 8000 kg/cm$^2$, in terms of flexural rigidity measured in accordance with JIS K7106, can also be used.

A further embodiment of the present invention makes it possible to provide polyolefin-based resin expanded particles which enable a polyolefin-based resin in-mold foamed molded product with excellent quality and excellent mold release properties.

[2. Polyolefin-based resin expanded particles]

Polyolefin-based resin expanded particles in accordance with an embodiment of the present invention contain: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), in which the polyolefin-based resin (a) has a flexural rigidity, measured in accordance with JIS K7106, of more than 8000 $kg/cm^2$ and not more than 13500 $kg/cm^2$, and in which the ethylene-based copolymer (c) contains, as structural units: a structural unit (c1) derived from ethylene; and at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene. Note that, in the present specification, the term "meth(acrylic)" refers to acrylic and/or methacrylic.

Since the polyolefin-based resin expanded particles in accordance with an embodiment of the present invention include the above features, although the polyolefin-based resin (a) having a flexural rigidity (measured in accordance with JIS K7106) of more than 8000 $kg/cm^2$ and not more than 13500 $kg/cm^2$ is contained, the resulting polyolefin-based resin expanded particles enable a polyolefin-based resin in-mold foamed molded product that is less prone to cracking and chipping when recovered from a mold. In the present specification, the phrase "a molded product is less prone to cracking and chipping when recovered from a mold" can also be described as "a mold product has excellent crack resistance". That is, the polyolefin-based resin expanded particles in accordance with an embodiment of the present invention enable a polyolefin-based resin in-mold foamed molded product with excellent crack resistance. The polyolefin-based resin expanded particles in accordance with an embodiment of the present invention also enable a polyolefin-based resin in-mold foamed molded product with excellent strength and excellent punchability.

Since the polyolefin-based resin expanded particles in accordance with an embodiment of the present invention have the foregoing features, a decrease in cell diameter is reduced although the higher fatty acid amide is contained; therefore, the polyolefin-based resin expanded particles also have a desired cell diameter (e.g., average cell diameter is more than 120 $\mu$m and not more than 350 $\mu$m). As a result, the resulting polyolefin-based resin expanded particles, when further containing a coloring agent, enable a polyolefin-based resin in-mold foamed molded product excellent in colorability with no color unevenness.

Since the polyolefin-based resin expanded particles in accordance with an embodiment of the present invention have the foregoing features, the polyolefin-based resin expanded particles are also advantageous in that they enable a polyolefin-based resin in-mold foamed molded product with excellent quality and excellent mold release properties. Furthermore, with use of the polyolefin-based resin expanded particles in accordance with an embodiment of the present invention, it is also possible to provide a polyolefin-based resin in-mold foamed molded product with excellent quality and good mold release properties even (a) in cases where air pressure for mold ejection is lower than conventional techniques or (b) in cases where the molded product has a complex shape that may be difficult to eject from a mold.

Note that the term "air pressure for mold ejection" has the following meaning. During in-mold foam molding using a mold, a gas is supplied to a chamber (also called "steam chamber") of a mold (e.g., movable mold) when ejecting a molded product from the mold (movable mold). The pressure of the gas, inside the chamber, is the "air pressure for mold ejection". The mold includes, for example, a frame, a back plate, a central plate, and an inner mold that can define the shape of a molded product. The gas supplied into the chamber of the mold when ejecting the molded product is supplied to a molding cavity through, for example, a steam vent (also called "core vent") in the inner mold. The molded product is pressed by the supplied gas, and thereby ejected from the mold. It is noted here that the central plate typically does not have the steam vent. Therefore, in a case where the air pressure for mold ejection is high, stress concentration may occur at the central plate of the mold when the molded product is ejected from the mold, and the central plate may crack. In a case where the polyolefin-based resin expanded particles in accordance with an embodiment of the present invention are used in in-mold foam molding, a low air pressure for mold ejection will suffice, as stated earlier. Therefore, the polyolefin-based resin expanded particles are advantageous also in that cracking in the central plate of the mold can be prevented or reduced.

[2-1. Polyolefin-Based Resin (a)]

The polyolefin-based resin (a) (hereinafter also referred to as a "polyolefin-based resin" or simply "component (a)") used in an embodiment of the present invention is not limited to a particular resin, provided that it is a polymer compound synthesized with use of an olefin as a monomer. Possible examples of the polyolefin-based resin (a) include polyethylene-based resin and polypropylene-based resin. Each of these examples may be used alone, or in combinations of two or more.

Note that in the present specification, the following (i) and (ii) apply, unless stated otherwise: (i) "polyolefin-based resin expanded particles in accordance with an embodiment of the present invention" may be referred to simply as "present expanded particles"; and (ii) a "polyolefin-based resin in-mold foamed molded product obtained by carrying out in-mold foam molding of polyolefin-based resin expanded particles in accordance with an embodiment of the present invention" may be referred to simply as a "present in-mold foamed molded product". Furthermore, the word "polyolefin" as used in terms such as "polyolefin-based resin expanded particles" and "polyolefin-based resin in-mold foamed molded product" is dependent on the polyolefin-based resin which is used. For example, in a case where polyethylene is used as the polyolefin-based resin, expanded particles produced from the resin can also be described as polyethylene-based resin expanded particles, and a molded product produced from the particles can also be described as a polyethylene-based resin in-mold foamed molded product.

The polyolefin-based resin (a) for use in an embodiment of the present invention has a flexural rigidity, measured in accordance with JIS K7106, of more than 8000 kg/cm$^2$ and not more than 13500 kg/cm$^2$. The lower limit of the flexural rigidity is preferably not less than 8500 kg/cm$^2$, more preferably not less than 9000 kg/cm$^2$, even more preferably not less than 9500 kg/cm$^2$. The upper limit of the flexural rigidity is preferably not more than 13000 kg/cm$^2$, more preferably not more than 12000 kg/cm$^2$, even more preferably not more than 11000 kg/cm$^2$, particularly preferably not more than 10000 kg/cm$^2$. It is not preferable that the flexural rigidity of the polyolefin-based resin (a) be 8000 kg/cm$^2$ or less. This is because, in a case where the flexural rigidity of the polyolefin-based resin (a) is 8000 kg/cm$^2$ or less, a molded product obtained by molding the resulting expanded particles will have low compressive strength and, as a result, a reduction in weight of the molded product cannot be achieved. It is not preferable that the flexural rigidity of the polyolefin-based resin (a) be more than 13500 kg/cm$^2$. This is because, in a case where the flexural rigidity of the polyolefin-based resin (a) be more than 13500 kg/cm$^2$, polyolefin-based resin particles have reduced expandability; therefore, the resulting expanded particles will have reduced expansion ratio and a reduction in weight of the resulting molded product is difficult to achieve. In an embodiment of the present invention, the flexural rigidity of the polyolefin-based resin (a) is more than 8000 kg/cm$^2$; therefore, the resulting polyolefin-based resin expanded particles enable a molded product with excellent strength. Furthermore, in an embodiment of the present invention, in a case where the polyolefin-based resin expanded particles have high expansion ratio, the polyolefin-based resin expanded particles enable a foamed product that has high strength and that is lightweight.

The polyolefin-based resin (a) preferably contains a polyethylene-based resin and/or a polypropylene-based resin.

The following description discusses an example case in which the polyolefin-based resin (a) contains a polyethylene-based resin.

Examples of a polyethylene-based resin for use in an embodiment of the present invention include high-density polyethylene, medium-density polyethylene, low-density polyethylene, linear low-density polyethylene, and styrene-modified polyethylene-based resin. Each of these examples may be used alone, or in combinations of two or more.

A polyethylene-based resin for use in an embodiment of the present invention may contain a structural unit derived from a comonomer which is copolymerizable with ethylene and which is not ethylene. A comonomer copolymerizable with ethylene can be a C4 to C18 α-olefin. Examples of a comonomer copolymerizable with ethylene include 1-butene, 1-pentene, 1-hexene, 3,3-dimethyl-1-butene, 4-methyl-1-pentene, 4,4-dimethyl-1-pentene, and 1-octene. A component copolymerizable with ethylene can be an oligomer (polyethylene-based resin oligomer) that has a relatively low viscosity average molecular weight, and can be, for example, an ethylene-1-butene copolymer or the like. Each of these copolymers and oligomers may be used alone, or in combinations of two or more. The amount of comonomer(s) and/or oligomer(s) copolymerized in the polyethylene-based resin is preferably about not less than 1 weight% and not more than 12 weight%. With this configuration, it is possible to easily obtain polyethylene resins having various densities, such as a high-density polyethylene, a medium-density polyethylene, and a low-density polyethylene.

It can also be said that, in order for the density of a copolymer to fall within the above-described range, the amount of structural unit derived from comonomer(s) and/or oligomer(s) copolymerizable with ethylene, with respect to 100 weight% of the polyethylene-based resin, is preferably not less than about 1 weight% and not more than about 12 weight%.

The melting point of the polyethylene-based resin used in an embodiment of the present invention is not particularly limited, but is, for example, preferably not lower than 110°C and not higher than 135°C, and more preferably not lower than 115°C and not higher than 130°C. In a case where the melting point of the polyethylene-based resin is not lower than 110°C, the present molded product has excellent heat resistance. In a case where the melting point of the polyethylene-based resin is not higher than 135°C, it is easy to increase the expansion ratio of the expanded particles during production of the present expanded particles.

Note here that the melting point of a polyethylene-based resin refers to that measured via differential scanning calorimetry (hereinafter, "DSC"). A specific procedure is as follows: (1) 5 mg to 6 mg of polyethylene-based resin having a temperature of 40°C is heated to 220°C at a temperature increase rate of 10°C/minute, so that the resin is melted; (2) thereafter, the resin having a temperature of 220°C is cooled to 40°C at a temperature decrease rate of 10°C/minute, so that the resin crystalizes; (3) thereafter, the resin having a temperature of 40°C is heated to 220°C at a temperature increase rate of 10°C/minute. The melting point can be determined as being the temperature of the DSC curve peak (melting peak) obtained during the second temperature raise (i.e., the curve obtained during step (3)).

A melt index (hereinafter, "MI") of the polyethylene-based resin used in an embodiment of the present invention is not particularly limited, but is preferably not less than 0.1 g/10 minutes and not more than 10 g/10 minutes, more preferably not less than 0.3 g/10 minutes and not more than 8 g/10 minutes, and even more preferably not less than 0.5 g/10 minutes and not more than 5 g/10 minutes.

In a case where the MI of the polyethylene-based resin is less than 0.1 g/10 minutes, there tends to be difficulty in increasing the expansion ratio of expanded particles during production of the present expanded particles, and there tends to be a deterioration in a surface property of the present molded product. In a case where the MI of the polyethylene-based resin exceeds 10 g/10 minutes, resultant expanded particles will have cells in communication with each other. As a result, there tends to be (i) a decrease in the compressive strength of the present molded product and/or (ii) a deterioration of a surface property of the present foamed molded product.

Note here that the value of MI is measured with use of an MI measurement apparatus as specified in JIS K7210:1999, under the following conditions: orifice diameter of ø2.0959 mm ±0.005 mm; orifice length of 8.000 mm ±0.025 mm; load of 2160 g; and temperature of 190°C ±0.2°C.

The following description discusses an example case in which the polyolefin-based resin (a) contains a polypropylene-based resin.

A polypropylene-based resin used in an embodiment of the present invention is not particularly limited. Possible examples of the polypropylene-based resin include polypropylene homopolymers, ethylene-propylene random copolymers, 1-butene-propylene random copolymers, ethylene-1-butene-propylene random copolymers, ethylene-propylene block copolymers, 1-butene-propylene block copolymers, propylene-chlorinated vinyl copolymers, propylene-maleic anhydride copolymers, and styrene-modified polypropylene-based resins. Among these, ethylene-propylene random copolymers and ethylene-1-butene-propylene random copolymers are suitable in that they provide favorable expandability to expanded particles obtained therefrom, and favorable moldability to the present molded product. Note that "1-butene" above is synonymous with "butene-1".

The following description discusses a case in which a copolymer, such as an ethylene-propylene random copolymer or an ethylene-1-butene-propylene random copolymer, contains, as structural units, a structural unit derived from an ethylene monomer (such a structural unit is also referred to as "ethylene unit") and a structural unit derived from a propylene monomer (such a structural unit is also referred to as "propylene unit"). In such a case, in the present specification, a copolymer that contains more ethylene unit than propylene unit is referred to as "polyethylene-based resin", whereas a copolymer that contains more propylene unit than ethylene unit is referred to as a "polypropylene-based resin".

The following description discusses a case (hereinafter "Case A") where, in an embodiment of the present invention, used as the polyolefin-based resin (a) is an ethylene-propylene random copolymer or an ethylene-1-butene-propylene random copolymer, each of which is a polypropylene-based resin. In Case A, the amount of ethylene contained (i.e., ethylene content) in the ethylene-propylene random copolymer or the ethylene-1-butene-propylene random copolymer is preferably not less than 0.2 weight% and not more than 10 weight%, with respect to the 100 weight% of the copolymer. The ethylene content can also be described as the amount of structural unit derived from ethylene.

In Case A, the amount of 1-butene contained (i.e., 1-butene content) in the ethylene-1-butene-propylene random copolymer is preferably not less than 0.2 weight% and not more than 10 weight%, with respect to 100 weight% of the copolymer. The 1-butene content can also be described as the amount of structural unit derived from 1-butene. In Case A, the combined amount of ethylene and 1-butene contained in the ethylene-propylene random copolymer or the ethylene-1-butene-propylene random copolymer is preferably not less than 0.5 weight% and not more than 10 weight%, with respect to 100 weight% of the copolymer. In Case A, in a case where the amount of ethylene or 1-butene contained in the ethylene-propylene random copolymer or the ethylene-1-butene-propylene random copolymer is less than 0.2 weight%, there tends to be (i) a deterioration in the expandability of expanded particles during production of the present expanded particles and/or (ii) a deterioration in the moldability of resulting expanded particles. In Case A, in a case where the amount of ethylene or 1-butene contained in the ethylene-propylene random copolymer or the ethylene-1-butene-propylene random copolymer exceeds 10.0 weight%, there tends to be a deterioration in the mechanical properties of the present molded product.

A polymerization catalyst to be used in synthesizing a polypropylene-based resin for use in an embodiment of the present invention is not limited to a particular kind. Possible examples of the polymerization catalyst include a Ziegler catalyst and a metallocene catalyst.

The melting point of a polypropylene-based resin used in an embodiment of the present invention is not particularly limited, but is, for example, preferably not lower than 125°C and not higher than 160°C, more preferably not lower than 130°C and not higher than 160°C, more preferably not lower than 135°C and not higher than 160°C, more preferably not lower than 140°C and not higher than 160°C, even more preferably not lower than 144°C and not higher than 160°C, particularly preferably not lower than 145°C and not higher than 160°C. The melting point of the polypropylene-based resin may be not lower than 130°C and not higher than 155°C, not lower than 135°C and not higher than 155°C, not lower than 140°C and not higher than 155°C, not lower than 144°C and not higher than 155°C, or not lower than 145°C and not higher than 155°C. In a case where the melting point of the polypropylene-based resin is not lower than 125°C, the present molded product has excellent heat resistance. In a case where the melting point of the polypropylene-based resin is not higher than 160°C, it is easy to increase the expansion ratio of the expanded particles during production of the present expanded particles.

Note here that the melting point of a polypropylene-based resin refers to that measured via DSC. A specific procedure is as follows: (1) 5 mg to 6 mg of polypropylene-based resin having a temperature of 40°C is heated to 220°C at a temperature increase rate of 10°C/minute, so that the resin is melted; (2) thereafter, the resin having a temperature of 220°C is cooled to 40°C at a temperature decrease rate of 10°C/minute, so that the resin crystalizes; (3) thereafter, the resin having a temperature of 40°C is heated to 220°C at a temperature increase rate of 10°C/minute. The melting point can be determined as being the temperature of the DSC curve peak (melting peak) obtained during the second temperature raise (i.e., the curve obtained during step (3)).

A crystal melting heat quantity of a polypropylene-based resin used in an embodiment of the present invention is not particularly limited, but is preferably not less than 50 J/g and not more than 110 J/g, and more preferably not less than 75 J/g and not more than 100 J/g. In a case where the crystal melting heat quantity of the polypropylene-based resin is less than 50 J/g, it becomes difficult for resultant expanded particles to maintain their shape in in-mold foam molding. In a case where the crystal melting heat quantity of the polypropylene-based resin exceeds 110 J/g, it becomes difficult to increase the expansion ratio of the expanded particles during production of the present expanded particles.

Note here that the crystal melting heat quantity of the polypropylene-based resin refers to that measured by a DSC measurement method identical to the one used for measuring the melting point. Specifically, after the above-described steps (1) to (3) are carried out, the crystal melting heat quantity can be determined with use of the peak (melting peak) of a DSC curve obtained during the second temperature raise (i.e., the curve obtained during step (3)), via the following method. Specifically, the crystal melting heat quantity can be determined as being the quantity of heat corresponding to the area enclosed by a baseline and the DSC curve, where the baseline extends from the point of start of melting to the point of end of melting on the DSC curve.

An MI of a polypropylene-based resin used in an embodiment of the present invention is not particularly limited, but is preferably not less than 3 g/10 minutes and not more than 30 g/10 minutes, more preferably not less than 4 g/10 minutes and not more than 20 g/10 minutes, and even more preferably not less than 5 g/10 minutes and not more than 18 g/10 minutes.

In a case where the MI of the polypropylene-based resin is less than 3 g/10 minutes, there tends to be difficulty in increasing the expansion ratio of expanded particles during production of the present expanded particles. In a case where the MI of the polypropylene-based resin exceeds 30 g/10 minutes, expanded particles obtained from the polypropylene-based resin will have cells in communication with each other. As a result, there tends to be (i) a decrease in the compressive strength of the present molded product and/or (ii) a deterioration of a surface property of the present molded product.

The following description discusses a case where the MI of the polypropylene-based resin falls in a range of not less than 3 g/10 minutes and not more than 30 g/10 minutes. In such a case, it is easy to obtain polypropylene-based resin expanded particles having a comparatively large expansion ratio. Furthermore, in such a case, there are the advantages that the present molded product will have an excellent surface appearance and a small rate of dimensional shrinkage.

Note here that the value of MI is measured with use of an MI measurement apparatus as specified in JIS K7210:1999, under the following conditions: orifice diameter of ø2.0959 mm ±0.005 mm; orifice length of 8.000 mm ±0.025 mm; load of 2160 g; and temperature of 230 ±0.2°C.

As stated earlier, the polypropylene-based resin and the polyethylene-based resin may be used in combination as the polyolefin-based resin (a). For example, the polypropylene-based resin and the polyethylene-based resin oligomer can be used in combination in order to, for example, lower steam pressure (molding pressure) in in-mold foam molding for obtaining a polypropylene-based resin in-mold foamed molded product.

Note that a decrease in average cell diameter is likely to occur when a polypropylene-based resin is used as the polyolefin-based resin (a). However, it was for the first time found that, surprisingly, with an embodiment of the present invention, the decrease in average cell diameter can be prevented even in a case where a polypropylene-based resin is used. From this point of view, the effect of an embodiment of the present invention becomes notable when the polyolefin-based resin (a) is composed mainly of a polypropylene-based resin. It is therefore preferable that the polyolefin-based resin (a) be composed mainly (e.g., 50% or more) of a polypropylene-based resin.

The polyolefin-based resin (a) contains a polypropylene-based resin in an amount of preferably not less than 50 weight%, more preferably not less than 60 weight%, more preferably not less than 70 weight%, even more preferably not less than 80 weight%, particularly preferably not less than 90 weight%, with respect to 100 weight% of the polyolefin-based resin (a). The polyolefin-based resin (a) contains propylene unit in an amount of preferably not less than 50%, more preferably not less than 60%, more preferably not less than 70%, even more preferably not less than 80%, particularly preferably not less than 90%, with respect to all structural units contained in the polyolefin-based resin (a). An embodiment of the present invention makes it possible to provide polyolefin-based resin expanded particles in which a decrease in average cell diameter is reduced despite the foregoing features.

The melting point of the polyolefin-based resin (a) is not particularly limited. The melting point of the polyolefin-based resin (a) is, for example, preferably not lower than 125°C and not higher than 160°C, more preferably not lower than 130°C and not higher than 160°C, more preferably not lower than 135°C and not higher than 160°C, more preferably not lower than 140°C and not higher than 160°C, even more preferably not lower than 144°C and not higher than 160°C, even more preferably not lower than 145°C and not higher than 160°C, particularly preferably not lower than 145°C and not higher than 155°C. In a case where the melting point of the polyolefin-based resin (a) is not lower than 125°C, the present molded product has excellent heat resistance. In a case where the melting point of the polyolefin-based resin (a) is not higher than 160°C, it is easy to increase the expansion ratio of the expanded particles during the production of the present expanded particles.

When polyolefin-based resin particles are produced from the polyolefin-based resin (a), the polyolefin-based resin particles are different in structure from the polyolefin-based resin (a) but are the same in composition as the polyolefin-based resin (a). When polyolefin-based resin expanded particles are produced from polyolefin-based resin particles, the polyolefin-based resin expanded particles are different in structure from the polyolefin-based resin particles but are the same in composition as the polyolefin-based resin particles. When a polyolefin-based resin in-mold foamed molded product is produced from polyolefin-based resin expanded particles, the polyolefin-based resin in-mold foamed molded product is different in structure from the polyolefin-based resin expanded particles but is the same in composition as the polyolefin-based resin expanded particles. Therefore, physical properties obtained by analyzing polyolefin-based resin particles can be regarded as physical properties of the polyolefin-based resin (a) which is a raw material for the polyolefin-based resin particles. Physical properties obtained by analyzing polyolefin-based resin expanded particles or a polyolefin-based resin in-mold foamed molded product can be regarded as physical properties of the polyolefin-based resin particles which are a raw material for the polyolefin-based resin expanded particles or the polyolefin-based resin in-mold foamed molded product or as physical properties of the polyolefin-based resin (a) which is a raw material for the polyolefin-based resin particles. These physical properties are, for example, (i) the amounts of comonomer(s) and/or oligomer(s) copolymerized, and the amounts of structural units derived from comonomer(s) and/or oligomer(s) contained, (ii) comonomer content such as ethylene content and 1-butene content; (iii) melting point, (iv) crystal melting heat quantity, (v) MI, and the like.

In the present specification, the melting point and the crystal melting heat quantity of the polyolefin-based resin (a), polyolefin-based resin particles, polyolefin-based resin expanded particles or a polyolefin-based resin in-mold foamed molded product are the melting point and the crystal melting heat quantity measured by the same methods (DSC) as the foregoing methods of measuring the melting point and the crystal melting heat quantity of a polypropylene-based resin, except that the polyolefin-based resin (a), the polyolefin-based resin particles, the polyolefin-based resin expanded particles or the polyolefin-based resin in-mold foamed molded product is/are used instead of the polypropylene-based resin.

The MI of polyolefin-based resin expanded particles can be measured by a method involving the following steps: (A1) gently placing the polyolefin-based resin expanded particles in an oven (whose pressure can be reduced) such that the polyolefin-based resin expanded particles do not contact with each other; and thereafter (A2) treating the polyolefin-based resin expanded particles under a pressure of -0.05 MPa·G to -0.10 MPa·G at a temperature 20°C to 35°C higher than the melting point of the polyolefin-based resin expanded particles for 30 minutes, thereby allowing the polyolefin-based resin expanded particles to turn back into a polyolefin-based resin (a) while degassing the polyolefin-based resin expanded particles; and thereafter (A3) bringing the polyolefin-based resin (a) out of the oven and allowing the polyolefin-based resin (a) to sufficiently cool; and thereafter (A4) measuring the MI of the polyolefin-based resin (a) by the same method as that for a polyethylene-based resin or a polypropylene-based resin. Note that the temperature conditions under which the MI measurement is carried out may be set appropriately according to the type of resin contained in the polyolefin-based resin (a).

The MI of a polyolefin-based resin in-mold foamed molded product can be measured by a method involving the following steps: (B1) pulverizing the polyolefin-based resin in-mold foamed molded product with use of a mixer or the like; and thereafter (B2) carrying out the same steps as the foregoing steps for polyolefin-based resin expanded particles (steps (A1) and (A2)), except that the pulverized polyolefin-based resin in-mold foamed molded product is used instead of the polyolefin-based resin expanded particles, thereby allowing the polyolefin-based resin in-mold foamed molded product to turn back into a polyolefin-based resin (a); and thereafter (B3) bringing the polyolefin-based resin (a) out of the oven and allowing the polyolefin-based resin (a) to sufficiently cool; and thereafter (B4) measuring the MI of the polyolefin-based resin (a) by the same method as that for a polyethylene-based resin or a polypropylene-based resin .

The flexural rigidity of polyolefin-based resin particles produced from the polyolefin-based resin (a) is not significantly different from the flexural rigidity of the polyolefin-based resin (a). Furthermore, the flexural rigidity obtained by analyzing polyolefin-based resin expanded particles or a polyolefin-based resin in-mold foamed molded product can be regarded as the flexural rigidity of polyolefin-based resin particles which are a raw material for the polyolefin-based resin expanded particles or of the polyolefin-based resin in-mold foamed molded product. Therefore, in a case where the flexural rigidity of polyolefin-based resin particles, polyolefin-based resin expanded particles, or a polyolefin-based resin in-mold foamed molded product is more than $8000 \text{ kg/cm}^2$ and not more than $13500 \text{ kg/cm}^2$, it can be said that it is highly likely that the flexural rigidity of the polyolefin-based resin (a), which is a raw material for the polyolefin-based resin particles, is more than $8000 \text{ kg/cm}^2$ and not more than $13500 \text{ kg/cm}^2$.

The flexural rigidity of polyolefin-based resin particles refers to that measured by the same method as the method of measuring the flexural rigidity of the polyolefin-based resin (a), i.e., in accordance with JIS K7106, except that polyolefin-based resin particles are used instead of the polyolefin-based resin (a). The flexural rigidity of polyolefin-based resin expanded particles refers to that measured by, after the polyolefin-based resin expanded particles turn back into the polyolefin-based resin (a), the same method as the method of measuring the flexural rigidity of polyolefin-based resin particles. The polyolefin-based resin expanded particles can be allowed to turn back into the polyolefin-based resin (a) by, for example, the steps (A1) to (A3) described earlier with regard to the method of measuring the MI of polyolefin-based resin expanded particles. Furthermore, the flexural rigidity of a polyolefin-based resin in-mold foamed molded product refers to that measured by, after the polyolefin-based resin in-mold foamed molded product turns back into the polyolefin-based resin (a), the same method as the method of measuring the flexural rigidity of polyolefin-based resin particles. The polyolefin-based resin in-mold foamed molded product can be allowed to turn back into the polyolefin-based resin (a) by, for example, the steps (B1) to (B3) described earlier with regard to the method of measuring the MI of a polyolefin-based resin in-mold foamed molded product.

The following description discusses a case where polyolefin-based resins of known types are contained in the polyolefin-based resin (a). In such a case, an analysis of polyolefin-based resin particles makes it possible to find the mixing ratio between these two or more types of polyolefin-based resins in the polyolefin-based resin (a), which is a raw material for the polyolefin-based resin particles. Furthermore, in such a case, an analysis of polyolefin-based resin expanded particles or a polyolefin-based resin in-mold foamed molded product makes it possible to find the mixing ratio between these two or more types of polyolefin-based resins in the polyolefin-based resin (a), which is a raw material for the polyolefin-based resin particles which are a raw material for the polyolefin-based resin expanded particles or for the polyolefin-based resin in-mold foamed molded product.

The foregoing "mixing ratio between two or more types of polyolefin-based resins" is, for example, the mixing ratio between a polypropylene-based resin and a polyethylene-based resin oligomer such as an ethylene-1-butene copolymer, or the like.

[2-2. Higher fatty acid amide (b)]

A "higher fatty acid amide (b)" may be simply referred to as "component (b)". The present expanded particles contain the component (b), and therefore have the following advantageous effect (hereinafter may be referred to as "desirable effect brought about by the component (b)"): it is possible to provide a molded product that is excellent in crack resistance and punchability.

Since the present expanded particles contain the component (b), the present expanded particles also have the following advantage: it is possible to provide an in-mold foamed molded product which is excellent in punchability. Furthermore, in a case where the present expanded particles contain the component (b) and electrically conductive carbon black, the expanded particles also have the following advantage: the expanded particles enable an in-mold foamed molded product that is excellent in electric conductivity. Furthermore, since the present expanded particles contain the component (b), the present expanded particles have the following advantage: it is possible to provide a molded product excellent in quality and mold release properties.

The higher fatty acid amide (b) is preferably a substance formed with use of a C10 to C25 higher fatty acid as a base material. Possible examples of such a higher fatty acid amide (b) include saturated fatty acid amides, unsaturated fatty acid amides, and bis fatty acid amides. A component (b) formed with use of a higher fatty acid of not less than C10 as a base material has, when the present expanded particles contain a component (e) (described later), good compatibility with the component (e). This provides an advantage that, for example, the desirable effect brought about by the component (b) is sufficiently achieved. A higher fatty acid of not greater than C25 is readily accessible, and therefore a component (b) formed with use of a higher fatty acid of not greater than C25 is practical.

Specific examples of saturated fatty acid amides that can be suitably used as the higher fatty acid amide (b) include lauric acid amide, palmitic acid amide, stearic acid amide, and behenic acid amide. Examples of unsaturated fatty acid amides that can be suitably used as the higher fatty acid amide (b) include erucic acid amide, oleic acid amide, brassidic acid amide, and elaidic acid amide. Examples of bis fatty acid amides that can be suitably used as the higher fatty acid amide (b) include methylene bis(stearic acid amide), methylene bis(lauric acid amide), ethylene bis(stearic acid amide), ethylene bis(lauric acid amide), methylene bis(oleic acid amide), methylene bis(erucic acid amide), ethylene bis(oleic acid amide), and ethylene bis(erucic acid amide). Each of these examples of the higher fatty acid amide may be used alone or in combinations of two or more.

Out of these higher fatty acid amides, stearic acid amide, behenic acid amide, oleic acid amide, erucic acid amide, ethylene bis(oleic acid amide) or ethylene bis(erucic acid amide) oleic acid amide and erucic acid amide can be more suitably used, because the desirable effect brought about by the component (b) is greater.

The amount of the component (b) contained in the present expanded particles with respect to 100 parts by weight of the component (a) is not less than 0.1 parts by weight and less than 2.5 parts by weight . In a case where the amount of the component (b) contained is less than 0.1 parts by weight, the desirable effect brought about by the component (b) decreases. In a case where the amount of the component (b) contained is not less than 2.5 parts by weight, the present molded product can be prone to excessive bleeding (leaking) of the component (b). Therefore, it is not preferable that the amount of the component (b) contained be outside the foregoing range. The amount of the component (b) contained is preferably not less than 0.2 parts by weight and less than 2.0 parts by weight, more preferably not less than 0.5 parts by weight and less than 1.5 parts by weight, even more preferably not less than 0.7 parts by weight and less than 1.3 parts by weight, particularly preferably not less than 0.8 parts by weight and less than 1.2 parts by weight.

[2-3. Ethylene-based copolymer (c)]

An "ethylene-based copolymer (c)" may be simply referred to as "component (c)". The present expanded particles contain the component (c), and therefore have the following advantageous effect (hereinafter may be referred to as "desirable effect brought about by the component (c)"): it is possible to provide a molded product that is excellent in crack resistance and punchability. Note, however, that the ethylene-based copolymer (c) is a copolymer other than the polyolefin-based resin (a).

Furthermore, since the present expanded particles contain the component (c), it is possible to reduce a decrease in cell diameter of the expanded particles that would result from the component (b). The present expanded particles, as a result, also have the following advantage: the expanded particles do not have color unevenness and are excellent in colorability. Furthermore, the present expanded particles, as a result, also have the following advantage: the present expanded particles enable an in-mold foamed molded product excellent in colorability with no color unevenness. Furthermore, since the present expanded particles contain the component (c), the present expanded particles also have the following advantage: it is possible to provide a molded product excellent in quality and mold release properties.

The component (c) contains, as structural units: a structural unit (c1) derived from ethylene; and at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

The component (c) can also be expressed as below. The component (c) is a copolymer obtained by polymerizing a composition that contains: ethylene (c1); and at least two types of vinyl monomers (c2) selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene. As used herein, the term "copolymer obtained by polymerizing a composition" does not impose any limitation on the method of polymerization of the composition. Specifically, the ethylene-based copolymer (c) may be a random copolymer of ethylene (c1) and at least two types of vinyl monomers (c2) selected from the above group, a block copolymer of ethylene (c1) and at least two types of vinyl monomers (c2) selected from the above group, or a graft copolymer of ethylene (c1) and at least two types of vinyl monomers (c2) selected from the above group.

Specific examples of the component (c) include ethylene-methyl methacrylate-butyl acrylate copolymers, ethylene-methyl methacrylate-stearyl methacrylate copolymers, ethylene-ethyl acrylate-butyl acrylate copolymers, ethylene-ethyl acrylate-butyl acrylate-styrene copolymers, and ethylene-ethyl (meth)acrylate-butyl (meth)acrylate-2-hydroxypropyl (meth)acrylate-styrene copolymers, but exclude the polyolefin-based resin (a). Each of such components (c) may be used alone, or in combinations of two or more.

Out of those listed above, ethylene-ethyl acrylate-butyl acrylate copolymers, ethylene-ethyl acrylate-butyl acrylate-styrene copolymers, and ethylene-ethyl (meth) acrylate-butyl (meth) acrylate-2-hydroxypropyl (meth)acrylate-styrene can each be suitably used as the component (c), and ethylene-ethyl (meth)acrylate-butyl (meth)acrylate-2-hydroxypropyl (meth)acrylate-styrene can be more suitably used as the component (c), because (i) the polarity can be greatly changed, (ii) the desirable effect is sufficiently achieved, and (iii) a decrease in cell diameter of expanded particles that would result from the component (b) can be further reduced.

The ethylene-based copolymer (c) is preferably a graft copolymer comprised of a copolymer constituting the main chain and a copolymer constituting a side chain. Specifically, the ethylene-based copolymer (c) is preferably a graft copolymer in which a copolymer constituting a side chain is graft polymerized on a copolymer constituting the main chain. The configuration provides the following advantage: there is a tendency that excessive bleeding of the component (b) in the present molded product is likely to be lessened.

The phrase "tendency that excessive bleeding of the component (b) is likely to be lessened" can also be described as "tendency that excessive bleeding of the component (b) is likely to be reduced".

The following description discusses a case (referred to as "case B") where the ethylene-based copolymer (c) is a graft copolymer comprised of a copolymer constituting the main chain and a copolymer constituting a side chain. In the case B, the copolymer constituting the main chain is preferably at least one selected from the group consisting of ethylene-methyl (meth)acrylate copolymers and ethylene-ethyl (meth)acrylate copolymers, because of their excellent affinity to the polyolefin-based resin (a). In the case B, the copolymer constituting the side chain is preferably at least one selected from the group consisting of butyl (meth)acrylate-2-hydroxypropyl (meth)acrylate-styrene copolymers, methyl (meth)acrylate-2-hydroxypropyl (meth)acrylate-styrene copolymers, and ethyl (meth)acrylate-2-hydroxyethyl (meth) acrylate-styrene copolymers, because of their excellent affinity to the component (b). In the case B, a combination of a copolymer constituting the main chain and a copolymer constituting a side chain is expressed as "copolymer constituting the main chain/copolymer constituting a side chain". In the case B, preferred examples of the combination of a copolymer constituting the main chain and a copolymer constituting a side chain include ethylene-ethyl (meth)acrylate copolymer/methyl (meth)acrylate-2-hydroxyethyl (meth)acrylate-styrene copolymer, and ethylene-ethyl (meth)acrylate copolymer/butyl (meth)acrylate-2-hydroxypropyl (meth) acrylate-styrene copolymer. This configuration provides the following advantage: a greater desirable effect is brought about by the component (c) in the resulting expanded particles. The configuration also provides the following advantage, in some cases: a decrease in cell diameter of the resulting expanded particles that would result from the component (b) can further be reduced, and, as a result, expanded particles and an in-mold foamed molded product which have no color unevenness and are excellent in colorability can be obtained.

A graft copolymer comprised of a copolymer constituting the main chain and a copolymer constituting a side chain can be produced by the following method (i) or (ii): (i) a method involving subjecting a copolymer constituting a side chain to a grafting reaction in which the copolymer constituting a side chain is grafted on a copolymer constituting the main chain; or (ii) a method involving subjecting monomers for formation of a copolymer constituting a side chain to a grafting reaction in which the copolymer constituting a side chain is grafted on a copolymer constituting the main chain. The method (ii) can also be described as below: a method involving subjecting monomers contained in a composition for formation of a copolymer constituting a side chain to a grafting reaction in which the copolymer constituting a side chain is grated on a copolymer constituting the main chain.

A method of producing a graft copolymer comprised of a copolymer constituting the main chain and a copolymer constituting a side chain is not limited to the above methods, and a known method can be used. As a method of producing the graft copolymer, any of methods disclosed in Japanese Patent Application Publication, Tokukai, No. 2000-265046, Japanese Patent Application Publication, Tokukai, No. 2014-201601, Japanese Patent Application Publication, Tokukai, No. 2015-131949, and the like can be employed, for example. Furthermore, for example, MODIPER (registered trademark) A5300 manufactured by NOF CORPORATION or the like can be used as a graft copolymer comprised of a copolymer constituting the main chain and a polymer constituting a side chain.

The ethylene-based copolymer (c) may be a random copolymer. A method of producing the random copolymer is not particularly limited, and a known method can be used. As a method of producing the random copolymer, a method disclosed in PCT International Application Publication No. WO2011/136092 can be employed, for example.

The amount of the component (c) contained in the present expanded particles, with respect to 100 parts by weight of the component (a) in the present expanded particles, is not less than 0.01 parts by weight and not more than 5.00 parts by weight. In a case where the amount of the component (c) contained is less than 0.01 parts by weight, the desirable effect brought about by the component (c) decreases. In a case where the amount of the component (c) contained is more than 5.00 parts by weight, fusibility and mechanical and physical properties of the present molded product tend to decrease.

Furthermore, in a case where the amount of the component (c) contained is less than 0.01 parts by weight, (i) the effect of the component (c) to reduce a decrease in cell diameter may decrease, (ii) the effect of the component (b) to improve punchability and the like may decrease, and (iii) the colorability of expanded particles may decrease because color unevenness of the expanded particles cannot be reduced.

Therefore, it is not preferable that the amount of the component (c) contained with respect to 100 parts by weight of the component (a) contained be outside the range of from 0.01 parts by weight to 5.00 parts by weight. The amount of the component (c) contained is preferably not less than 0.05 parts by weight and not more than 5.00 parts by weight, more preferably not less than 0.07 parts by weight and not more than 4.50 parts by weight, even more preferably not less than 0.10 parts by weight and not more than 4.00 parts by weight, particularly preferably not less than 0.15 parts by weight and not more than 4.00 parts by weight.

[2-4. Copolymer (d)]

It is preferable that the present expanded particles further contain a copolymer (d) that contains, as structural units: a structural unit (d1) derived from ethylene; and at least one type of structural unit (d2) derived from at least one type of vinyl monomer. Note, however, that the copolymer (d) is a copolymer other than the polyolefin-based resin (a) and is a copolymer other than the ethylene-based copolymer (c). In the present specification, the "copolymer (d)" may be simply referred to as "component (d)". In a case where the present expanded particles further contain the component (d), the following advantageous effect (hereinafter may be referred to as "desirable effect brought about by the component (d)") is brought about: there is a tendency that excessive bleeding of the component (b) in the present molded product is easily prevented.

The component (d) can also be described as below: it is preferable that the present expanded particles further contain a copolymer (d) obtained by polymerizing a composition that contains ethylene (d1') and at least one type of vinyl monomer (d2'). It is noted here that the phrase "copolymer obtained by polymerizing a composition" is not intended to impose limitation on the manner in which monomer units of the polymer are arranged. Specifically, the copolymer (d) may be a random copolymer of ethylene (d1') and at least one type of vinyl monomer (d2'), a block copolymer of ethylene (d1') and at least one type of vinyl monomer (d2'), or a graft copolymer of ethylene (d1') and at least one type of vinyl monomer (d2'). Note that the structural unit derived from the ethylene (d1') is the structural unit (d1), and the structural unit derived from the vinyl monomer (d2') is the structural unit (d2).

Specific examples of the component (d) include: ethylene-acrylic acid copolymers, ethylene-methyl acrylate copolymers, ethylene-methyl methacrylate copolymers, ethylene-ethyl acrylate copolymers, ethylene-ethyl methacrylate copolymers, ethylene-isobutyl acrylate copolymers, ethylene-n-butyl acrylate copolymers, ethylene-2-ethylhexyl acrylate copolymers, ethylene-ethyl acrylate-maleic anhydride copolymers, ethylene-ethyl acrylate-glycidyl methacrylate copolymers, ethylene-glycidyl methacrylate copolymers, ethylene-vinyl acetate-glycidyl methacrylate copolymers, and ethylene-vinyl acetate copolymers; and saponified products thereof, and exclude the polyolefin-based resin (a) and the ethylene-based copolymer (c). Each of such examples of the component (d) may be used alone or in combinations of two or more.

The at least one type of vinyl monomer which can form the structural unit (d2) is preferably a (meth)acrylic acid ester which contains a C1 to C4 lower alkyl group or vinyl acetate. A component (d) that contains as structural units at least one type of structural unit (d2) derived from at least one type of such vinyl monomer and a structural unit (d1) derived from ethylene is capable of greatly changing the polarity of the present expanded particles. Specific examples of the component (d) having the above-stated configuration include: ethylene-methyl acrylate copolymers, ethylene-methyl methacrylate copolymers, ethylene-ethyl acrylate copolymers, ethylene-ethyl methacrylate copolymers, ethylene-n-butyl acrylate copolymers, and ethylene-vinyl acetate copolymers; and saponified products thereof.

It can also be said that the at least one type of vinyl monomer (d2') is preferably a (meth)acrylic acid ester which contains a C1 to C4 lower alkyl group or vinyl acetate. A component (d) obtained by polymerizing a composition that contains at least one type of such a vinyl monomer (d2') and the ethylene (d1') is capable of greatly changing the polarity of the expanded particles.

The amount of the component (d) contained in the present expanded particles with respect to 100 parts by weight of the component (a) in the present expanded particles is preferably not less than 0.2 parts by weight and not more than 5.0 parts by weight, more preferably not less than 0.5 parts by weight and not more than 4.5 parts by weight, even more preferably not less than 1.00 part by weight and not more than 4.5 parts by weight, particularly preferably not less than 1.00 part by weight and not more than 4.00 parts by weight. In a case where the amount of the component (d) contained is not less than 0.2 parts by weight, the desirable effect brought about by the component (d) is sufficiently achieved. In a case where the amount of the component (d) contained is not more than 5.0 parts by weight, the following advantage is brought about: the mechanical strength of the present molded product is not reduced.

[2-5. Olefin-based elastomer (e)]

It is preferable that the present expanded particles further contain an olefin-based elastomer (e). The configuration provides the following advantageous effect (hereinafter may be referred to as "desirable effect brought about by the component (e)"): (i) it is possible to obtain expanded particles having high elastic recovery and/or (ii) the desirable effect brought about by the component (b) becomes greater. Note, however, that the olefin-based elastomer (e) is an elastomer other than the polyolefin-based resin (a). In the present specification, the "olefin-based elastomer (e)" may be simply referred to as "component (e)".

In a case where the present expanded particles contain the component (e), the following advantageous effect(s) is/are also brought about: the present expanded particles enable an in-mold foamed molded product having high elastic recovery and/or better punchability.

Examples of the component (e) include the following (i) to (iii), but exclude the polyolefin-based resin (a): (i) ethylene-α-olefin copolymer rubbers; (ii) ethylene-α-olefin-nonconjugated diene copolymer rubbers; and (iii) graft copolymers comprised of a main chain and a side chain. It is noted here that a graft copolymer (iii) has the main chain comprised mainly of an ethylene-α-olefin copolymer rubber and/or an ethylene-α-olefin-nonconjugated diene copolymer rubber etc. and has a side chain comprised mainly of a vinyl polymer that contains at least one type of structural unit derived from at least one type of vinyl-based monomer (also referred to as "vinyl monomer"). The graft copolymer (iii) can also be described as below: (iii) a graft copolymer has the main chain comprised mainly of an ethylene-α-olefin copolymer rubber and/or an ethylene-α-olefin-nonconjugated diene copolymer rubber etc. and has a side chain comprised mainly of a vinyl polymer formed from a composition containing at least one type of vinyl-based monomer (also referred to a vinyl monomer). Note that the vinyl polymer in the graft copolymer (iii) may be a homopolymer or a copolymer.

Examples of the α-olefin include propylene, 1-butene, 1-pentene, 1-hexene, 1-octene, 1-decene, 2-methyl-1-propene, 3-methyl-1-pentene, 4-methyl-1-pentene, and 5-methyl-1-hexene. Each of these α-olefins may be used alone or a mixture of two or more of them may be used. Examples of the nonconjugated diene (nonconjugated diene compound) include dicyclopentadiene, 1,4-hexadiene, cyclooctadiene, methylene norbornene, ethylidene norbornene, and vinyl norbornene. Each of these nonconjugated dienes may be used alone or a mixture of two or more of them may be used.

Specific examples of ethylene-α-olefin copolymer rubbers include ethylene-propylene copolymer rubbers, ethylene-1-butene copolymer rubbers, ethylene-1-hexene copolymer rubbers, and ethylene-1-octene copolymer rubbers. Out of those listed above, ethylene-propylene copolymer rubbers and ethylene-1-octene copolymer rubbers are particularly preferred, because the desirable effect brought about by the component (e) becomes greater. Each of such ethylene-α-olefin copolymer rubbers may be used alone or in combinations of two or more.

The ethylene-propylene copolymer rubbers and the ethylene-1-octene copolymer rubbers are particularly preferred also because such rubbers make it possible to obtain an in-mold foamed molded product having high elastic recovery and/or better punchability.

Specific preferred examples of the ethylene-α-olefin-nonconjugated diene copolymer rubbers include ethylene-1-butene-nonconjugated diene copolymer rubbers and ethylene-propylene-nonconjugated diene copolymer rubbers. Specific particularly preferred examples of the ethylene-α-olefin-nonconjugated diene copolymer rubbers include ethylene-propylene-ethylidene norbornene copolymer rubbers and ethylene-propylene-dicyclopentadiene copolymer rubbers. In a case where the component (e) is any of such copolymer rubbers, the desirable effect brought about by the component (e) becomes greater. Each of such types of ethylene-α-olefin-nonconjugated diene copolymer rubbers may be used alone or in combinations of two or more. One or more types of such ethylene-α-olefin copolymer rubbers and one or more types of such ethylene-α-olefin-nonconjugated diene copolymer rubbers may be used in combination.

Also because it is possible to obtain an in-mold foamed molded product having high elastic recovery and/or higher punchability, preferred ethylene-α-olefin-nonconjugated diene copolymer rubbers are ethylene-1-butene-nonconjugated diene copolymer rubbers and ethylene-propylene-nonconjugated diene copolymer rubbers, and particularly preferred ethylene-α-olefin-nonconjugated diene copolymer rubbers are ethylene-propylene-ethylidene norbornene copolymer rubbers and ethylene-propylene-dicyclopentadiene copolymer rubbers.

The component (e) may be a graft copolymer that has the main chain comprised mainly of the foregoing ethylene-α-olefin copolymer rubber and the foregoing ethylene-α-olefin-nonconjugated diene copolymer rubber, etc. and that has a side chain comprised mainly of a vinyl polymer containing at least one type of structural unit derived from at least one type of vinyl-based monomer.

The component (e) can also be described as below: the component (e) may be a graft copolymer that has the main chain comprised mainly of the foregoing ethylene-α-olefin copolymer rubber and the foregoing ethylene-α-olefin-nonconjugated diene copolymer rubber etc. and that has a side chain comprised mainly of a vinyl polymer formed from a composition containing at least one type of vinyl-based monomer.

The vinyl monomer is preferably at least one type of monomer selected from the group consisting of: (meth)acrylic acid alkyl esters whose alkyl chain length is 1 to 20 carbon atoms; vinyl monomers having an acid group; vinyl monomers having a hydroxyl group; vinyl monomers having an epoxy group; vinyl monomers having a cyano group; and styrene.

More specific examples of the vinyl monomer include methyl (meth)acrylate, ethyl (meth)acrylate, butyl (meth)acrylate, hexyl (meth)acrylate, 2-ethylhexyl (meth)acrylate, lauryl (meth)acrylate, stearyl (meth)acrylate, (meth)acrylic acid, maleic acid, maleic anhydride, 2-hydroxyethyl (meth)acrylate, 2-hydroxypropyl (meth)acrylate, glycidyl (meth)acrylate, (meth)acrylonitrile, styrene, propylene, and octene.

Out of these vinyl monomers, e.g. the following are particularly preferable: methyl (meth)acrylate, ethyl (meth)acrylate, butyl (meth)acrylate, (meth)acrylic acid, 2-hydroxyethyl (meth)acrylate, 2-hydroxypropyl (meth)acrylate, glycidyl (meth)acrylate, (meth)acrylonitrile, and styrene. These examples are particularly preferable in that they have high interaction with the component (b) and enable easy adjustment of a surface migration property of the component (b). Here, the "surface migration property" of the component (b) refers to the degree to which the component (b) migrates to the surface of the present molded product which is ultimately obtained. The surface migration property of the component (b) can affect the desirable effect brought about by the component (b).

It can also be said that the surface migration property of the component (b) can affect the effect of the component (b) to improve punchability and the like.

The amount of the component (e) contained in the present expanded particles with respect to 100 parts by weight of the component (a) in the present expanded particles is preferably not less than 0.2 parts by weight and not more than 5.0 parts by weight, more preferably not less than 0.5 parts by weight and not more than 4.5 parts by weight, even more preferably not less than 1.00 part by weight and not more than 4.5 parts by weight, particularly preferably not less than 1.00 part by weight and not more than 4.00 parts by weight. In a case where the amount of the component (e) contained is not less than 0.2 parts by weight, the desirable effect brought about by the component (e) can be sufficiently achieved. In a case where the amount of the component (e) contained is not more than 5.0 parts by weight, there is an advantage that the mechanical strength of the present molded product does not decrease.

[2-6. Acrylate-based copolymer (f)]

It is preferable that the present expanded particles further contain an acrylate-based copolymer (f). The configuration provides the following advantageous effect (hereinafter may be referred to as "desirable effect brought about by the component (f)"): there is a tendency that excessive bleeding of the component (b) in the present molded product is likely to be lessened. Note, however, that the acrylate-based copolymer (f) is a copolymer other than the ethylene-based copolymer (c). In the present specification, the "acrylate-based copolymer (f)" may be simply referred to as "component (f)". The component (f) is preferably a copolymer that is other than the ethylene-based copolymer (c) and that contains, as structural units, at least two types of structural units respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene, in terms of affinity to the component (c).

The component (f) can also be described as below: the component (f) is preferably a copolymer obtained by polymerizing a composition that contains at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene, in terms of affinity to the component (c).

The amount of the component (f) contained in the present expanded particles with respect to 100 parts by weight of the component (a) in the present expanded particles is preferably not less than 0.01 parts by weight and not more than 2.00 parts by weight, more preferably not less than 0.10 parts by weight and not more than 1.50 parts by weight, even more preferably not less than 0.50 parts by weight and not more than 1.50 parts by weight, particularly preferably not less than 0.80 parts by weight and not more than 1.20 parts by weight. In a case where the amount of the component (f) contained is not less than 0.01 parts by weight, the desirable effect brought about by the component (f) can be sufficiently achieved. In a case where the amount of the component (f) contained is not more than 2.00 parts by weight, there is an advantage that the mechanical strength of the present molded product does not decrease.

[2-7. Coloring agent (g)]

The present expanded particles may further contain a coloring agent (g). The "coloring agent (g)" may be simply referred to as "component (g)". Expanded particles can be colored in a desired color by containing the component (g).

The coloring agent (g) is not particularly limited. Examples of the coloring agent include carbon black, ultramarine blue, cyanine pigment, azo pigment, quinacridone pigment cadmium yellow, chromium oxide, iron oxide, perylene pigment, and anthraquinone pigment. Each of such examples of the coloring agent (g) may be used alone or in combinations of two or more. Out of those listed above, carbon black is preferred as the coloring agent (g) because it is possible to obtain a molded product excellent in colorability with no or little color unevenness.

It can also be said that carbon black is preferred as the component (g) because carbon black is very effective in lessening color unevenness of an in-mold foamed molded product and improving the colorability of the in-mold foamed molded product.

There is no particular limitation on the primary particle diameter of carbon black. The primary particle diameter of carbon black is preferably greater than 0 nm and not greater than 50 nm, more preferably not less than 10 nm and not greater than 50 nm. In a case where carbon black having such a configuration is used as the coloring agent (g), a molded product having better colorability with lesser color unevenness can be obtained.

It can also be said that, in a case where carbon black having a primary particle diameter of greater than 0 nm and not greater than 50 nm is used as the component (g), there is a tendency that the effect of lessening color unevenness of an in-mold foamed molded product and the effect of improving the colorability (blackness) of the in-mold foamed molded product are exhibited particularly greatly.

The amount of the coloring agent (g) contained in the present expanded particles with respect to 100 parts by weight of the component (a) in the present expanded particles is preferably not less than 0.01 parts by weight and not more than 10.00 parts by weight, more preferably not less than 0.05 parts by weight and not more than 9.00 parts by weight, even more preferably not less than 0.10 parts by weight and not more than 8.00 parts by weight. In a case where the amount of the coloring agent (g) contained is not less than 0.01 parts by weight, the coloring effect by the coloring agent (g) is sufficiently exhibited. In a case where the amount of the coloring agent (g) contained is not more than 10.00 parts by weight, there is an advantage that the mechanical strength of the present molded product will not decrease.

Such a coloring agent (g) can be directly added to a blended product (described later) or to a polyolefin-based resin composition during production of polyolefin-based resin particles. Alternatively, it is possible to (i) prepare a masterbatch in advance by adding, at a high concentration, the coloring agent (g) in another resin and then (ii) add the masterbatch resin to a blended product or to a polyolefin-based resin composition. The resin used in preparation of the masterbatch resin is preferably a polyolefin-based resin.

In cases where the present molded product is used for, for example, an automotive component, the molded product is required to have mechanical strength and deeper blackness (high-quality appearance). In such cases, the coloring agent (g) is preferably carbon black. Furthermore, in such cases, the amount of the coloring agent (g) contained in the present expanded particles, with respect to 100 parts by weight of the component (a) in the present expanded particles, is preferably not less than 1 part by weight and not more than 7 parts by weight, particularly preferably not less than 3 parts by weight and not more than 5 parts by weight.

The following description discusses expanded particles for use in production of an in-mold foamed molded product that is required to have blackness (high-quality appearance) as described above. It can also be said that: the component (g) in the expanded particles is carbon black; and that the amount of the component (g) contained in the expanded particles, with respect to 100 parts by weight of the component (a) in the expanded particles, is preferably not less than 1.00 part by weight and not more than 7.00 parts by weight, more preferably not less than 2.00 parts by weight and not more than 7.00 parts by weight, even more preferably not less than 3.00 parts by weight and not more than 7.00 parts by weight, even more preferably not less than 3.00 parts by weight and not more than 6.00 parts by weight, particularly preferably not less than 3 parts by weight and not more than 5 parts by weight. The following aspect is also preferred: the component (g) in the expanded particles is carbon black, and the amount of the component (g) contained in the expanded particles, with respect to 100 parts by weight of the component (a) in the expanded particles, is not less than 3.00 parts by weight and not more than 10.00 parts by weight.


[2-7. Other additives]

Other than the foregoing components (a) to (g), the present expanded particles may further contain other additive(s) optionally. Examples of such other additives include water absorbing substances, expansion nucleating agents, anti-static agents, flame retardants, antioxidants, photo stabilizers, crystal nucleating agents, electrically conductive agents, and lubricants/slip additives. Such other additives can be directly added to a blended product (described later) or to a polyolefin-based resin composition during production of polyolefin-based resin particles. Alternatively, it is possible to (i) prepare a masterbatch in advance by adding, at a high concentration, the additive(s) in another resin and then (ii) add the masterbatch resin to a blended product or to a polyolefin-based resin composition. The resin used in preparation of the masterbatch resin is preferably a polyolefin-based resin.

The water absorbing substance is a substance which is used to increase the amount of moisture impregnated in polyolefin-based resin particles during production of the present expanded particles. When a water absorbing substance is used during production of polyolefin-based resin expanded particles, the water absorbing substance is able to impart expandability to the polyolefin-based resin particles. This expandability-imparting effect is particularly notable in cases where water is used as a blowing agent.

Examples of the water absorbing substance that can be used in an embodiment of the present invention include glycerin, diglycerin, polyethylene glycol, C12 to C18 fatty alcohols (e.g., pentaerythritol, cetyl alcohol, and stearyl alcohol), melamine, isocyanuric acid, melamine-isocyanuric acid condensate, and zinc borate. These examples of water absorbing substances may be used alone or in combinations of two or more.

Out of those listed above, glycerin and polyethylene glycol are preferred for their good affinity to the component (a).

Glycerin and polyethylene glycol, out of the water absorbing substances listed above, are preferred also in that glycerin and polyethylene glycol do not accelerate a decrease in average cell diameter of expanded particles and have good affinity to the component (a).

The amount of the water absorbing substance contained in the present expanded particles, with respect to 100 parts by weight of the component (a) in the present expanded particles, is preferably not less than 0.01 parts by weight and not more than 1.00 part by weight, more preferably not less than 0.05 parts by weight and not more than 0.70 parts by weight, even more preferably not less than 0.10 parts by weight and not more than 0.60 parts by weight. In a case where the amount of the water absorbing substance contained is not less than 0.01 parts by weight, the expandability-imparting effect by the water absorbing substance can be sufficiently achieved. In a case where the amount of the water absorbing substance contained is not more than 1.00 part by weight, the resulting expanded particles will not shrink.

Note that the amount of the water absorbing substance contained in the present expanded particles can also be described as the amount of the water absorbing substance used in the production of the present expanded particles.

The expansion nucleating agent is a substance that can be used in the production of the present expanded particles and that can become expansion nuclei at the time of expansion of polyolefin-based resin particles. It is preferable that an expansion nucleating agent be used in the production of polyolefin-based resin expanded particles. In other words, it is preferable that the present expanded particles contain an expansion nucleating agent.

Examples of the expansion nucleating agent that can be used in an embodiment of the present invention include silica (silicon dioxide), silicates, alumina, diatomaceous earth, calcium carbonate, magnesium carbonate, calcium phosphate, feldspar apatite, and barium sulfate. Examples of silicates include talc, magnesium silicate, kaolin, halloysite, dickite, aluminum silicate, and zeolite. These expansion nucleating agents can be used alone or in combinations of two or more.

The amount of the expansion nucleating agent contained in the present expanded particles is preferably not less than 0.005 parts by weight and not more than 2.000 parts by weight, more preferably not less than 0.010 parts by weight and not more than 1.000 part by weight, and most preferably not less than 0.030 parts by weight and not more than 0.500 parts by weight, with respect to 100 parts by weight of the polyolefin-based resin (a), in terms of uniformity of average cell diameter. Note that the amount of the expansion nucleating agent contained in the present expanded particles can also be described as the amount of the expansion nucleating agent used in the production of the present expanded particles.

[2-8. Average cell diameter]

The average cell diameter of the present expanded particles is not particularly limited, and is preferably more than 120 $\mu$m and not more than 380 $\mu$m, more preferably more than 120 pm and not more than 360 $\mu$m, even more preferably more than 125 $\mu$m and not more than 360 $\mu$m, even more preferably more than 125 $\mu$m and not more than 350 $\mu$m, even more preferably more than 125 $\mu$m and not more than 340 $\mu$m, even more preferably more than 130 $\mu$m and not more than 340 $\mu$m, even more preferably more than 130 $\mu$m and not more than 330 $\mu$m, even more preferably more than 140 $\mu$m and not more than 330 pm, even more preferably more than 140 $\mu$m and not more than 300 $\mu$m, even more preferably more than 140 $\mu$m and not more than 270 $\mu$m, even more preferably more than 140 $\mu$m and not more than 250 $\mu$m, even more preferably more than 140 $\mu$m and not more than 230 $\mu$m, particularly preferably more than 140 $\mu$m and not more than 200 pm. The average cell diameter of the present expanded particles may be more than 120 $\mu$m and not more than 350 $\mu$m, may be more than 125 $\mu$m and not more than 300 $\mu$m, and may be more than 130 $\mu$m and not more than 200 $\mu$m. In a case where the present expanded particles have an average cell diameter of more than 120 $\mu$m, the expanded particles enable a polyolefin-based resin in-mold foamed molded product excellent in colorability with no color unevenness and excellent compressive strength. In a case where the present expanded particles have an average cell diameter of not more than 380 $\mu$m, there is an advantage that the mold cycle of the in-mold foamed molded product will not become longer and good productivity will be achieved. It is noted here that the mold cycle refers to period from when in-mold foam molding commences to when the molding ends and the molded product that is obtained is ejected from the mold, which period occurs when in-mold foam molding is carried out using the polyolefin-based resin expanded particles so as to obtain a polyolefin-based resin in-mold molded product.

[3. Polyolefin-based resin expanded particles]

A method of producing the present expanded particles is not particularly limited, and can be, for example, the following production method. A method of producing polyolefin-based resin expanded particles in accordance with an embodiment of the present invention includes the steps of: obtaining a dispersion slurry, which includes (i) an aqueous dispersion medium and (ii) polyolefin-based resin particles and an inorganic blowing agent which are dispersed in the aqueous dispersion medium, by mixing the polyolefin-based resin particles, the aqueous dispersion medium, and the inorganic blowing agent in a pressure-resistant vessel; and obtaining polyolefin-based resin expanded particles by raising a temperature and a pressure inside the pressure-resistant vessel and then expelling the dispersion slurry from the pressure-resistant vessel into an area having a pressure lower than the raised pressure inside the pressure-resistant vessel, so that the polyolefin-based resin particles are expanded, in which the polyolefin-based resin particles contain: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), the polyolefin-based resin (a) has a flexural rigidity, measured in accordance with JIS K7106, of more than 8000 kg/cm$^2$ and not more than 13500 kg/cm$^2$, and the ethylene-based copolymer (c) is a copolymer that contains, as structural units: a structural unit (c1) derived from ethylene; and at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

A "method of producing polyolefin-based resin expanded particles in accordance with an embodiment of the present invention" may be simply referred to as a "present method of producing expanded particles". The polyolefin-based resin (a), the higher fatty acid amide (b), and the ethylene-based copolymer (c) in the present method of producing expanded particles may be referred to as a component (a), a component (b), and a component (c), respectively.

The present method of producing expanded particles includes the above-stated features, and therefore is capable of providing a polyolefin-based resin in-mold foamed molded product that is less prone to cracking and chipping when recovered from a mold and that is excellent in strength.

Since the present method of producing expanded particles include the foregoing features, a decrease in cell diameter is reduced although a higher fatty acid amide is included; therefore, it is also possible to provide polyolefin-based resin expanded particles having a desired cell diameter (e.g., average cell diameter is more than 120 $\mu$m and not more than 350 pm). Therefore, the resulting polyolefin-based resin expanded particles, when further containing a coloring agent, enable a polyolefin-based resin in-mold foamed molded product excellent in colorability with no color unevenness.

A method of producing polyolefin-based resin expanded particles, including the foregoing features, is also capable of providing polyolefin-based resin expanded particles which enable a polyolefin-based resin in-mold foamed molded product with high quality and excellent mold release properties.

The present method of producing expanded particles can be suitably used to produce the expanded particles described in the section "2. Polyolefin-based resin expanded particles". In other words, the expanded particles described in the section "2. Polyolefin-based resin expanded particles" can be produced by the present method of producing expanded particles.

[3-1. Method of producing polyolefin-based resin particles]

During production of the present expanded particles, it is possible to first carry out a step (granulation step) of producing polyolefin-based resin particles composed of polyolefin-based resin serving as a base material resin.

The component (a), the component (b), and the component (c) that can be contained in polyolefin-based resin particles in the present method of producing expanded particles can be any of the examples of the component (a), any of the examples of the component (b), and any of the examples of the component (c) described in the section "2. Polyolefin-based resin expanded particles", respectively. The component (a), the component (b), and the component (c) in the present method of producing expanded particles can employ any of the embodiments stated in the section of the component (a), any of the embodiments stated in the section of the component (b), and any of the embodiments stated in the section of the component (c) in the section "2. Polyolefin-based resin expanded particles", respectively. The polyolefin-based resin particles in the present method of producing expanded particles may optionally contain the component (d), the component (e), the component (f), the component (g) and/or other additive(s) described in the section "2. Polyolefin-based resin expanded particles".

Examples of methods for producing polyolefin-based resin particles include methods utilizing an extruder. As one specific example, the polyolefin-based resin particles can be prepared via a method involving the following steps (1) to (5): (1) preparing a blended product by blending together the component (a), the component (b), and the component (c), and as necessary, one or more selected from the group consisting of the component (d), the component (e), the component (f), the component (g), and other additives; (2) introducing the blended product into an extruder and melting and kneading the blended product so as to prepare a polyolefin-based resin composition; (3) extruding the polyolefin-based resin composition from a die of the extruder; (4) cooling the extruded polyolefin-based resin composition by, for example, passing it through water, so that the polyolefin-based resin composition solidifies; and then (5) finely cutting the solidified polyolefin-based resin composition, with use of a cutter, into a desired shape such as a cylindrical shape, elliptical shape, spherical shape, cuboid shape, or rectangular parallelepiped shape. Alternatively, in step (3), the polyolefin-based resin composition which has been melted and kneaded may be extruded directly into water from the die of the extruder, and immediately thereafter cut into particles, cooled, and solidified. Melting and kneading a blended product in this manner makes it possible to obtain polyolefin-based resin particles which are more uniform.

Note that, for the purpose of dispersing the component (b) in a more uniform manner in the polyolefin-based resin particles, the component (b) and at least one type selected from the component (c), the component (d), the component (e), the component (f) and the component (g) may be melted and kneaded in an extruder in advance to prepare a mixture. For example, the component (b) and the component (c) can be melted and kneaded in advance in an extruder to prepare a mixture. Alternatively, for example, the component (b), the component (c), the component (d), the component (e), the component (f), and the component (g) can be melted and kneaded in advance in an extruder to prepare a mixture. The mixture and the component (a) and, as necessary, other component(s) and/or other additive(s) can be melted and kneaded to prepare a polyolefin-based resin composition.

The polyolefin-based resin particles obtained in the above manner preferably have a particle weight of not less than 0.2 mg/particle and not more than 10 mg/particle, and more preferably not less than 0.5 mg/particle and not more than 5 mg/particle. In a case where the particle weight of the polyolefin-based resin particles is less than 0.2 mg/particle, there tends to be a decrease in the handleability of the polyolefin-based resin particles. In a case where the particle weight of the polyolefin-based resin particles exceeds 10 mg/particle, there tends to be a decrease in a mold-filling property during the process of in-mold foam molding.

[3-2. Method of producing polyolefin-based resin expanded particles]

The polyolefin-based resin particles obtained in the above-described manner can be used to produce the present expanded particles. The present method of producing expanded particles includes the steps of: obtaining a dispersion slurry that contains polyolefin-based resin particles; and obtaining polyolefin-based resin expanded particles. Specifically, the step of obtaining a dispersion slurry includes the following substeps (i) and (ii): (i) placing the polyolefin-based resin particles, an aqueous dispersion medium, and an inorganic blowing agent, and, optionally, a dispersing agent and a dispersion auxiliary agent in predetermined amounts in a pressure-resistant vessel; and (ii) stirring these materials to obtain, in the pressure-resistant vessel, a dispersion slurry that is comprised of (a) the aqueous dispersion medium and (b) the polyolefin-based resin particles and the inorganic blowing agent which are dispersed in the aqueous dispersion medium. The step of obtaining polyolefin-based resin expanded particles, following the step of obtaining a dispersion slurry, includes the following substeps (iii) to (v), specifically: (iii) raising the temperature inside the pressure-resistant vessel, which contains the dispersion slurry, to a predetermined temperature (not lower than the softening temperature of the polyolefin-based resin particles) and raising the pressure inside the pressure-resistant vessel to a predetermined pressure; then (iv) as necessary, maintaining the interior of the pressure-resistant vessel at the predetermined temperature for a period of longer than 0 minutes and not longer than 120 minutes; and then (v) expelling the dispersion slurry from the pressure-resistant vessel into an area having a pressure lower than the raised pressure inside the pressure-resistant vessel, so that the polyolefin-based resin particles are expanded and the polypropylene-based resin expanded particles are obtained.

Note that a process of producing polyolefin-based resin expanded particles from polyolefin-based resin particles in this manner is referred to here as a "first-step expansion process," and the polyolefin-based resin expanded particles thus obtained are referred to as "first-step expanded particles".

Note here that when raising the temperature in the pressure-resistant vessel to the softening temperature of the polyolefin-based resin particles or higher, the temperature is preferably raised to a temperature which is not lower than 20°C below and not higher than 10°C above the melting point of the polyolefin-based resin (a), or not lower than 20°C below and not higher than 10°C above the melting point of the polyolefin-based resin particles, in order to ensure expandability of the expanded particles during the production of the present expanded particles. Note, however, that the temperature to which the temperature is raised is decided as appropriate in accordance with (i) the type of polyolefin-based resin (a) used as the base material and/or (ii) the desired expansion ratio of the polyolefin-based resin expanded particles.

Note that the term "temperature to which the temperature is raised" refers to the raised temperature, and refers to (v) the temperature inside the vessel at the time of expelling the dispersion slurry from the pressure-resistant vessel into an area having a pressure lower than the internal pressure of the pressure-resistant vessel. The "temperature to which the temperature is raised" can also be described as "expansion temperature".

Note that the melting point of polyolefin-based resin particles is measured by a method similar to that for a polyolefin-based resin.

It is preferable that the pressure lower than the internal pressure of the pressure-resistant vessel is atmospheric pressure.

The pressure inside the vessel, at the time of expelling the dispersion slurry from the pressure-resistant vessel into an area having a pressure lower than the internal pressure of the pressure-resistant vessel, is also referred to as expansion pressure.

The present method of producing expanded particles may further include: a substep of heating the inside of the vessel (raising the temperature inside the vessel) to the expansion temperature; and/or a step of raising the pressure inside the vessel to the expansion pressure.

The aqueous dispersion medium used in an embodiment of the present invention is preferably only water. It is also possible to use, as the aqueous dispersion medium, a dispersion medium obtained by adding methanol, ethanol, ethylene glycol, and/or glycerin etc. to water.

The amount of the aqueous dispersion medium used in the dispersion slurry for an embodiment of the present invention is preferably not less than 100 parts by weight and not more than 400 parts by weight, with respect to 100 parts by weight of the polyolefin-based resin (a). Using the aqueous dispersion medium in an amount of not more than 400 parts by weight will prevent a decrease in productivity. Using the aqueous dispersion medium in an amount not less than 100 parts by weight will not cause a decrease in the stability of the dispersion slurry (in other words, the polyolefin-based resin particles are well dispersed).

Examples of the dispersing agent for use in an embodiment of the present invention include inorganic dispersing agents such as tertiary calcium phosphate, tertiary magnesium phosphate, basic magnesium carbonate, calcium carbonate, barium sulfate, kaolin, talc, and clay. Each of these examples may be used alone, or in combinations of two or more.

In an embodiment of the present invention, it is preferable to further use a dispersion auxiliary agent in order to increase the stability of the dispersion slurry in the pressure-resistant vessel. Examples of the dispersion auxiliary agent include sodium dodecylbenzene sulfonate, sodium alkane sulfonates, sodium alkyl sulfonates, sodium alkyl diphenyl ether disulfonates, and sodium α-olefin sulfonates. Each of these examples may be used alone, or in combinations of two or more.

The amount of the dispersing agent used in the dispersion slurry for use in an embodiment of the present invention is preferably not less than 0.01 parts by weight and not more than 3.00 parts by weight, with respect to 100 parts by weight of the polyolefin-based resin (a). In a case where the used amount of the dispersing agent is not less than 0.01 parts by weight, this does not cause poor dispersion of polyolefin-based resin particles. In a case where the used amount of the dispersing agent is not more than 3.00 parts by weight, this does not cause poor fusion between polyolefin-based resin expanded particles during in-mold foam molding using the obtained expanded particles.

The amount of the dispersion auxiliary agent used in the dispersion slurry for use in an embodiment of the present invention is preferably not less than 0.001 parts by weight and not more than 0.200 parts by weight, with respect to 100 parts by weight of the polyolefin-based resin. In a case where the used amount of the dispersion auxiliary agent is less than 0.001 parts by weight or more than 0.200 parts by weight, this does not cause poor dispersion of the polyolefin-based resin particles.

A decrease in the stability of the dispersion slurry may result in a plurality of polyolefin-based resin particles agglomerating or forming lumps in the pressure-resistant vessel. This may result in, for example, (i) the production of agglomerated polyolefin-based resin expanded particles, (ii) an inability to produce polyolefin-based resin expanded particles due to lumps of the polyolefin-based resin particles remaining in the pressure-resistant vessel, or (iii) a decrease in productivity during production of polyolefin-based resin expanded particles.

Examples of the inorganic blowing agent for use in an embodiment of the present invention include water, carbon dioxide, nitrogen, and air (a mixture of oxygen, nitrogen, and carbon dioxide). Each of these examples may be used alone, or in combinations of two or more. Out of these blowing agents, carbon dioxide is preferable in that it has an appropriately high plasticizing effect and makes it easy to improve the expandability of the expanded particles during production of the present expanded particles.

In particular, with conventional techniques, the average cell diameter of expanded particles is likely to decrease in cases where carbon dioxide is used as a blowing agent. In contrast, with an embodiment of the present invention, even in cases where carbon dioxide is used, a decrease in cell diameter of expanded particles is lessened, and the effect of lessening color unevenness and the effect of improving colorability are expected.

In an embodiment of the present invention, the used amount of the inorganic blowing agent is not limited, and may be adjusted as appropriate in accordance with the desired expansion ratio of the polyolefin-based resin expanded particles. Typically, the amount of the inorganic blowing agent used is preferably not less than 1 part by weight and not more than 10 parts by weight, with respect to 100 parts by weight of the polyolefin-based resin (a).

In a case where water is used as the inorganic blowing agent, water in the dispersion slurry in the pressure-resistant vessel can be used as the inorganic blowing agent. Specifically, in a case where the water in the dispersion slurry is to be used as the inorganic blowing agent, it is preferable for the polyolefin-based resin particles to contain a water absorbing substance in advance. This allows the polyolefin-based resin particles to more easily absorb the water in the dispersion slurry in the pressure-resistant vessel. As a result, it becomes easier to use the water as the blowing agent.

The pressure-resistant vessel for use in the present method of producing expanded particles is not limited to a particular vessel. The pressure-resistant vessel need only be a vessel which can withstand the internal pressure (e.g., expansion pressure) and temperatures (e.g., expansion temperature) which the pressure-resistant vessel is subjected to during production of the polyolefin-based resin expanded particles. Possible examples of the pressure-resistant vessel include an autoclave-type pressure-resistant vessel.

In order to obtain polyolefin-based resin expanded particles having a high expansion ratio, it is possible to use a method in which a large amount of the inorganic blowing agent is used during the first-step expansion process (this method is hereinafter referred to as "Method 1"). Examples of methods other than the Method 1 which can be used include a method in which polyolefin-based resin expanded particles (first-step expanded particles) having a relatively low expansion ratio (an expansion ratio of approximately 2 to 35 times) are obtained in the first-step expansion process, and thereafter, the obtained first-step expanded particles are expanded again to increase the expansion ratio (this method is hereinafter referred to as "Method 2"). In the present specification, "expansion ratio" refers to an absolute expansion ratio which can be calculated from (i) the density of the polyolefin-based resin (a) before expansion, (ii) the weight of the polyolefin-based resin expanded particles, and (iii) the volume of the polyolefin-based resin expanded particles found by submerging the polyolefin-based resin expanded particles in water (or in ethanol).

Examples of Method 2 include a method including the following steps (i) to (iii). (i) In a first-step expansion process, first-step expanded particles having an expansion ratio of 2 to 35 times are produced. (ii) The first-step expanded particles are placed into a pressure-resistant vessel, and the pressure inside the first-step expanded particles (hereinafter, also referred to as "internal pressure") is increased to greater than normal pressure by carrying out a pressure treatment at not less than 0.1 MPa (gage pressure) and not more than 0.6 MPa (gage pressure) with use of e.g. nitrogen, air, or carbon dioxide. (iii) Thereafter, the first-step expanded particles are further expanded by heating the particles with use of, for example, steam. A step of increasing the expansion ratio of first-step expanded particles as in Method 2 is referred to here as a "second-step expansion process", and the polyolefin-based resin expanded particles obtained via the Method 2 are referred to as "second-step expanded particles".

In an embodiment of the present invention, the pressure of the steam in the second-step expansion process is preferably adjusted to a range of not less than 0.03 MPa (gage pressure) and not more than 0.20 MPa (gage pressure), in accordance with the expansion ratio of the second-step expanded particles.

In a case where the pressure of the steam in the second-step expansion process is not lower than 0.03 MPa (gage pressure), there is a tendency that the expansion ratio is likely to improve. In a case where the pressure of the steam in the second-step expansion process is not higher than 0.20 MPa (gage pressure), the likelihood that the resulting second-step expanded particles will agglomerate decreases. Note that, in a case where the second-step expanded particles agglomerate, the resulting second-step expanded particles may not be capable of being subjected to subsequent in-mold foam molding.

It is desirable to adjust as appropriate the internal pressure of the nitrogen, air, carbon dioxide, or the like impregnated in the first-step expanded particles, in consideration of the expansion ratio of the second-step expanded particles and the steam pressure of the second-step expansion process. The internal pressure of the nitrogen, air, carbon dioxide, or the like impregnated in the first-step expanded particles is preferably not less than 0.2 MPa (absolute pressure) and not more than 0.6 MPa (absolute pressure).

In a case where the internal pressure of the nitrogen, air, carbon dioxide, or the like impregnated in the first-step expanded particles is not less than 0.2 MPa (absolute pressure), steam having high pressure is not needed to improve the expansion ratio. This reduces the likelihood that the second-step expanded particles will agglomerate. In a case where the internal pressure of the nitrogen, air, carbon dioxide, or the like impregnated in the first-step expanded particles is not more than 0.6 MPa (absolute pressure), the likelihood that the second-step expanded particles will become an open-cell foam decreases. This reduces the likelihood of a decrease in the rigidity (such as compressive strength) of the in-mold foamed molded product which is ultimately obtained. Note that an open-cell foam can also be described as having cells in communication with each other.

The polyolefin-based resin expanded particles in accordance with an embodiment of the present invention preferably have a shape which is spherical or substantially spherical, in consideration of the ability of the polyolefin-based resin expanded particles to fill a mold when used in in-mold foam molding. Note, however, that the shape of the polyolefin-based resin expanded particles is not limited to being spherical or substantially spherical. For example, there are cases in which a polyolefin-based resin in-mold foamed molded product is intentionally produced in a manner so as to have gaps therein, in order to impart sound absorbency and/or permeability to the polyolefin-based resin in-mold foamed molded product. In such cases, it is possible to utilize polyolefin-based resin expanded particles having a cylindrical shape, elliptical shape, rectangular parallelepiped shape, or a tube shape (straw shape).

In a case where the polyolefin-based resin expanded particles in accordance with an embodiment of the present invention have a spherical or substantially spherical shape, the average diameter (also called average particle diameter) of the polyolefin-based resin expanded particles is not particularly limited. The average diameter of the polyolefin-based resin expanded particles in accordance with an embodiment of the present invention may change depending on, for example, (i) the size of the polyolefin-based resin particles prior to expansion and (ii) the expansion ratio, but is preferably not less than 0.5 mm and not more than 10 mm, more preferably not less than 1 mm and not more than 7 mm, and even more preferably not less than 2 mm and not more than 5 mm. Here, the average diameter of the polyolefin-based resin expanded particles refers to the arithmetic mean value of measured diameters of 20 arbitrarily selected polyolefin-based resin expanded particles.

In a case where the average diameter of the polyolefin-based resin expanded particles in accordance with an embodiment of the present invention is not less than 0.5 mm, this results in favorable workability during in-mold foam molding using the polyolefin-based resin expanded particles. In a case where the average diameter is not more than 10 mm, the following advantage is obtained: there are no limitations to the shape of the polyolefin-based resin in-mold foamed molded product during in-mold foam molding using the polyolefin-based resin expanded particles. Note that limitations to the shape of the molded product refers to, for example, cases where it becomes impossible to produce a polyolefin-based resin in-mold foamed molded product having thin portions.

The polyolefin-based resin expanded particles in accordance with an embodiment of the present invention have an average particle weight which is approximately the same as that of the polyolefin-based resin particles used to produce the polyolefin-based resin expanded particles. The average particle weight of the polyolefin-based resin expanded particles is preferably not less than 0.1 mg/particle and not more than 100 mg/particle, and more preferably not less than 0.3 mg/particle and not more than 10 mg/particle. Here, the average particle weight of the polyolefin-based resin expanded particles refers to the arithmetic mean value of measured weights of 10 arbitrarily selected polyolefin-based resin expanded particles

The expansion ratio of the polyolefin-based resin expanded particles in accordance with an embodiment of the present invention is preferably not less than 2 times and not more than 60 times, and more preferably not less than 3 times and not more than 40 times. In order to achieve a reduction in weight of a molded product, the expansion ratio of the present expanded particles is preferably not less than 3 times and not more than 34 times, more preferably not less than 6 times and not more than 32 times, even more preferably not less than 9 times and not more than 31 times, particularly preferably not less than 12 times and not more than 31 times.

In a DSC curve obtained by measuring the quantity of heat of polyolefin-based resin expanded particles via DSC, the polyolefin-based resin expanded particles in accordance with an embodiment of the present invention preferably have two or more melting peaks derived from a polyolefin-based resin. Such polyolefin-based resin expanded particles having two or more melting peaks can be produced via a known method.

Note that the DSC curve of the polyolefin-based resin expanded particles refers to a curve obtained via DSC in which 5 mg to 6 mg of the polyolefin-based resin expanded particles at a temperature of 40°C are heated to 220°C at a temperature increase rate of 10°C/minute. In such a DSC curve, there may be endothermic peaks derived from the component (b), the component (c), the component (d), the component (e), the component (f), the component (g), and/or the like which can be contained in the polyolefin-based resin particles, in accordance with the amounts of the respective components added.

[4. Polyolefin-based resin in-mold foamed molded product]

A polyolefin-based resin in-mold foamed molded product in accordance with an embodiment of the present invention (such a molded product may be referred to as "present molded product") can be produced by a typical method in which polyolefin-based resin expanded particles are subjected to in-mold foam molding. The polyolefin-based resin in-mold foamed molded product in accordance with an embodiment of the present invention is preferably a polyolefin-based resin in-mold foamed molded product obtained by subjecting, to in-mold foam molding, the polyolefin-based resin expanded particles described in the section "2. Polyolefin-based resin expanded particles". Since the present molded product has the above configuration, the molded product is less prone to cracking and chipping when recovered from a mold and is excellent in strength. Furthermore, the above configuration also provides the following advantage: the resulting polyolefin-based resin in-mold foamed molded product is excellent in colorability with no color unevenness. Furthermore, since the present molded product has the above configuration, the present molded product has the following advantage: the present molded product is high quality and has excellent mold release properties.

During in-mold foam molding in the production of the present molded product, a mold comprised of (i) a movable mold that can be driven and (ii) a stationary mold that cannot be driven can be used. The present molded product preferably includes at least one selected from the group consisting of (a) a first area in which the movable mold used in in-mold foam molding protrudes into the polyolefin-based resin in-mold foamed molded product along the thickness direction of the polyolefin-based resin in-mold foamed molded product; and (b) a second area in which the polyolefin-based resin in-mold foamed molded product protrudes into the movable mold along the thickness direction.

The following description will discuss a molded product that includes at least one selected from the group consisting of the first area and the second area (such a molded product may be hereinafter referred to as "molded product A"). In a case where typical polyolefin-based resin expanded particles are used, the molded product A is difficult to eject from a mold, especially from a movable mold, in many cases during the production, as compared to the production of a molded product that does not include at least one selected from the group consisting of the first area and the second area. In a case where polyolefin-based resin expanded particles in accordance with an embodiment of the present invention are used, the molded product A is excellent in mold release properties despite having the above-described shape.

The following description will specifically discuss an example of the molded product A with reference to Figs. 1 and 2. (a) of Fig. 1 is a perspective view of a polyolefin-based resin in-mold foamed molded product 10 in accordance with an embodiment of the present invention seen from a certain direction. (a) of Fig. 2 is a perspective view of a polyolefin-based resin in-mold foamed molded product 20 in accordance with an embodiment of the present invention seen from a certain direction. (b) of Fig. 1 and (b) of Fig. 2 are plan views of (a) of Fig. 1 and (a) of Fig. 2 seen along Z direction.

In (a) of Fig. 1 and (a) of Fig. 2, thin solid lines and thin dashed lines (hereinafter may be collectively referred to as thin lines) represent a portion formed with a stationary mold, whereas thick solid lines and thick dashed lines (hereinafter may be collectively referred to as thick lines) represent a portion formed with a movable mold. Note that the

**EP 3 862 386 A1**

stationary mold may be referred to as "concave mold", and the movable mold may be referred to as "convex mold". Furthermore, a portion formed with a stationary mold can also be described as a portion that makes contact with a stationary mold, whereas a portion formed with a movable mold can also be described as a portion that makes contact with a movable mold. In each of Figs. 1 and 2, the X direction is the thickness direction of the polyolefin-based resin in-mold foamed molded product 10 or 20. A part of each of the polyolefin-based resin in-mold foamed molded products 10 and 20 located downstream in the X direction is formed with a stationary mold, and a part of each of the polyolefin-based resin in-mold foamed molded products 10 and 20 located upstream in the X direction is formed with a movable mold. That is, the movable mold can be driven along the X direction and open and close the mold. Thus, the X direction can also be described as the direction along which a mold is driven (direction along which the movable mold travels).

The polyolefin-based resin in-mold foamed molded product 10 includes a first area 1. As illustrated in Fig. 1, the first area 1 of the polyolefin-based resin in-mold foamed molded product 10 is an area where the movable mold protrudes into the molded product beyond the boundary surface between the stationary mold and the movable mold. In other words, the first area 1 can also be described as a recess formed with the movable mold, and can also be described as a recess represented by thick lines. The dimensions and shape of the first area 1 are not particularly limited.

The polyolefin-based resin in-mold foamed molded product 20 includes a second area 2. As illustrated in Fig. 2, the second area 2 of the polyolefin-based resin in-mold foamed molded product 20 is an area where the molded product protrudes into the movable mold beyond the boundary surface between the stationary mold and the movable mold. In other words, the second area 2 can also be described as a protrusion formed with the movable mold, and can also be described as a protrusion represented by thick lines. The dimensions and shape of the second area 2 are not particularly limited.

It is more preferable that the present molded product include (i) a first area in which the movable mold used in in-mold foam molding protrudes into the polyolefin-based resin in-mold foamed molded product along the thickness direction of the polyolefin-based resin in-mold foamed molded product and (ii) a second area in which the polyolefin-based resin in-mold foamed molded product protrudes into the movable mold along the thickness direction. A molded product having a more complex shape is more difficult to eject from a mold, especially from a movable mold, during the production of that molded product. An embodiment of the present invention can be suitably used for such a molded product having a complex shape.

The molded product A has at least two different thicknesses. The "thickness of a molded product" can also be described as a "dimension of a molded product in X direction". For example, each of the polyolefin-based resin in-mold foamed molded products 10 and 20 has three different thicknesses. The present molded product preferably has at least two different thicknesses, more preferably at least three different thicknesses, each along the direction along which the mold is driven (direction along which the movable mold travels). A molded product having more thicknesses is more difficult to eject from a mold, especially from a movable mold, during the production of that molded product. An embodiment of the present invention can be suitably used for a molded product having a plurality of different thicknesses.

It is preferable that: the present molded product include a first area in which the movable mold used in in-mold foam molding protrudes into the polyolefin-based resin in-mold foamed molded product along the thickness direction of the polyolefin-based resin in-mold foamed molded product; and the smallest thickness $H_1$ of the polyolefin-based resin in-mold foamed molded product in the first area is more than 0 mm and not more than 10 mm.

The following description will discuss a molded product which includes a first area and in which the smallest thickness $H_1$ of the molded product in the first area is more than 0 mm and not more than 10 mm (such a molded product may be hereinafter referred to as "molded product B"). In a case where typical polyolefin-based resin expanded particles are used, the molded product B is difficult to eject from a mold, especially from a movable mold, in many cases during the production of the molded product B, as compared to the production of a molded product that includes no first area or that includes a first area in which the smallest thickness $H_1$ of the molded product is more than 10 mm. In a case were polyolefin-based resin expanded particles in accordance with an embodiment of the present invention are used, the molded product B is excellent in mold release properties despite having the above-described shape.

The following description will specifically discuss an example of the molded product B with reference to Figs. 3 and 4. (a) of Fig. 3 is a perspective view of a polyolefin-based resin in-mold foamed molded product 30 in accordance with an embodiment of the present invention seen from a certain direction. (b) of Fig. 3 is a cross-sectional view taken along line A-A in (a) of Fig. 3. (a) of Fig. 4 is a perspective view of a polyolefin-based resin in-mold foamed molded product 40 in accordance with an embodiment of the present invention seen from a certain direction. (b) of Fig. 4 is a cross-sectional view taken along line B-B in (a) of Fig. 4.

The polyolefin-based resin in-mold foamed molded product 30 includes first areas 1', which occupy a small part of the polyolefin-based resin in-mold foamed molded product 30. The polyolefin-based resin in-mold foamed molded product 40 includes a first area 1', which occupies a large part of the polyolefin-based resin in-mold foamed molded product 40. The smallest thickness $H_1$ of each of the polyolefin-based resin in-mold foamed molded products 30 and 40 in the first area(s) 1 is not more than 10 mm. The "thickness of a molded product in a first area" can also be described as the thickness of a molded product corresponding to a location where the first area is provided, as illustrated in Figs.

25

3 and 4.

For example, it is more preferable that (i) the molded product B have a first area (in which the movable mold used in in-mold foam molding protrudes into the polyolefin-based resin in-mold foamed molded product) that is spaced inwardly (toward the interior of the molded product) by not less than 5 mm from the edge of a face, perpendicular to the thickness direction, of the molded product and (ii) the smallest thickness $H_1$ of the polyolefin-based resin in-mold foamed molded product in the first area is more than 0 mm and not more than 10 mm.

It is preferable that the present molded product be configured such that the ratio of $H_2$ to $L_1$, i.e., the ratio $H_2/L_1$, satisfies the foregoing expression (1), where (a) $H_2$ is the maximum dimension in the thickness direction of a projection obtained by shining light to the polyolefin-based resin in-mold foamed molded product in a direction perpendicular to the thickness direction of the polyolefin-based resin in-mold foamed molded product and (b) $L_1$ is the distance between the most distant two points on a projection obtained by shining light to the polyolefin-based resin in-mold foamed molded product in the thickness direction.

The present molded product has good mold release properties not only when ejected from the movable mold but also when ejected from the stationary mold. The following description will discuss a molded product in which the foregoing ratio of $H_2$ to $L_1$, i.e., the ratio $H_2/L_1$, satisfies the foregoing expression (1) (such a molded product may be hereinafter referred to as "molded product C"). In a case where typical polyolefin-based resin expanded particles are used, the molded product C is difficult to eject from a mold, especially from a stationary mold, in many cases during the production of the molded product C, as compared to the production of a molded product in which the ratio $H_2/L_1$ does not satisfy the foregoing expression (1). In a case where polyolefin-based resin expanded particles in accordance with an embodiment of the present invention are used, the molded product C is excellent in mold release properties despite having the above-described shape.

The following description will specifically discuss examples of the foregoing $H_2$ and $L_1$, with reference to Figs. 5 and 6. (a) of Fig. 5 is a perspective view of a polyolefin-based resin in-mold foamed molded product 50 in accordance with an embodiment of the present invention seen from a certain direction. (a) of Fig. 6 is a perspective view of a polyolefin-based resin in-mold foamed molded product 60 in accordance with an embodiment of the present invention seen from a certain direction. (b) of Fig. 5 and (b) of Fig. 6 are each a projection obtained by shining light in Z direction in (a) of Fig. 5 or (a) of Fig. 6. (c) of Fig. 5 and (c) of Fig. 6 are each a projection obtained by shining light in X direction in (a) of Fig. 5 or (a) of Fig. 6. In Figs. 5 and 6, constituent elements etc. having functions equivalent to those in Fig. 1 are assigned the same reference signs or expressed by the same terms, and descriptions therefor are omitted.

The polyolefin-based resin in-mold foamed molded product 50 includes a first area 1 which is located at one end of the polyolefin-based resin in-mold foamed molded product 50 in Y direction. The polyolefin-based resin in-mold foamed molded product 60 includes a first area 1 which is located at the bottom surface (bottom) of the polyolefin-based resin in-mold foamed molded product 60.

(b) of Fig. 5 illustrates an example of a projection obtained by shining light to the polyolefin-based resin in-mold foamed molded product 50 in a direction perpendicular to the thickness direction (X direction) of the polyolefin-based resin in-mold foamed molded product 50. (b) of Fig. 6 illustrates an example of a projection obtained by shining light to the polyolefin-based resin in-mold foamed molded product 60 in a direction perpendicular to the thickness direction (X direction) of the polyolefin-based resin in-mold foamed molded product 60.

As illustrated in (b) of Fig. 5 and (b) of Fig. 6, $H_2$ is the maximum dimension in the thickness direction of a projection obtained by shining light to a molded product in a direction perpendicular to the thickness direction of the molded product. The phrase "the maximum dimension in the thickness direction of a projection" can also be described as below: "the distance, in the thickness direction, between (i) a plane that touches the topmost point in the thickness direction of the projection (such a point can also be described as "one of the distal points") and that is perpendicular to the thickness direction and (ii) a plane that touches the bottommost point in the thickness direction of the projection (such a point can also be described as "the other of the distal points") and that is perpendicular to the thickness direction". The plane that touches the topmost point can also be described as a plane that contains the topmost point, whereas the plane that touches the bottommost point can also be described as a plane that contains the bottommost point. Furthermore, $L_1$ is the distance between the most distant two points on a projection obtained by shining light to a molded product in the direction of the thickness direction (X direction) ((c) of Fig. 5 or (c) of Fig. 6).

It is preferable that the present molded product be configured such that the ratio of $H_3$ to $L_2$, i.e., the ratio $H_3/L_2$, satisfies the foregoing expression (2), where (a) $H_3$ is the maximum distance, in the thickness direction, between a pair of faces opposite each other in the thickness direction and (b) $L_2$ is the distance between the most distant two points in a region R of a projection obtained by shining light to the polyolefin-based resin in-mold foamed molded product in the thickness direction. The region R corresponds to a part of the polyolefin-based resin in-mold foamed molded product in which part the $H_3$ is present. In a case where the molded product has a plurality of pairs of faces opposite each other in the thickness direction, the $H_3$, i.e., "the maximum distance, in the thickness direction, between a pair of faces opposite each other in the thickness direction", means the largest one of the maximum distances each between a pair of faces opposite each other in the thickness direction.

The following description will discuss a molded product in which the foregoing ratio of $H_3$ to $L_2$, i.e., the ratio $H_3/L_2$, satisfies the foregoing expression (2) (such a molded product may be hereinafter referred to as "molded product D"). In a case where typical polyolefin-based resin expanded particles are used, the molded product D is difficult to eject from a mold, especially from a stationary mold, in many cases during the production, as compared to the production of a molded product in which the ratio $H_3/L_2$ does not satisfy the foregoing expression (2). In a case where polyolefin-based resin expanded particles in accordance with an embodiment of the present invention are used, the molded product D is excellent in mold release properties, despite having the above-described shape.

The following description will specifically discuss examples of the $H_3$ and $L_2$ with reference to Fig. 7. (a) of Fig. 7 is a perspective view of a polyolefin-based resin in-mold foamed molded product 70 in accordance with an embodiment of the present invention seen from a certain direction. (b) of Fig. 7 is a plan view of (a) of Fig. 7 seen along Z direction. (c) of Fig. 7 is a projection obtained by shining light in X direction in (a) of Fig. 7. In Fig. 7, constituent elements etc. having functions equivalent to those in Fig. 1 are assigned the same reference signs or expressed by the same terms, and descriptions therefor are omitted.

The polyolefin-based resin in-mold foamed molded product 70 includes a first area 1 which contains one end of the polyolefin-based resin in-mold foamed molded product 70 in Y direction.

As illustrated in (b) of Fig. 7, $H_3$ is the maximum distance, in the thickness direction, between a pair of faces opposite each other in the thickness direction. The phrase "pair of faces opposite each other in the thickness direction" can also be described as "two faces which contain respective areas (or points) which are present on a single straight line in the thickness direction". With regard to the polyolefin-based resin in-mold foamed molded product 70, the pair of faces opposite each other, the distance between which is the maximum distance $H_3$, are each perpendicular to the thickness direction. Each of the pair of faces opposite each other, the distance between which is the maximum distance $H_3$, may not be perpendicular to the thickness direction.

In the projection illustrated in (c) of Fig. 7, the region R is hatched. In (c) of Fig. 7, the hatched region (region R) corresponds to a part of the polyolefin-based resin in-mold foamed molded product 70 in which part $H_3$ is present. As illustrated in (c) of Fig. 7, $L_2$ is the distance between the most distant two points in the region R of a projection obtained by shining light to the polyolefin-based resin in-mold foamed molded product 70 in the thickness direction.

It is preferable that the present molded product further include a frame member molded together with polyolefin-based resin expanded particles.

The following description will discuss a molded product that further includes a frame member molded together with polyolefin-based resin expanded particles (such a molded product may be hereinafter referred to as "molded product E"). In a case where typical polyolefin-based resin expanded particles are used, the molded product E undergoes cracking and chipping when recovered from a mold in many cases during the production, as compared to the production of a molded product that does not include a frame member molded together with polyolefin-based resin expanded particles. This is because a molded product further including a frame member molded together with polyolefin-based resin expanded particles is heavier than a molded product that does not include a frame member molded together with polyolefin-based resin expanded particles. In a case where polyolefin-based resin expanded particles in accordance with an embodiment of the present invention are used, the molded product E is less prone to cracking and chipping when recovered from a mold, despite having the above-described shape.

Furthermore, the molded product E is difficult to eject from a mold, e.g., from a movable mold, in many cases during the production, as compared to the production of a molded product that does not include a frame member molded together with polyolefin-based resin expanded particles. In a case where polyolefin-based resin expanded particles in accordance with an embodiment of the present invention are used, the molded product E is excellent in mold release properties, despite having the above-described shape.

The following description will specifically discuss an example of the molded product E with reference to Fig. 8. (a) of Fig. 8 is a perspective view of a polyolefin-based resin in-mold foamed molded product 80 in accordance with an embodiment of the present invention seen from a certain direction. (b) of Fig. 8 is a plan view of (a) of Fig. 8 seen along Y direction. (c) of Fig. 8 is a plan view of (a) of Fig. 8 seen along X direction. In Fig. 8, constituent elements etc. having functions equivalent to those in Fig. 1 are assigned the same reference signs or expressed by the same terms, and descriptions therefor are omitted.

The polyolefin-based resin in-mold foamed molded product 80 illustrated in Fig. 8 includes: a body 3 composed of a polyolefin-based resin in-mold foamed molded product; and a frame member 4. The frame member 4 is molded together with the body 3.

The frame member 4 is not particularly limited, and a variety of materials can be used for the frame member 4. Examples of the frame member 4 include metals, engineering plastics, inorganic fibers (carbon fiber, glass fiber, and the like), fiber reinforced plastics (carbon fiber reinforced plastics, glass fiber reinforced plastics, and the like), and fiber reinforced metals. The shape of the frame member 4 can be, for example, a linear shape, a rod shape, a tubular shape, or the like; however, the shape of the frame member 4 is not limited to such shapes.

The polyolefin-based resin in-mold foamed molded product 80, which includes: a body 3 composed of a polyolefin-based resin in-mold foamed molded product; and a frame member 4 molded together with the body 3, like that illustrated in Fig. 8, can be, for example, a core material for automotive seats.

[5. Method of producing polyolefin-based resin in-mold foamed molded product]

A method of producing a polyolefin-based resin in-mold foamed molded product is not particularly limited. Examples of methods for filling the polyolefin-based resin expanded particles into a form such as a mold when the polyolefin-based resin expanded particles are used in in-mold foam molding include the following mold-filling methods (A) to (C):

(A) A method in which a mold is filled with polyolefin-based resin expanded particles that have been imparted in advance with the ability to expand by impregnating an inorganic gas such as nitrogen, air, or carbon dioxide into the polyolefin-based resin expanded particles (i.e., giving internal pressure to the particles).
(B) A method in which a mold is filled with polyolefin-based resin expanded particles that have not been given internal pressure (i.e., in which the internal pressure is left approximately the same as atmospheric pressure).
(C) A method in which the polyolefin-based resin expanded particles are compressed by e.g. a carrying gas (which may be nitrogen or carbon dioxide) when being filled into the mold, so that the internal pressure of the polyolefin-based resin expanded particles is increased simultaneously with filling into a mold. These methods may also be used in combination, and it is possible to use conventionally known mold-filling methods other than these methods.

In an embodiment of the present invention, examples of methods of producing a polyolefin-based resin in-mold foamed molded product from polyolefin-based resin expanded particles encompass a method including the following steps (i) through (iv). (i) Filling the polyolefin-based resin expanded particles into a mold in a state where the mold is somewhat open, the mold being closeable but not sealable. (ii) Fusing the polyolefin-based resin expanded particles together by heating the polyolefin-based resin expanded particles with use of a heating medium such as steam having a heating steam pressure of approximately 0.05 MPa (gage pressure) to approximately 0.5 MPa (gage pressure), for a period of approximately 3 seconds to approximately 30 seconds. (iii) Water-cooling the mold to a degree that allows reduced deformation of the polyolefin-based resin in-mold foamed molded product after the molded product is removed from the mold. (iv) Opening the mold, and removing therefrom the polyolefin-based resin in-mold foamed molded product. Note that, with regard to the "state where the mold is somewhat open" in step (i), the width to which the mold is opened prior to filling the polyolefin-based resin expanded particles is referred to as a mold gap.

In an embodiment of the present invention, a method of producing a polyolefin-based resin in-mold foamed molded product may be as follows. Specifically, a method of producing a polyolefin-based resin in-mold foamed molded product in accordance with an embodiment of the present invention is a method of producing a polyolefin-based resin in-mold foamed molded product with use of a mold, in which the mold includes a stationary mold and a movable mold that is capable of being driven, and the method includes the step of expelling a gas from the movable mold at a pressure of not higher than 0.11 MPa (gage pressure) when ejecting a polyolefin-based resin in-mold foamed molded product, obtained by subjecting polyolefin-based resin expanded particles to in-mold foam molding, from the movable mold. Such a "method of producing a polyolefin-based resin in-mold foamed molded product in accordance with an embodiment of the present invention" may be simply referred to as "the present production method". In the present production method, the polyolefin-based resin expanded particles are preferably the polyolefin-based resin expanded particles described in the section "2. Polyolefin-based resin expanded particles".

The present production method includes the above features, and therefore is capable of providing a polyolefin-based resin in-mold foamed molded product with excellent quality and mold release properties at high production efficiency. Specifically, in the present production method, the pressure of a gas expelled from the movable mold when the obtained molded product is ejected from the movable mold (such a pressure may be hereinafter referred to as "air pressure") is low, i.e., not higher than 0.11 MPa, and therefore the present production method can be described as a production method with high production efficiency. In the present production method, it is possible to eject the obtained molded product from the movable mold and keep it in the stationary mold, despite a low air pressure of not higher than 0.11 MPa. This makes it possible to easily eject the polyolefin-based resin in-mold foamed molded product from the stationary mold.

The present production method can be suitably used to produce the present molded product described in the section "4. Polyolefin-based resin in-mold foamed molded product". In other words, the present molded product described in the section "4. Polyolefin-based resin in-mold foamed molded product" can be produced by the present production method.

The following description will specifically discuss in-mold foam molding of polyolefin-based resin expanded particles in the present production method. The in-mold foam molding involves, for example: step "a" of filling polyolefin-based resin expanded particles into a mold cavity formed by a movable mold and a stationary mold by driving the movable mold and closing a mold; and step b of fusing, within the mold cavity, the polyolefin-based resin expanded particles filled in the mold cavity. The step "a" involves filling polyolefin-based resin expanded particles into a mold cavity formed by a movable mold and a stationary mold. In the step "a", the mold cavity is formed such that the movable mold and the stationary mold are not in contact with each other and have a slight gap therebetween, by driving the movable mold such that the movable mold makes contact with the stationary mold. The phrase "such that the movable mold and the stationary mold are not in contact with each other and have a slight gap therebetween" can also be described as "such that the mold is closeable but not sealed" or "such that the mold is somewhat open". The distance between the movable mold and the stationary mold in the mold cavity prior to filling the polyolefin-based resin expanded particles, in other words, the width to which the mold is opened, may be referred to as a mold gap.

Examples of methods for filling the polyolefin-based resin expanded particles into a mold cavity in the step "a" include the following filling methods (a1) to (a3):

(a1) A method in which a mold cavity is filled with polyolefin-based resin expanded particles that have been imparted in advance with the ability to expand by impregnating an inorganic gas such as nitrogen, air, or carbon dioxide into the polyolefin-based resin expanded particles (i.e., giving internal pressure to the particles).
(a2) A method in which a mold cavity is filled with polyolefin-based resin expanded particles that have not been given internal pressure (i.e., in which the internal pressure is left approximately the same as atmospheric pressure).
(a3) A method in which the polyolefin-based resin expanded particles are compressed by e.g. a carrying gas (which may be nitrogen or carbon dioxide) when being filled into the mold cavity, so that the internal pressure of the polyolefin-based resin expanded particles is increased simultaneously with filling of the polyolefin-based resin expanded particles into the mold cavity.

These methods for filling polyolefin-based resin expanded particles into a mold cavity may also be used in combination, and it is possible to use conventionally known filling methods other than these methods.

In the step b, for example, the polyolefin-based resin expanded particles filled in the mold cavity are heated with use of a heating medium such as steam, thereby fusing the polyolefin-based resin expanded particles filled in the mold. This gives a polyolefin-based resin in-mold foamed molded product.

A method of heating using steam in the step b is not particularly limited, and can be, for example, a method involving carrying out heating with use of steam having a heating steam pressure of approximately 0.05 MPa (gage pressure) to approximately 0.5 MPa (gage pressure), for a period of approximately 3 seconds to approximately 30 seconds.

The present production method may further include a step of cooling the mold before the polyolefin-based resin in-mold foamed molded product obtained via in-mold foam molding is ejected from the movable mold. When the present production method includes the step of cooling the mold, it is possible to prevent or reduce the deformation of the obtained molded product after the molded product is removed from the mold. The method of cooling the mold is not particularly limited, and can be, for example, a method involving cooling with water (water cooling).

The present production method includes the step of expelling a gas from the movable mold at a pressure of not higher than 0.11 MPa (gage pressure) when ejecting the obtained molded product from the movable mold. In this step, a method of expelling a gas from the movable mold is not particularly limited. For example, the following configuration may be employed: the movable mold includes a gas expelling section (not illustrated); and a gas is expelled from the gas expelling section. This step makes it possible to eject the obtained molded product from the movable mold and keep it in the stationary mold.

The molded product kept in the stationary mold can then be ejected from the stationary mold. A method of ejecting the molded product from the stationary mold is not particularly limited. For example, the following configuration may be employed: the stationary mold includes an ejecting member (not illustrated); and the molded product is ejected from the stationary mold by pressing the molded product with the ejecting member.

A method of obtaining a polyolefin-based resin in-mold foamed molded product from the present expanded particles described in the section "2. Polyolefin-based resin expanded particles" is not limited to the present production method described above, and can be, for example, a typical in-mold foam molding method. A polyolefin-based resin in-mold foamed molded product obtained from the present expanded particles described in the section "2. Polyolefin-based resin expanded particles" by an in-mold foam molding method other than the present production method described above is also an embodiment of the present invention, and can be described as the present molded product. Even in a case where an in-mold foam molding method other than the present production method is used, a polyolefin-based resin in-mold foamed molded product that is excellent in quality and mold release properties can be obtained, provided that the polyolefin-based resin expanded particles described in the section "2. Polyolefin-based resin expanded particles" are used.

The present molded product obtained in this manner can be used suitably for a variety of applications, such as shock-absorbing packing materials, shipping materials, thermal insulating materials, civil engineering and construction materials, and automotive components.

An embodiment of the present invention may be composed as follows.

[X1] Polyolefin-based resin expanded particles containing: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), in which the polyolefin-based resin (a) has a flexural rigidity, measured in accordance with JIS K7106, of more than 8000 kg/cm$^2$ and not more than 13500 kg/cm$^2$, and the ethylene-based copolymer (c) contains, as structural units: a structural unit (c1) derived from ethylene; and at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

[X2] The polyolefin-based resin expanded particles described in [X1], in which the ethylene-based copolymer (c) is an ethylene-ethyl (meth)acrylate-butyl (meth)acrylate-2-hydroxypropyl (meth)acrylate-styrene copolymer.

[X3] The polyolefin-based resin expanded particles described in [X1] or [X2], in which: the ethylene-based copolymer (c) is a graft copolymer comprised of a copolymer constituting a main chain and a copolymer constituting a side chain; the copolymer constituting the main chain is an ethylene-ethyl (meth)acrylate copolymer; and the copolymer constituting the side chain is a butyl (meth)acrylate-2 -hydroxypropyl (meth) acrylate-styrene copolymer.

[X4] The polyolefin-based resin expanded particles described in any one of [X1] to [X3], further containing not less than 0.2 parts by weight and not more than 5.0 parts by weight of a copolymer (d), the copolymer (d) containing, as structural units: a structural unit (d1) derived from ethylene; and at least one type of structural unit (d2) derived from at least one type of vinyl monomer.

[X5] The polyolefin-based resin expanded particles described in any one of [X1] to [X4], further containing not less than 0.2 parts by weight and not more than 5.0 parts by weight of an olefin-based elastomer (e).

[X6] The polyolefin-based resin expanded particles described in any one of [X1] to [X5], further containing not less than 0.01 parts by weight and not more than 2.00 parts by weight of an acrylate-based copolymer (f), the acrylate-based copolymer (f) containing, as structural units, at least two types of structural units respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

[X7] A polyolefin-based resin in-mold foamed molded product obtained by subjecting polyolefin-based resin expanded particles described in any one of [X1] to [X6] to in-mold foam molding.

[X8] The polyolefin-based resin in-mold foamed molded product described in [X7], further including a frame member molded together with the polyolefin-based resin expanded particles.

[X9] A method of producing polyolefin-based resin expanded particles, including the steps of: obtaining a dispersion slurry, which includes (i) an aqueous dispersion medium and (ii) polyolefin-based resin particles and an inorganic blowing agent which are dispersed in the aqueous dispersion medium, by mixing the polyolefin-based resin particles, the aqueous dispersion medium, and the inorganic blowing agent in a pressure-resistant vessel; and obtaining polyolefin-based resin expanded particles by raising a temperature and a pressure inside the pressure-resistant vessel and then expelling the dispersion slurry from the pressure-resistant vessel into an area having a pressure lower than the raised pressure inside the pressure-resistant vessel, so that the polyolefin-based resin particles are expanded, in which the polyolefin-based resin particles contain: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), the polyolefin-based resin (a) has a flexural rigidity, measured in accordance with JIS K7106, of more than 8000 kg/cm$^2$ and not more than 13500 kg/cm$^2$, and the ethylene-based copolymer (c) contains, as structural units: a structural unit (c1) derived from ethylene; and at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

An embodiment of the present invention may be composed as follows.

[Y1] Polyolefin-based resin expanded particles containing: 100 parts by weight of a polyolefin-based resin (a); not less than 0.1 parts by weight and less than 2.5 parts by weight of a higher fatty acid amide (b); not less than 0.01 parts by weight and not more than 5.00 parts by weight of an ethylene-based copolymer (c); and not less than 0.01 parts by weight and not more than 10.00 parts by weight of a coloring agent (g), in which the ethylene-based copolymer (c) is a copolymer obtained by polymerizing a composition that contains: ethylene (c1); and at least two types of vinyl monomers (c2) selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

[Y2] The polyolefin-based resin expanded particles described in [Y1], in which the ethylene-based copolymer (c) is an ethylene-ethyl (meth)acrylate-butyl (meth)acrylate-2-hydroxypropyl (meth)acrylate-styrene copolymer.

[Y3] The polyolefin-based resin expanded particles described in [Y1] or [Y2], in which: the ethylene-based copolymer (c) is a graft copolymer comprised of a copolymer constituting a main chain and a copolymer constituting a side chain; the copolymer constituting the main chain is an ethylene-ethyl (meth)acrylate copolymer; and the copolymer constituting the side chain is a butyl (meth)acrylate-2-hydroxypropyl (meth)acrylate-styrene copolymer.

[Y4] The polyolefin-based resin expanded particles described in any one of [Y1] to [Y3], further containing not less than 0.2 parts by weight and not more than 5.0 parts by weight of a copolymer (d), the copolymer (d) being a copolymer other than the component (c) and obtained by polymerizing a composition that contains ethylene (d1) and at least one type of vinyl monomer (d2).

[Y5] The polyolefin-based resin expanded particles described in any one of [Y1] to [Y4], further containing not less than 0.2 parts by weight and not more than 5.0 parts by weight of an olefin-based elastomer (e).

[Y6] The polyolefin-based resin expanded particles described in any one of [Y1] to [Y5], further containing not less than 0.01 parts by weight and not more than 2.00 parts by weight of an acrylate-based copolymer (f), the acrylate-based copolymer (f) being a copolymer obtained by polymerizing a composition that contains at least two types of vinyl monomers selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

[Y7] The polyolefin-based resin expanded particles described in any one of [Y1] to [Y6], in which: the coloring agent (g) is carbon black; and the amount of the coloring agent (g) contained, with respect to 100 parts by weight of the polyolefin-based resin (a), is not less than 1 part by weight and not more than 7 parts by weight.

[Y8] The polyolefin-based resin expanded particles described in any one of [Y1] to [Y7], in which the polyolefin-based resin expanded particles have an average cell diameter of more than 120 $\mu$m and not more than 350 pm.

[Y9] A polyolefin-based resin in-mold foamed molded product obtained by subjecting polyolefin-based resin expanded particles described in any one of [Y1] to [Y8] to in-mold foam molding.

[Y10] A method of producing polyolefin-based resin expanded particles including the steps of: obtaining a dispersion slurry, which includes (i) an aqueous dispersion medium and (ii) polyolefin-based resin particles and an inorganic blowing agent which are dispersed in the aqueous dispersion medium, by mixing the polyolefin-based resin particles, the aqueous dispersion medium, and the inorganic blowing agent in a pressure-resistant vessel; and obtaining polyolefin-based resin expanded particles by raising a temperature and a pressure inside the pressure-resistant vessel and then expelling the dispersion slurry from the pressure-resistant vessel into an area having a pressure lower than the raised pressure inside the pressure-resistant vessel, so that the polyolefin-based resin particles are expanded, in which the polyolefin-based resin particles contain: 100 parts by weight of a polyolefin-based resin (a); not less than 0.1 parts by weight and less than 2.5 parts by weight of a higher fatty acid amide (b); not less than 0.01 parts by weight and not more than 5.00 parts by weight of an ethylene-based copolymer (c); and not less than 0.01 parts by weight and not more than 10.00 parts by weight of a coloring agent (g), and in which the ethylene-based copolymer (c) is a copolymer obtained by polymerizing a composition that contains: ethylene (c1); and at least two types of vinyl monomers (c2) selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

An embodiment of the present invention may be composed as follows.

[Z1] Polyolefin-based resin expanded particles containing: 100 parts by weight of a polyolefin-based resin (a); not less than 0.1 parts by weight and less than 2.5 parts by weight of a higher fatty acid amide (b); and not less than 0.01 parts by weight and not more than 5.00 parts by weight of an ethylene-based copolymer (c), in which the ethylene-based copolymer (c) contains, as structural units: a structural unit (c1) derived from ethylene; and at least two types of structural units (c2) respectively derived from at least two types of vinyl monomers selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

[Z2] The polyolefin-based resin expanded particles described in [Z1], in which the ethylene-based copolymer (c) is an ethylene-ethyl (meth)acrylate-butyl (meth)acrylate-2-hydroxypropyl (meth)acrylate-styrene copolymer.

[Z3] The polyolefin-based resin expanded particles described in [Z1] or [Z2], in which: the ethylene-based copolymer (c) is a graft copolymer comprised of a copolymer constituting a main chain and a copolymer constituting a side chain; the copolymer constituting the main chain is an ethylene-ethyl (meth)acrylate copolymer; and the copolymer constituting the side chain is a butyl (meth)acrylate-2-hydroxypropyl (meth) acrylate-styrene copolymer.

[Z4] The polyolefin-based resin expanded particles described in any one of [Z1] to [Z3], further containing not less than 0.2 parts by weight and not more than 5.0 parts by weight of a copolymer (d), the copolymer (d) containing, as structural units: a structural unit (d1) derived from ethylene; and at least one type of structural unit (d2) derived from at least one type of vinyl monomer.

[Z5] The polyolefin-based resin expanded particles described in any one of [Z1] to [Z4], further containing not less than 0.2 parts by weight and not more than 5.0 parts by weight of an olefin-based elastomer (e).

[Z6] The polyolefin-based resin expanded particles described in any one of [Z1] to [Z5], further containing not less than 0.01 parts by weight and not more than 2.00 parts by weight of an acrylate-based copolymer (f), the acrylate-based copolymer (f) containing, as structural units, at least two types of structural units respectively derived from at least two types of vinyl monomers selected from methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

[Z7] A polyolefin-based resin in-mold foamed molded product obtained by subjecting polyolefin-based resin expanded particles described in any one of [Z1] to [Z6] to in-mold foam molding.

[Z8] The polyolefin-based resin in-mold foamed molded product described in [Z7], in which the polyolefin-based resin in-mold foamed molded product includes at least one selected from the group consisting of (i) a first area in which a movable mold used the in in-mold foam molding protrudes into the polyolefin-based resin in-mold foamed molded product in a thickness direction of the polyolefin-based resin in-mold foamed molded product; and (ii) a second area in which the polyolefin-based resin in-mold foamed molded product protrudes into the movable mold in the thickness direction.

[Z9] The polyolefin-based resin in-mold foamed molded product described in [Z7] or [Z8], in which: the polyolefin-based resin in-mold foamed molded product includes a first area in which a movable mold used in the in-mold foam molding protrudes into the polyolefin-based resin in-mold foamed molded product in a thickness direction of the polyolefin-based resin in-mold foamed molded product; and the smallest thickness $H_1$ of the polyolefin-based resin in-mold foamed molded product in the first area is more than 0 mm and not more than 10 mm.

[Z10] The polyolefin-based resin in-mold foamed molded product described in any one of [Z7] to [Z9], in which a ratio of $H_2$ to $L_1$, which is a ratio $H_2/L_1$, satisfies the following expression (1), where (a) $H_2$ is the maximum dimension, in a thickness direction of the polyolefin-based resin in-mold foamed molded product, of a projection obtained by shining light to the polyolefin-based resin in-mold foamed molded product in a direction perpendicular to the thickness direction and (b) $L_1$ is a distance between the most distant two points on a projection obtained by shining light to the polyolefin-based resin in-mold foamed molded product in the thickness direction:

$$(1) \quad H_2/L_1 \geq 0.2.$$

[Z11] The polyolefin-based resin in-mold foamed molded product described in any one of [Z7] to [Z10], in which a ratio of $H_3$ to $L_2$, which is a ratio $H_3/L_2$, satisfies the following expression (2), where (a) $H_3$ is the maximum distance, in a thickness direction, between a pair of faces opposite each other in the thickness direction and (b) $L_2$ is a distance between the most distant two points in a region R of a projection obtained by shining light to the polyolefin-based resin in-mold foamed molded product in the thickness direction:

$$(2) \quad H_3/L_2 \geq 0.2,$$

and

in which the region R corresponds to a part of the polyolefin-based resin in-mold foamed molded product in which part the $H_3$ is present.

[Z12] The polyolefin-based resin in-mold foamed molded product described in any one of [Z7] to [Z11], further including a frame member molded together with the polyolefin-based resin expanded particles.

[Z13] A method of producing a polyolefin-based resin in-mold foamed molded product with use of a mold, in which the mold includes a stationary mold and a movable mold that is capable of being driven, and the method includes a step of expelling a gas from the movable mold at a pressure of not higher than 0.11 MPa (gage pressure) when ejecting a polyolefin-based resin in-mold foamed molded product, obtained by subjecting polyolefin-based resin expanded particles described in any one of [Z1] to [Z6] to in-mold foam molding, from the movable mold.

Examples

Examples A

The following description will discuss an embodiment of the present invention with reference to Examples A1 to A18 and Comparative Examples A1 to A12. Note that the present invention is not limited to these Examples A.

Components and other additives used in Examples A1 to A18 and Comparative Examples A1 to A12 are as follows.

(1) Polyolefin-based resin (a) (component (a))

- Polypropylene-based resin A: ethylene-1-butene-propylene-based random copolymer; melting point of 149°C, density of 0.90 g/cm$^3$; 1-butene content of 3.8 weight% and ethylene content of 0.5 weight%; MI of 10.0 g/10 minutes; and flexural rigidity of 10000 kg/cm$^2$
- Polypropylene-based resin B: propylene homopolymer; melting point of 160°C; density of 0.90 g/cm$^3$; MI of 7.0 g/10 minutes; and flexural rigidity of 13400 kg/cm$^2$
- Polypropylene-based resin C; ethylene-propylene-based random copolymer; melting point of 143.0°C; density of 0.90 g/cm$^3$; ethylene content of 2.1 weight%; MI of 7.1 g/10 minutes; and flexural rigidity of 7800 kg/cm$^2$
- Ethylene-1-butene copolymer [manufactured by Mitsui Chemicals, Inc.]: ethylene-1-butene copolymer; 1-butene content of 7.5 weight%; viscosity average molecular weight of 2900; melting point of 102°C; and flexural rigidity of 4000 kg/cm$^2$

Note that the a polyolefin-based resin (a) used in Example A5 and Comparative Examples A4 and A5, which is a mixture of 95 parts by weight of the polypropylene-based resin A and 5 parts by weight of the ethylene-1-butene copolymer, had a flexural rigidity of more than 8000 kg/cm$^2$ and not more than 13500 kg/cm$^2$.

(2) Higher fatty acid amide (b) (Component (b))

- Erucic acid amide [Alflow P-10, manufactured by Nichiyu Corporation]
- Ethylene bis(stearic acid amide) [SLIPAX E, manufactured by Mitsubishi Chemical Corporation]
- Oleic acid amide [DIAMID O-200, manufactured by Mitsubishi Chemical Corporation]

(3) Ethylene-based copolymer (c) (component (c))

- Ethylene-based copolymer A: ethylene-ethyl acrylate-butyl acrylate copolymer
- Ethylene-based copolymer C: graft copolymer comprised of ethylene-ethyl acrylate copolymer constituting the main chain and butyl acrylate-2-hydroxypropyl methacrylate-styrene copolymer constituting a side chain

(4) Copolymer (d) (component (d))

- Copolymer A: ethylene-ethyl acrylate copolymer
- Copolymer B: ethylene-methyl methacrylate copolymer

(5) Olefin-based elastomer (e) (component (e))

- Rubber A: Ethylene-1-octene copolymer rubber

(6) Acrylate-based copolymer (f) (component (f))

- Acrylate-based copolymer A: ethyl acrylate-butyl acrylate copolymer

- Acrylate-based copolymer B: ethyl acrylate-butyl acrylate-styrene copolymer

(7) Coloring agent (g) (component (g))

- Carbon black A: average particle diameter is 35 nm
Note that with regard to the carbon black A, a carbon black masterbatch containing the carbon black A at a concentration of 40 weight% was prepared and then the carbon black masterbatch was used. The resin used in preparing the masterbatch is the same as the foregoing polypropylene-based resin A. Note that the amounts shown in Tables 1 to 4 are those of the carbon black A, not the amounts of the masterbatch.

(8) Other additives

- Expansion nucleating agent: talc [Talcan Powder PK-S, manufactured by Hayashi-Kasei Co., Ltd.]
- Water absorbing substance: glycerin [Purified glycerin D, manufactured by Lion Corporation]
- Dispersing agent: kaolin [ASP-170, manufactured by BASF]
- Dispersion auxiliary agent: sodium dodecylbenzene sulfonate [NEOPELEX G-15, manufactured by Cao Corporation]

(9) Blowing agent

- Carbon dioxide [manufactured by AIR WATER INC.]

Examples A1 to A18 and Comparative Examples A1 to A12 were evaluated as follows.

(Average particle diameter of carbon black)

A transmission electron micrograph of a cross-section of a cell film of a polyolefin-based resin expanded particle obtained was taken at a magnification of x40,000 under a transmission electron microscope. In the transmission electron micrograph obtained, the diameters (Feret diameters) of arbitrary selected 50 carbon black primary particles were measured in X and Y directions. The average of the diameters was calculated and was used as the average particle diameter of the carbon black.

(Expansion ratio of polyolefin-based resin expanded particles (first-step expanded particles and second-step expanded particles))

A weight w (g) of approximately 50 cm$^3$ (bulk volume) of polyolefin-based resin expanded particles was determined. A volume v (cm$^3$) of the polyolefin-based resin expanded particles was determined by submerging the polyolefin-based resin expanded particles in ethanol. The expansion ratio of the polyolefin-based resin expanded particles was determined from the weight w (g) and the volume v (cm$^3$) thus determined, and from the density d (g/cm$^3$) of the polyolefin-based resin (a), using the following formula:

$$\text{Expansion ratio of polyolefin-based resin expanded particles} = d \times v/w.$$

(Apparent density of polyolefin-based resin expanded particles (first-step expanded particles and second-step expanded particles))

Polyolefin-based resin expanded particles were introduced gently into a 10 L container having a wide mouth, until the container was overflowing. Thereafter, the opening of the 10 L container was scraped so as to obtain 10 L of the polyolefin-based resin expanded particles. The weight of the polyolefin-based resin expanded particles in the 10 L container was measured, and then apparent density was determined by dividing the weight by the volume of 10 L. The unit used for the apparent density was g/L.

(Average cell diameter of polyolefin-based resin expanded particles)

On an image obtained via microscopy of a cross section of a polyolefin-based resin expanded particle, a line was drawn substantially through the center of the polyolefin-based resin expanded particle. The number (n) of cells passed through by the line, and the diameter L ($\mu$m) of the polyolefin-based resin expanded particle determined from the intersections of the line and the surface of the polyolefin-based resin expanded particle, were read. The average cell diameter was determined using the following equation (1):

$$(1) \ \mathrm{Average \ cell \ diameter \ (\mu m) = L/n.}$$

(Differential scanning calorimetry DSC (measurement of quantity of heat)) on polyolefin-based resin expanded particles

A differential scanning calorimeter [DSC6200, manufactured by Seiko Instruments Inc.] was used to carry out differential scanning calorimetry DSC in which: 5 mg to 6 mg of polyolefin-based resin expanded particles at a temperature of 40°C were heated to 220°C at a temperature increase rate of 10°C/minute.

(Density of polyolefin-based resin in-mold foamed molded product)

The length, width, and thickness of a polyolefin-based resin in-mold foamed molded product (thickness: 50 mm) that was obtained were measured with calipers. From these measurements, a volume V (cm$^3$) of the polyolefin-based resin in-mold foamed molded product was calculated. Thereafter, a weight W (g) of the obtained polyolefin-based resin in-mold foamed molded product (thickness: 50 mm) was measured. The weight was divided by the volume V (cm$^3$) of the polyolefin-based resin in-mold foamed molded product so as to obtain the density of the polyolefin-based resin in-mold foamed molded product. The unit used for the density of the polyolefin-based resin in-mold foamed molded product was g/L.

(Flexural rigidity of polyolefin-based resin (a) and polyolefin-based resin composition)

The flexural rigidity of the polyolefin-based resin (a) and the flexural rigidity of each polyolefin-based resin composition (intermediate products in Examples and Comparative Examples) were measured in accordance with JIS K7106.

(Internal fusibility of polyolefin-based resin in-mold foamed molded product)

A 5 mm deep cut was made in the thickness direction in the obtained polypropylene-based resin in-mold foamed molded product with a cutter, and then the in-mold foamed molded product was torn along the cut by hand. An area of the surface resulting from the tearing, distant inwardly by 10 mm from each of the opposite surfaces of the in-mold foamed molded product in the thickness direction, was visually checked. The percentage of broken expanded particles (internally broken expanded particles), not the expanded particles separated at interfaces, was calculated. Then, internal fusibility was judged by the following criteria.
Excellent: The percentage of internally broken expanded particles was 80% or more.
Good: The percentage of internally broken expanded particles was 60% or more and less than 80%.
Poor: The percentage of internally broken expanded particles was less than 60%.
Note that the state in which the percentage of internally broken expanded particles is less than 60%, based on which the internal fusibility is judged as being poor, shows that the degree of fusion is low. In other words, the criterion based on which the internal fusibility is judged as being poor can be expressed as follows: the percentage of the surfaces of expanded particles appearing at the surface resulting from the tearing is not less than 40%.

(Color unevenness of polyolefin-based resin in-mold foamed molded product)

The surface of the obtained polyolefin-based resin in-mold foamed molded product was visually checked, and evaluated on the basis of the following criteria.
Good: The in-mold foamed molded product is uniformly black, and there is no or little intra-particle unevenness in color and there is no or little inter-particle unevenness in color in expanded particles.
Pass: The in-mold foamed molded product is black substantially uniformly, but there is a little intra-particle unevenness in color and/or there is a little inter-particle unevenness in color in expanded particles.
Fail: The in-mold foamed molded product has unevenness in black color, and black portions and obviously thinner black portions (gray portions) are seen in a mixed manner.

(Blackness of polyolefin-based resin in-mold foamed molded product as a whole)

A face measuring 300 mm (length) × 400 mm (width) of the obtained polyolefin-based resin in-mold foamed molded product was scanned with a multifunctional printer (iR-ADV C5035, manufactured by Canon Inc.) to obtain an image, and the entire area of the face measuring 300 mm × 400 mm of the molded product in the image was subjected to RGB analysis with use of image processing software (DIBAS32). The mode (measurement value), which is the sum of RGB values that appears the most in the obtained surface of the molded product, was converted into numerical form using the following equation where 0 is black (100%) and 255 is white (0%), and used as blackness.

$$\text{Blackness of in-mold foamed molded product (\%)} = (255 - \text{measurement value})/255 \times 100$$

(Punchability of polyolefin-based resin in-mold foamed molded product)

A piece of a molded product measuring about 300 mm × 250 mm × 50 mm was cut from the obtained polyolefin-based resin in-mold foamed molded product, and used as a test piece. The test piece was placed on a press blade with a blade height of 7 mm and a blade thickness of 1.0 mm such that a 300 mm × 250 mm face of the molded product made contact with the press blade, and a hydraulic pressing machine was used to punch a cut product out of the test piece by instantly pressing the test piece. With regard to the cut product which had been punched out, the edge resulted from the punching (hereinafter may be referred to as "location of blade insertion") and the appearance thereof were observed. Crushing at the location of blade insertion, cracking in the vicinity of the location of blade insertion, and the state of the cut surface of the cut product were judged on the basis of the following criteria, respectively, and the punchability of the polyolefin-based resin in-mold foamed molded product was evaluated.

Crushing at the location of blade insertion:

Excellent: There is a crushing of 0 mm to less than 0.5 mm from the surface of the molded product along the cut surface.
Good: There is a crushing of 0.5 mm to less than 1 mm from the surface of the molded product along the cut surface.
Pass: There is a crushing of 1 mm to less than 3 mm from the surface of the molded product along the cut surface.
Fail: There is a crushing of more than 3 mm from the surface of the molded product along the cut surface.
Cracking in the vicinity of the location of blade insertion:
Excellent: There is no chipping in the vicinity of the location of blade insertion, and there is no cracking in the vicinity of the location of blade insertion.
Good: There is one chip in the vicinity of the location of blade insertion per cut product, and/or there is a crack(s) of 0 cm to less than 1 cm in the vicinity of the location of blade insertion.
Pass: There are two or three chips in the vicinity of the location of blade insertion per cut product, and/or there is a crack(s) of 1 cm to less than 3 cm in the vicinity of the location of blade insertion.
Fail: There are four or more chips in the vicinity of the location of blade insertion per cut product, and/or there is a crack(s) of not less than 3 cm in the vicinity of the location of blade insertion.

The state of the cut surface:

Excellent: The cut surface is smooth.
Good: There is a fold(s) 0.1 mm to less than 1 mm in depth.
Pass: There is a fold(s) 1 mm to less than 2 mm in depth.
Fail: There is a fold(s) 2 mm or greater in depth.

(Rate of occurrence of cracking in polyolefin-based resin in-mold foamed molded product (hereinafter "crack occurrence rate"))

Fifty polyolefin-based resin in-mold foamed molded products (n = 50) were produced by a method described in the section "Preparation of polyolefin-based resin in-mold foamed molded product" (described later), in each of Examples A1 to A18 and Comparative Examples A1 to A12. The appearance of each of the fifty polyolefin-based resin in-mold foamed molded products thus obtained was checked for scratches, chips, and cracks.

The number of molded products having a scratch, a chip, and/or a crack, out of the fifty molded products, was measured (such a number is "number A"). The crack occurrence rate of a polyolefin-based resin in-mold foamed molded product was determined using the following equation:

$$\text{Crack occurrence rate (\%) of polyolefin-based resin}$$

$$\text{in-mold foamed molded product} = A/50 \times 100.$$

<Examples A1 to A18, Comparative Examples A1 to A12>

[Preparation of polyolefin-based resin particles]

The components (a) to (g) and/or other additive(s) in amounts (parts by weight) shown in Tables 1 to 4 were mixed to prepare a blended product M. It is noted here that, as described earlier, with regard to a carbon black A (which is the component (g)), a masterbatch of the carbon black A was prepared and then the masterbatch was used, but each of the amounts shown in Tables 1 to 4 is the amount of the carbon black A, not of the masterbatch. Further note that 0.05 parts by weight of talc as an expansion nucleating agent was blended in each of Examples A1 to A18 and Comparative Examples A1 to A12 with respect to 100 parts by weight of the component (a), although talc is not shown in Tables 1 to 4. Further note that, in cases where two or more types selected from the components (b), (c), (d), (e), and (f) were used in combination, a blended product granulated in the following manner was used: the components to be used were blended at a ratio shown in Tables 1 to 4 in advance to obtain a blended product; then the blended product was melted and kneaded (resin temperature of 200°C) with use of a 45 mm diameter twin-screw extruder [TEK45, manufactured by O. N. Machinery Co., Ltd.]; and the product was extruded in strands from the tip of the extruder and then cut.

Next, the blended product M was melted and kneaded (resin temperature of 210°C) with use of a 50 mm diameter extruder to obtain a polyolefin-based resin composition. The polyolefin-based resin composition was extruded in strands from the tip of the extruder and then granulated by cutting, so as to produce polyolefin-based resin particles (1.2 mg/particle). Furthermore, the polyolefin-based resin composition obtained during the production of the polyolefin-based resin particles was measured for its flexural rigidity by the foregoing method. The results thereof are shown in Tables 1 to 4.

[Table 1]

| Polyolefin - based resin particles | | | | Examples | | | | | | | | |
|---|---|---|---|---|---|---|---|---|---|---|---|---|
| | | | | A1 | A2 | A3 | A4 | A5 | A6 | A7 | A8 | A9 |
| | Component (a) | Polypropylene-based resin A | part by weight | 100 | 100 | 100 | 100 | 95 | 100 | 100 | 100 | |
| | | Polypropylene-based resin B | part by weight | | | | | | | | | 100 |
| | | Polypropylene-based resin C | part by weight | | | | | | | | | |
| | | Ethylene-1-butene copolymer | part by weight | | | | | 5 | | | | |
| | Component (b) | Erucic acid amide | part by weight | 1.0 | 1.0 | 1.0 | 1.0 | 1.0 | 1.0 | 1.0 | 1.0 | 1.0 |
| | | Ethylene bis (stearic acid amide) | part by weight | | | | | | | | | |
| | | Oleic acid amide | part by weight | | | | | | | | | |

(continued)

| | | | | Examples | | | | | | | | |
|---|---|---|---|---|---|---|---|---|---|---|---|---|
| | | | | A1 | A2 | A3 | A4 | A5 | A6 | A7 | A8 | A9 |
| | Component (c) | Ethylene-based copolymer A | part by weight | 4.00 | 4.00 | | | | 4.00 | 4.00 | 4.00 | 4.00 |
| | | Ethylene-based copolymer C | part by weight | | | 0.20 | 0.15 | 0.15 | | | | |
| | Component (d) | Copolymer A | part by weight | | | | 2.0 | 2.0 | 2.0 | 2.0 | 2.0 | |
| | | Copolymer B | part by weight | | | | | | | | | |
| | Component (e) | Rubber A | part by weight | | | | 1.0 | 1.0 | | 1.0 | 1.0 | |
| | Component (f) | Acrylate- based copolymer A | part by weight | | | | | 0.20 | | | | |
| | | Acrylate- based copolymer B | part by weight | | | | | 0.85 | | | 0.85 | |
| | Component (g) | Carbon black A | part by weight | | | | | | | | | |
| | Water absorbing substance | Glycerin | part by weight | | 0.20 | 0.20 | 0.20 | 0.20 | 0.20 | 0.20 | 0.20 | 0.20 |
| | Physical property of polyolefin - based resin composition | Flexural rigidity | kg/cm$^2$ | 9800 | 9800 | 10000 | 9900 | 9600 | 9800 | 9700 | 9600 | 13300 |

[Table 2]

| Polyolefin - based resin particles | | | | Examples | | | | | | | | |
|---|---|---|---|---|---|---|---|---|---|---|---|---|
| | | | | A10 | A11 | A12 | A13 | A14 | A15 | A16 | A17 | A18 |
| | Component (a) | Polypropylene-based resin A | part by weight | | 100 | 100 | 100 | 100 | 100 | 100 | 100 | 100 |
| | | Polypropylene-based resin B | part by weight | 100 | | | | | | | | |
| | | Polypropylene-based resin C | part by weight | | | | | | | | | |
| | | Ethylene-1-butene copolymer | part by weight | | | | | | | | | |
| | Component (b) | Erucic acid amide | part by weight | 1.0 | | | 0.1 | 2.4 | 1.0 | 1.0 | 1.0 | 1.0 |
| | | Ethylene bis (stearic acid amide) | part by weight | | 1.0 | | | | | | | |
| | | Oleic acid amide | part by weight | | | 1.0 | | | | | | |
| | Component (c) | Ethylene- based copolymer A | part by weight | 4.00 | 4.00 | 4.00 | 4.00 | 4.00 | 0.05 | 5.00 | 0.15 | 4.00 |
| | | Ethylene- based copolymer C | part by weight | | | | | | | | | |
| | Component (d) | Copolymer A | part by weight | | | | | | | | | |
| | | Copolymer B | part by weight | | | | | | | | 2.0 | |
| | Component (e) | Rubber A | part by weight | | | | | | | | 1.0 | |
| | Component (f) | Acrylate- based copolymer A | part by weight | | | | | | | | | |
| | | Acrylate- based copolymer B | part by weight | | | | | | | | | |

(continued)

| Component (g) | | | Examples | | | | | | | | | |
|---|---|---|---|---|---|---|---|---|---|---|---|---|
| | | | A10 | A11 | A12 | A13 | A14 | A15 | A16 | A17 | A18 |
| | Carbon black A | part by weight | 4.00 | | | | | | | | 2.80 |
| Water absorbing substance | Glycerin | part by weight | | 0.20 | 0.20 | 0.20 | 0.20 | 0.20 | 0.20 | 0.20 | 0.20 |
| Physical property of polyolefin-based resin composition | Flexural rigidity | kg/cm$^2$ | 13100 | 9800 | 9800 | 9800 | 9800 | 10000 | 9800 | 9700 | 9800 |

[Table 3]

| | | | | Comparative Examples | | | | | |
|---|---|---|---|---|---|---|---|---|---|
| | | | | A1 | A2 | A3 | A4 | A5 | A6 |
| Polyolefin-based resin particles | Component (a) | Polypropylene-based resin A | part by weight | 100 | 100 | 100 | 95 | 95 | 100 |
| | | Polypropylene-based resin B | part by weight | | | | | | |
| | | Polypropylene-based resin C | part by weight | | | | | | |
| | | Ethylene-1-butene copolymer | part by weight | | | | 5 | 5 | |
| | Component (b) | Erucic acid amide | part by weight | | | 1.0 | | 1.0 | |
| | | Ethylene bis (stearic acid amide) | part by weight | | | | | | |
| | | Oleic acid amide | part by weight | | | | | | |
| | Component (c) | Ethylene-based copolymer A | part by weight | | | | | | 4.00 |
| | | Ethylene-based copolymer C | part by weight | | | | | | |
| | Component (d) | Copolymer A | part by weight | | | | | | |
| | | Copolymer B | part by weight | | | | | | |
| | Component (e) | Rubber A | part by weight | | | | | | |
| | Component (f) | Acrylate-based copolymer A | part by weight | | | | | | |
| | | Acrylate-based copolymer B | part by weight | | | | | | |
| | Component (g) | Carbon black A | part by weight | | | | | | |
| | Water absorbing substance | Glycerin | part by weight | | 0.20 | 0.20 | 0.20 | 0.20 | 0.20 |
| | Physical property of polyolefin-based resin composition | Flexural rigidity | kg/cm$^2$ | 10000 | 10000 | 10000 | 9800 | 9800 | 9800 |

[Table 4]

| | | | | Comparative Examples | | | | | |
|---|---|---|---|---|---|---|---|---|---|
| | | | | A7 | A8 | A9 | A10 | A11 | A12 |
| Polyolefin-based resin particles | Component (a) | Polypropylene-based resin A | part by weight | 100 | 100 | 100 | 100 | 100 | 100 |
| | | Polypropylene-based resin B | part by weight | | | | | | |
| | | Polypropylene-based resin C | part by weight | | | | | | |
| | | Ethylene-1-butene copolymer | part by weight | | | | | | |
| | Component (b) | Erucic acid amide | part by weight | | | | 1.0 | 1.0 | 1.0 |
| | | Ethylene bis (stearic acid amide) | part by weight | | | | | | |
| | | Oleic acid amide | part by weight | | | | | | |
| | Component (c) | Ethylene-based copolymer A | part by weight | | | | | 15.00 | 25.00 |
| | | Ethylene-based copolymer C | part by weight | | | | | | |
| | Component (d) | Copolymer A | part by weight | 4.0 | | | 2.0 | | |
| | | Copolymer B | part by weight | | | | | | |
| | Component (e) | Rubber A | part by weight | | 1.0 | | | | |
| | Component (f) | Acrylate-based copolymer A | part by weight | | | 0.20 | | | |
| | | Acrylate-based copolymer B | part by weight | | | | | | |
| | Component (g) | Carbon black A | part by weight | | | | | | |
| | Water absorbing substance | Glycerin | part by weight | 0.20 | 0.20 | 0.20 | 0.20 | 0.20 | 0.20 |
| | Physical property of polyolefin - based resin composition | Flexural rigidity | kg/cm$^2$ | 9800 | 10000 | 10000 | 9800 | 9500 | 9100 |

[Preparation of polyolefin-based resin expanded particles (first-step expanded particles)]

Into a 10 L pressure-resistant vessel, the following were introduced so as to prepare a dispersion slurry including a blowing agent: 100 parts by weight of the polyolefin-based resin particles obtained; 200 parts by weight of water as an aqueous dispersion medium; 0.3 parts by weight of kaolin as a dispersing agent; 0.004 parts by weight of sodium dodecylbenzenesulfonate as a dispersion auxiliary agent; and 2.6 parts by weight of carbon dioxide as a blowing agent. While the dispersion slurry was stirred, (a) for Examples A9 and A10, (a-1) an expansion temperature (temperature inside the pressure-resistant vessel) was brought to 165°C to 167°C and (a-2) an expansion pressure (internal pressure of the vessel) was brought to 2.6 MPa, and, (b) for Examples A1 to A8, A11 to A18, and Comparative Examples A1 to A12 which are other than Examples A9 and A10, (b-1) an expansion temperature (temperature inside the pressure-resistant vessel) was brought to 150°C to 152°C and (b-2) an expansion pressure (internal pressure of the vessel) was brought to 2.4 MPa. Once the temperature and the pressure inside the pressure-resistant vessel reached a predetermined expansion temperature and predetermined expansion pressure, the temperature and pressure inside the pressure-resistant vessel were maintained at the predetermined expansion temperature and predetermined expansion pressure for another 30 minutes. Thereafter, carbon dioxide was supplied so that, while maintaining the predetermined expansion pressure in the pressure-resistant vessel, the dispersion slurry was expelled into an area of atmospheric pressure via an orifice (diameter: ø 3 mm) provided in a lower portion of the pressure-resistant vessel. This produced first-step expanded particles of the polyolefin-based resin. Thereafter, the first-step expanded particles of the polyolefin-based resin were dried at 75°C for 24 hours.

The obtained first-step expanded particles exhibited two peaks derived from the polyolefin-based resin in a DSC curve obtained by DSC measurements.

[Preparation of polyolefin-based resin expanded particles (second-step expanded particles)]

Second-step expanded particles of a polyolefin-based resin were obtained via a method including the following steps (1) to (4) in the following order. (1) The first-step expanded particles obtained in each Example were supplied to a 1 m$^3$ pressure-resistant vessel. (2) Air pressurization was used to impart an internal pressure of 0.20 MPa to 0.30 MPa (absolute pressure) to the first-step expanded particles thus supplied. (3) Next, the first-step expanded particles were transferred to a second-step expansion device. (4) Thereafter, the first-step expanded particles were heated and further expanded with steam at 0.035 MPa to 0.060 MPa (gage pressure) in the second-step expansion device to obtain second-step expanded particles which were substantially spherical.
The second-step expanded particles thus obtained exhibited two peaks derived from the polyolefin-based resin in a DSC curve obtained by DSC measurements.

[Preparation of polyolefin-based resin in-mold foamed molded product]

A polyolefin-based resin in-mold foamed molded product was prepared via a method including the following steps (1) to (6) in the following order. (1) The obtained polyolefin-based resin expanded particles (second-step expanded particles) were introduced into a pressure-resistant vessel, and impregnated with pressurized air by raising the pressure inside the pressure-resistant vessel by injecting air into the pressure-resistant vessel, thereby bringing the internal pressure of the second-step expanded particles to 0.20 MPa (absolute pressure). (2) The second-step expanded particles imparted with internal pressure were filled into the mold cavity of a mold installed on a molding machine. The mold used here is a mold which includes a movable mold that can be driven and a stationary mold and in which a block-shape mold cavity measuring 400 mm (length) × 300 mm (width) × 50 mm (thickness) is formed by the movable mold and the stationary mold. Used as a filling method was the foregoing method (A), and a mold gap of 5 mm was employed. (3) After filling, the second-step expanded particles were heated for 10 seconds with steam at 0.47 MPa (gage pressure) for Examples A9 and A10 or at 0.32 MPa (gage pressure) for Example A1 to A8, A11 to A18 and Comparative Example A1 to A12 other than Examples A9 and A10, while a drain valve of a molding machine's drain line was in the open state. (4) Next, the second-step expanded particles were heated with steam at the same gage pressure for another 18 seconds for Examples A9 and A10 or for another 10 seconds for Examples A1 to A8, A11 to A18 and Comparative Example A1 to A12 other than Examples A9 and A10, while the drain valve of the molding machine's drain line was in the closed state. (5) A polyolefin-based resin in-mold foamed molded product was obtained by the heat causing the polyolefin-based resin expanded particles (second-step expanded particles) to fuse together. (6) While the drain valve was in the open state, cooling water was used to (a) cool the inside of the mold and the surface of the molded product and (b) condense steam inside the mold to obtain condensed water, and the cooling water and the condensed water were drained. (7) The mold was opened by driving the movable mold. It is noted here that, while the mold was being opened, specifically, while the distance between the movable mold and the stationary mold was changed from 5 mm to 80 mm, air was expelled from a gas expelling section of the movable mold into an area of the mold cavity of the movable mold at a pressure of 0.10 MPa (gage pressure). Then, the polyolefin-based resin in-mold foamed molded product remaining in the stationary mold due to the expelled air was removed from the stationary mold with an ejecting member of the stationary mold, and allowed to fall into a chute located 3 m below. In this way, a polyolefin-based resin in-mold foamed molded product was obtained.
The results of evaluations are shown in Tables 5 to 8.

[Table 5]

| | | | | | Examples | | | | | | | | |
|---|---|---|---|---|---|---|---|---|---|---|---|---|---|
| | | | | | A1 | A2 | A3 | A4 | A5 | A6 | A7 | A8 | A9 |
| Polyolefin -based resin expanded particles | First-step expanded particles | Bead property | Expansion ratio | time | 15 | 16 | 16 | 16 | 16 | 16 | 16 | 16 | 15 |
| | | | Apparent density | g/L | 32 | 32 | 32 | 32 | 32 | 32 | 31 | 32 | 31 |
| | | | Average cell diameter | μm | 200 | 255 | 255 | 270 | 280 | 265 | 265 | 270 | 250 |
| | Second - step expanded particles | Bead property | Expansion ratio | time | 24 | 24 | 24 | 24 | 24 | 24 | 24 | 24 | 24 |
| | | | Apparent density | g/L | 21 | 21 | 21 | 21 | 21 | 21 | 21 | 21 | 21 |
| | | | Average cell diameter | μm | 230 | 290 | 300 | 310 | 320 | 305 | 305 | 310 | 290 |

EP 3 862 386 A1

(continued)

| | | | | Examples | | | | | | | | |
|---|---|---|---|---|---|---|---|---|---|---|---|---|
| | | | | A1 | A2 | A3 | A4 | A5 | A6 | A7 | A8 | A9 |
| Polyolefin-based resin in-mold foamed molded product | Quality of molded product | Density of molded product | g/L | 25 | 25 | 25 | 25 | 25 | 25 | 25 | 25 | 25 |
| | | In ternal fusibility | - | Excellent | Excellent | Excellent | Excellent | Excellent | Excellent | Excellent | Excellent | Excellent |
| | | Color unevenness at surface | - | - | - | - | - | - | - | - | - | - |
| | | Blackness at surface | | | | | - | - | - | - | - | - |
| | Punchability | Crushing at location of blade insertion | - | Excellent | Excellent | Excellent | More than excellent | More than excellent | Excellent | Excellent | More than excellent | Excellent |
| | | Cracking in the vicinity of location of blade insertion | - | Excellent | Excellent | Excellent | Excellent | Excellent | Excellent | Excellent | Excellent | Excellent |
| | | State of cut surface | - | Good | Excellent | More than excellent | More than excellent | More than excellent | Good | More than excellent | More than excellent | Excellent |
| | Crack resistance | Crack occurrence rate | % | 4 | 4 | 2 | 2 | 0 | 4 | 4 | 4 | 4 |

[Table 6]

| | | | | Examples | | | | | | | | |
|---|---|---|---|---|---|---|---|---|---|---|---|---|
| | | | | A10 | A11 | A12 | A13 | A14 | A15 | A16 | A17 | A18 |
| Polyolefin-based resin expanded particles | First-step expanded particles | Bead property | Expansion ratio (time) | 15 | 16 | 16 | 16 | 16 | 16 | 16 | 16 | 16 |
| | | | Apparent density (g/l) | 31 | 31 | 32 | 32 | 32 | 32 | 32 | 31 | 32 |
| | | | Average cell diameter (mm) | 150 | 260 | 260 | 260 | 260 | 250 | 255 | 265 | 155 |
| | Second-step expanded particles | Bead property | Expansion ratio (time) | 24 | 24 | 24 | 24 | 24 | 24 | 24 | 24 | 24 |
| | | | Apparent density (g/l) | 21 | 21 | 21 | 21 | 21 | 21 | 21 | 21 | 21 |
| | | | Average cell diameter (mm) | 170 | 300 | 300 | 300 | 300 | 285 | 295 | 305 | 175 |

| | | | | Examples | | | | | | | | |
|---|---|---|---|---|---|---|---|---|---|---|---|---|
| | | | | A10 | A11 | A12 | A13 | A14 | A15 | A16 | A17 | A18 |
| Polyolefin-based resin in-mold foamed molded product | Quality of molded product | Density of molded product | g/l | 25 | 25 | 25 | 25 | 25 | 25 | 25 | 25 | 25 |
| | | In ternal fusibility | - | Excellent | Excellent | Excellent | Excellent | Excellent | Excellent | Excellent | Excellent | Excellent |
| | | Color uneven - ness at surface | - | Good | - | - | - | - | - | - | - | Pass |
| | | Black - ness at surface | - | 88 | - | - | - | - | - | - | - | 84 |
| | Punchability | Crushing at location of blade insertion | - | Good | Excellent | Excellent | Excellent | Excellent | Excellent | Excellent | Excellent | Excellent |
| | | Cracking in the vicinity of location of blade insertion | - | Excellent | Excellent | Excellent | Excellent | Excellent | Excellent | Excellent | Excellent | Good |
| | | State of cut surface | - | Good | Excellent | Excellent | Good | Excellent | Good | Excellent | More than excellent | Good |
| | Crack resistance | Crack occurren- ce rate | % | 4 | 4 | 4 | 4 | 4 | 6 | 4 | 4 | 6 |

EP 3 862 386 A1

[Table 7]

| | | | | | Comparative Examples | | | | | |
|---|---|---|---|---|---|---|---|---|---|---|
| | | | | | A1 | A2 | A3 | A4 | A5 | A6 |
| Polyolefin- based resin expanded particles | First-step expanded particles | Bead property | Expansion ratio | time | 17 | 16 | 16 | 16 | 16 | 16 |
| | | | Apparent density | g/L | 30 | 32 | 31 | 31 | 31 | 31 |
| | | | Average cell diameter | $\mu$m | 150 | 200 | 170 | 200 | 170 | 200 |
| | Second- step expanded particles | Bead property | Expansion ratio | time | 24 | 24 | 24 | 24 | 24 | 24 |
| | | | Apparent density | g/L | 21 | 21 | 21 | 21 | 21 | 21 |
| | | | Average cell diameter | $\mu$m | 175 | 230 | 195 | 230 | 195 | 230 |
| Polyolefin-based resin in-mold foamed molded product | | Quality of molded product | Density of molded product | g/L | 25 | 25 | 25 | 25 | 25 | 25 |
| | | | In ternal fusibility | - | Excellent | Excellent | Excellent | Excellent | Excellent | Excellent |
| | | | Color unevenness at surface | - | - | - | - | - | - | - |
| | | | Blackness at surface | | - | - | - | - | - | - |
| | | Punchability | Crushing at location of blade insertion | - | Fail | Fail | Fail | Fail | I Fail | Fail |
| | | | Cracking in the vicinity of location of blade insertion | - | Fail | Fail | Fail | Fail | Fail | Pass |
| | | | State of cut surface | - | Good | Good | Good | Good | Good | Good |
| | | Crack resistance | Crack occurrence rate | % | 24 | 24 | 22 | 24 | 22 | 20 |

[Table 8]

| | | | | | Comparative Examples | | | | | |
|---|---|---|---|---|---|---|---|---|---|---|
| | | | | | A7 | A8 | A9 | A10 | A11 | A12 |
| Polyolefin- based resin expanded particles | First-step expanded particles | Bead property | Expansion ratio | time | 16 | 16 | 16 | 16 | 16 | 16 |
| | | | Apparent density | g/L | 31 | 31 | 32 | 31 | 32 | 32 |
| | | | Average cell diameter | μm | 200 | 200 | 200 | 200 | 260 | 260 |
| | Second-step expanded particles | Bead property | Expansion ratio | time | 24 | 24 | 24 | 24 | 24 | 24 |
| | | | Apparent density | g/L | 21 | 21 | 21 | 21 | 21 | 21 |
| | | | Average cell diameter | μm | 230 | 230 | 230 | 230 | 300 | 300 |
| Polyolefin-based resin in-mold foamed molded product | | Quality of molded product | Density of molded product | g/L | 25 | 25 | 25 | 25 | 25 | 25 |
| | | | In ternal fusibility | - | Excellent | Exce-llent | Excellent | Excellent | Fail | Fail |
| | | | Color unevenness at surface | - | - | - | - | - | - | - |
| | | | Blackness at surface | | | | | - | - | - |
| | | Punchability | Crushing at location of blade insertion | - | Fail | Fail | Fail | Fail | Excellent | Excellent |
| | | | Cracking in the vicinity of location of blade insertion | - | Fail | Fail | Fail | Fail | Excellent | Excellent |
| | | | State of cut surface | - | Good | Good | Good | Good | Good | Good |
| | | Crack resistance | Crack occurrence rate | % | 22 | 24 | 24 | 22 | 4 | 4 |

EP 3 862 386 A1

Each of Examples A1 to A18 is about polyolefin-based resin expanded particles and a polyolefin-based resin in-mold foamed molded product in accordance with an embodiment of the present invention. Specifically, each of Examples A1 to A18 is about (i) polyolefin-based resin expanded particles produced from a blend of a polyolefin-based resin (a) (having a flexural rigidity, measured in accordance with JIS K7106, of more than 8000 kg/cm$^2$ and not more than 13500 kg/cm$^2$), a higher fatty acid amide (b), and an ethylene-based copolymer (c) which were blended in amounts falling within the ranges specified in an embodiment of the present invention and (ii) a polyolefin-based resin in-mold foamed molded product obtained by subjecting the polyolefin-based resin expanded particles to in-mold foam molding. It was demonstrated that, with use of the polyolefin-based resin expanded particles of any of Examples A1 to A18, the obtained polyolefin-based resin in-mold foamed molded product was less prone to cracking and chipping when recovered from a mold and was excellent in strength, quality (especially internal fusibility), and punchability.

Each of Comparative Examples A1, A2, A4, and A7 to A9 contains neither the higher fatty acid amide (b) nor the ethylene-based copolymer (c), Comparative Example A6 does not contain the higher fatty acid amide (b), and each of Comparative Examples A3, A5, and A10 does not contain the ethylene-based copolymer (c). It was demonstrated that, as a result, with the use of the polyolefin-based resin expanded particles of any of Comparative Examples A1 to A10, the obtained polyolefin-based resin in-mold foamed molded product had crushing at the location of blade insertion and cracking in the vicinity of the location of blade insertion and was inferior in crack occurrence rate.

In particular, the polyolefin-based resin expanded particles of Comparative Example A10 contain the copolymer (d) but does not contain the ethylene-based copolymer (c). In other words, the polyolefin-based resin expanded particles of Comparative Example A10 are the same in composition as Example A2, except that the copolymer (d) is contained instead of the ethylene-based copolymer (c). However, it was demonstrated that, even when the polyolefin-based resin expanded particles of Comparative Example A10 were used, the obtained polyolefin-based resin in-mold foamed molded product had crushing at the location of blade insertion and cracking in the vicinity of the location of blade insertion and was inferior in crack occurrence rate.

The polyolefin-based resin expanded particles of Comparative Example A5 contain an ethylene-1-butene copolymer in addition to the polypropylene-based resin, but does not contain the ethylene-based copolymer (c). It was demonstrated that, as a result, with the use of the polyolefin-based resin expanded particles of Comparative Example A5, the obtained polyolefin-based resin in-mold foamed molded product had crushing at the location of blade insertion and cracking in the vicinity of the location of blade insertion and was inferior in crack occurrence rate.

The polyolefin-based resin expanded particles of each of Comparative Examples A11 and A12 contain the polyolefin-based resin (a), the higher fatty acid amide (b), and the ethylene-based copolymer (c), but the amount of the ethylene-based copolymer (c) contained (blended) is large, which is outside the range according to the present invention. It was demonstrated that, as a result, with the use of the polyolefin-based resin expanded particles of Comparative Example A11 or A12, the obtained polyolefin-based resin in-mold foamed molded product was inferior in internal fusibility. It is inferred that this is because the polyolefin-based resin expanded particles of Comparative Examples A11 and A12 increased in expanding force during in-mold foam molding, expanded earlier than expected during heating, and steam was not distributed uniformly over the expanded particles. The phrase "steam was not distributed uniformly over the expanded particles" can also be described as "steam was not distributed sufficiently within the mold cavity".

[Examples B]

The following description will discuss an embodiment of the present invention with reference to Examples B1 to B18, Comparative Examples B1 to B8, and Reference Example B1. Note that the present invention is not limited to such Examples B.

Components and other additives used in Example B1 to B18, Comparative Examples B1 to B8, and Reference Example B1 are as follows.

(1) The polyolefin-based resins (a) (components (a)), the higher fatty acid amides (b) (components (b)), the copolymers (d) (components (d)), the olefin-based elastomers (e) (components (e)), and the acrylate-based copolymers (f) (components (f)) are the same as the respective components used in Examples A.

(2) Ethylene-based copolymer (c) (component (c))

- Ethylene-based copolymer A: The same ethylene-based copolymer A as that used in Examples A
- Ethylene-based copolymer B: Ethylene-ethyl acrylate-butyl acrylate-styrene copolymer
- Ethylene-based copolymer C: The same ethylene-based copolymer C as that used in Examples A

(3) Coloring agent (g) (component (g))

- Carbon black A: Average particle diameter: 35 nm (the same carbon black A as that used in Examples A)

- Carbon black B: Average particle diameter: 90nm

Note that with regard to the carbon black A or B, a carbon black masterbatch containing the carbon black A or B at a concentration of 40 weight% was prepared and then the carbon black masterbatch was used. The resin used in preparing the masterbatch is the same as the foregoing polypropylene-based resin A. Note that the amounts shown in Tables 9 to 11 are those of the carbon black A or B, not the amounts of the masterbatch.

(4) Other additives

An expansion nucleating agent, a water absorbing substance, a dispersing agent, and a dispersion auxiliary agent are the same as the respective components used in Examples A.

(5) Blowing agent

- Carbon dioxide [manufactured by AIR WATER INC.]

Examples B1 to B18, Comparative Examples B1 to B8, and Reference Example B1 were evaluated by the methods described in the section "Examples A".

<Examples B1 to B18, Comparative Examples B1 to B8, Reference Example B1>

[Preparation of polyolefin-based resin particles]

Polyolefin-based resin particles (1.2 mg/particle) were produced by the same method as described in Examples A. The amounts of the respective components blended (parts by weight) were in accordance with Tables 9 to 11. A polyolefin-based resin composition obtained during the production of the polyolefin-based resin particles was measured for flexural rigidity by the foregoing method. The results thereof are shown in Tables 9 to 11.

[Table 9]

| | | | | Examples | | | | | | | | |
|---|---|---|---|---|---|---|---|---|---|---|---|---|
| | | | | B1 | B2 | B3 | B4 | B5 | B6 | B7 | B8 | B9 |
| Polyolefin-based resin particles | Component (a) | Polypropylene-based resin A | part by weight | 100 | 100 | 100 | 100 | 95 | 95 | 100 | 100 | 95 |
| | | Ethylene-1-butene copolymer | part by weight | | | | | 5 | 5 | | | 5 |
| | Component (b) | Erucic acid amide | part by weight | 1.0 | 1.0 | 1.0 | 1.0 | 1.0 | 1.0 | 1.0 | 1.0 | 1.0 |
| | | Ethylene bis (stearic acid amide) | part by weight | | | | | | | | | |
| | | Oleic acid amide | part by weight | | | | | | | | | |
| | Component (c) | Ethylene-based copolymer A | part by weight | 4.00 | 4.00 | 4.00 | 3.80 | 3.80 | | | | |
| | | Ethylene-based copolymer B | part by weight | | | | | | 3.80 | | | |
| | | Ethylene-based copolymer C | part by weight | | | | | | | 0.15 | 0.15 | 0.15 |

(continued)

| | | | Examples | | | | | | | | |
|---|---|---|---|---|---|---|---|---|---|---|---|
| | | | B1 | B2 | B3 | B4 | B5 | B6 | B7 | B8 | B9 |
| Component (d) | Copolymer A | part by weight | | | | | | | | 2.0 | 2.0 |
| | Copolymer B | part by weight | | | | | | | | | |
| Component (e) | Rubber A | part by weight | | | | | | | | 1.0 | 1.0 |
| Component (f) | Acrylate-based copolymer A | part by weight | | | | 0.20 | 0.20 | | | | |
| | Acrylate-based copolymer B | part by weight | | | | | | 0.20 | | | 0.85 |
| Component (g) | Carbon black A | part by weight | 4.00 | 4.00 | | 4.00 | 4.00 | 4.00 | 4.00 | 4.00 | 4.00 |
| | Carbon black B | part by weight | | | 6.00 | | | | | | |
| Water absorbing substance | Glycerin | part by weight | | 0.20 | 0.20 | 0.20 | 0.20 | 0.20 | 0.20 | 0.20 | 0.20 |
| Physical property of polyolefin- based resin composition | Flexural rigidity | kg/cm$^2$ | 9800 | 9800 | 9800 | 9800 | 9600 | 9600 | 10000 | 9900 | 9600 |

[Table 10]

| | | | | Examples | | | | | | | | |
|---|---|---|---|---|---|---|---|---|---|---|---|---|
| | | | | B10 | B11 | B12 | B13 | B14 | B15 | B16 | B17 | B18 |
| Polyolefin-based resin particles | Component (a) | Polypropylene-based resin A | part by weight | 100 | 100 | 100 | 100 | 100 | 100 | 100 | 100 | 100 |
| | | Ethylene-1-butene copolymer | part by weight | | | | | | | | | |
| | Component (b) | Erucic acid amide | part by weight | | | 0.1 | 2.4 | 1.0 | 1.0 | 1.0 | 1.0 | 1.0 |
| | | Ethylene bis(stearic acid amide) | part by weight | 1.0 | | | | | | | | |
| | | Oleic acid amide | part by weight | | 1.0 | | | | | | | |
| | Component (c) | Ethylene-based copolymer A | part by weight | | | | | 0.01 | 5.00 | | | 4.00 |
| | | Ethylene-based copolymer B | part by weight | | | | | | | | | |
| | | Ethylene-based copolymer C | part by weight | 0.15 | 0.15 | 0.15 | 0.15 | | | 0.15 | 0.15 | |

EP 3 862 386 A1

(continued)

| | | | Examples | | | | | | | | |
|---|---|---|---|---|---|---|---|---|---|---|---|
| | | | B10 | B11 | B12 | B13 | B14 | B15 | B16 | B17 | B18 |
| Component (d) | Copolymer A | part by weight | | | | | | | | | |
| | Copolymer B | part by weight | | | | | | | | | |
| Component (e) | Rubber A | part by weight | | | | | | | | | |
| Component (f) | Acrylate-based copolymer A | part by weight | | | | | | | | | |
| | Acrylate-based copolymer B | part by weight | | | | | | | | | |
| Component (g) | Carbon black A | part by weight | 4.00 | 4.00 | 4.00 | 4.00 | 4.00 | 4.00 | 0.10 | 8.00 | 4.00 |
| | Carbon black B | part by weight | | | | | | | | | |
| Water absorbing substance | Glycerin | part by weight | 0.20 | 0.20 | 0.20 | 0.20 | 0.20 | 0.20 | 0.20 | 0.20 | |
| Physical property of polyolefin- based resin composition | Flexural rigidity | kg/cm$^2$ | 10000 | 10000 | 10000 | 10000 | 10000 | 9800 | 10000 | 10000 | 9800 |

[Table 11]

| | | | | Comparative Examples | | | | | | | | Reference Example |
|---|---|---|---|---|---|---|---|---|---|---|---|---|
| | | | | B1 | B2 | B3 | B4 | B5 | B6 | B7 | B8 | B1 |
| Polyolefin-based resin particles | Component (a) | Polypropylene-based resin A | part by weight | 100 | 100 | 100 | 95 | 100 | 100 | 100 | 100 | 100 |
| | | Ethylene-1-butene copolymer | part by weight | | | | 5 | | | | | |
| | Component (b) | Erucic acid amide | part by weight | 1.0 | 1.0 | 1.0 | 1.0 | 1.0 | 1.0 | 1.0 | 1.0 | |
| | | Ethylene bis (stearic acid amide) | part by weight | | | | | | | | | |
| | | Oleic acid amide | part by weight | | | | | | | | | |
| | Component (c) | Ethylene-based copolymer A | part by weigh t | | | | | | | | | |
| | | Ethylene-based copolymer B | part by weight | | | | | | | | | |
| | | Ethylene-based copolymer C | part by weight | | | | | | | | | |
| | Component (d) | Copolymer A | part by weight | | | | | 4.0 | | | | |
| | | Copolymer B | part by weight | | | | | | 4.0 | | | |
| | Component (e) | Rubber A | part by weight | | | | | | | 1.0 | | |
| | Component (f) | Acrylate-based copolymer A | part by weight | | | | | | | | | |
| | | Acrylate-based copolymer B | part by weight | | | | | | | | 2.00 | |

EP 3 862 386 A1

57

(continued)

| | | | | Comparative Examples | | | | | | | | Reference Example |
|---|---|---|---|---|---|---|---|---|---|---|---|---|
| | | | | B1 | B2 | B3 | B4 | B5 | B6 | B7 | B8 | B1 |
| Component (g) | | Carbon black A | part by weight | 4.00 | 4.00 | | 4.00 | 4.00 | 4.00 | 4.00 | 4.00 | 4.00 |
| | | Carbon black B | part by weight | | | 6.00 | | | | | | |
| | Water absorbing substance | Glycerin | part by weight | | 0.20 | 0.20 | 0.20 | 0.20 | 0.20 | 0.20 | 0.20 | 0.20 |
| Physical property of polyolefin-based resin composition | | Flexural rigidity | $kg/cm^2$ | 10000 | 10000 | 10000 | 9600 | 9800 | 9800 | 10000 | 9800 | 10000 |

[Preparation of polyolefin-based resin expanded particles (first-step expanded particles)]

Into a 10 L pressure-resistant vessel, the following were introduced so as to prepare a dispersion slurry including a blowing agent: 100 parts by weight of the polyolefin-based resin particles obtained; 200 parts by weight of water as an aqueous dispersion medium; 0.3 parts by weight of kaolin as a dispersing agent; 0.004 parts by weight of sodium dodecylbenzenesulfonate as a dispersion auxiliary agent; and 2.6 parts by weight of carbon dioxide as a blowing agent. While the dispersion slurry was stirred, (a) an expansion temperature (temperature inside the pressure-resistant vessel) was brought to 147°C to 149°C and (b) an expansion pressure (internal pressure of the vessel) was brought to 3.2 MPa. Once the temperature and the pressure inside the pressure-resistant vessel reached a predetermined expansion temperature and predetermined expansion pressure, the temperature and pressure inside the pressure-resistant vessel were maintained at the predetermined expansion temperature and predetermined expansion pressure for another 30 minutes. Thereafter, carbon dioxide was supplied so that, while maintaining the predetermined expansion pressure in the pressure-resistant vessel, the dispersion slurry was expelled into an area of atmospheric pressure via an orifice (diameter: ø 3 mm) provided in a lower portion of the pressure-resistant vessel. This produced first-step expanded particles of the polyolefin-based resin. Thereafter, the first-step expanded particles of the polyolefin-based resin were dried at 75°C for 24 hours.

The obtained first-step expanded particles exhibited two peaks derived from the polyolefin-based resin in a DSC curve obtained by DSC measurements.

[Preparation of polyolefin-based resin expanded particles (second-step expanded particles)]

Second-step expanded particles of a polyolefin-based resin were obtained via a method including the following steps (1) to (4) in the following order, except for Example B10. (1) The first-step expanded particles obtained in each Example were supplied to a 1 m$^3$ pressure-resistant vessel. (2) Air pressurization was used to impart an internal pressure of 0.20 MPa to 0.30 MPa (absolute pressure) to the first-step expanded particles thus supplied. (3) Next, the particles were transferred to a second-step expansion device. (4) Thereafter, the first-step expanded particles were heated and further expanded with steam at 0.035 MPa to 0.060 MPa (gage pressure) to obtain second-step expanded particles which were substantially spherical.

The second-step expanded particles thus obtained exhibited two peaks derived from the polyolefin-based resin in a DSC curve obtained by DSC measurements.

[Preparation of polyolefin-based resin in-mold foamed molded product]

A polyolefin-based resin in-mold foamed molded product was prepared via a method including the following steps (1) to (4) in the following order. (1) The second-step expanded particles obtained were imparted with internal pressure and then filled into a mold measuring 400 mm (length) × 300 mm (width) × 50 mm (thickness). Used as a filling method was the above-described method (A), and a mold gap of 5 mm was employed. (2) After filling, first-step expanded particles or the second-step expanded particles were heated with steam at 0.32 MPa (gage pressure). (3) A polyolefin-based resin in-mold foamed molded product was obtained by the heat causing polyolefin-based resin expanded particles (first-step expanded particles or the second-step expanded particles) to fuse together. (4) The obtained polyolefin-based resin in-mold foamed molded product was removed from the mold.

The results of evaluations are shown in Tables 12 to 14.

[Table 12]

| | | | | | Examples | | | | | | | | |
|---|---|---|---|---|---|---|---|---|---|---|---|---|---|
| | | | | | B1 | B2 | B3 | B4 | B5 | B6 | B7 | B8 | B9 |
| Polyolefin-based resin expanded particles | First-step expanded particles | Bead property | Expansion ratio | time | 15 | 16 | 16 | 16 | 16 | 16 | 16 | 16 | 16 |
| | | | Apparent density | g/L | 32 | 32 | 32 | 32 | 32 | 31 | 32 | 31 | 31 |
| | | | Average cell diameter | μm | 125 | 150 | 140 | 150 | 150 | 150 | 145 | 150 | 155 |
| | Second-step expanded particles | Bead property | Expansion ratio | time | 24 | 24 | 24 | 24 | 24 | 24 | 24 | 24 | 24 |
| | | | Apparent density | g/L | 21 | 21 | 21 | 21 | 21 | 21 | 21 | 21 | 21 |
| | | | Average cell diameter | μm | 140 | 170 | 160 | 175 | 175 | 170 | 160 | 175 | 180 |
| Polyolefin-based resin in-mold foamed molded product | Quality of molded product | | Density of molded product | g/L | 25 | 25 | 25 | 25 | 25 | 25 | 25 | 25 | 25 |
| | | | Internal fusibility | - | Excellent | Excellent | Excellent | Excellent | Excellent | Excellent | Excellent | Excellent | Excellent |
| | | | Color unevenness at surface | - | Good | Good | Good | Good | Good | Good | Good | Good | Good |
| | | | Blackness at surface | - | 88 | 92 | 91 | 93 | 93 | 92 | 91 | 93 | 94 |
| | Punchability | | Crushing at location of blade insertion | - | Good | Excellent | Good | Excellent | Excellent | Excellent | Good | Excellent | Excellent |
| | | | Cracking in the vicinity of location of blade insertion | - | Good | Good | Good | Good | Good | Good | Good | Good | Excellent |
| | | | State of cut surface | - | Good | Good | Good | Good | Good | Good | Good | Good | Good |
| | Crack resistance | | Crack occurrence rate | % | 10 | 6 | 8 | 6 | 6 | 6 | 8 | 6 | 4 |

[Table 13]

| | | | | | Examples | | | | | | | | |
|---|---|---|---|---|---|---|---|---|---|---|---|---|---|
| | | | | | B10 | B11 | B12 | B13 | B14 | B15 | B16 | B17 | B18 |
| Polyolefin-based resin expanded particles | First-step expanded particles | Bead property | Expansion ratio | time | 16 | 16 | 16 | 16 | 16 | 16 | 16 | 16 | 15 |
| | | | Apparent density | g/L | 32 | 31 | 32 | 32 | 32 | 32 | 32 | 32 | 32 |
| | | | Average cell diameter | μm | 145 | 140 | 155 | 125 | 140 | 160 | 155 | 135 | 125 |
| | Second-step expanded particles | Bead property | Expansion ratio | time | 24 | 24 | 24 | 24 | 24 | 24 | 24 | 24 | - |
| | | | Apparent density | g/L | 21 | 21 | 21 | 21 | 21 | 21 | 21 | 21 | - |
| | | | Average cell diameter | μm | 170 | 160 | 180 | 145 | 160 | 185 | 180 | 155 | - |

(continued)

| | | | Examples | | | | | | | | |
|---|---|---|---|---|---|---|---|---|---|---|---|
| | | | B10 | B11 | B12 | B13 | B14 | B15 | B16 | B17 | B18 |
| Polyolefin-based resin in-mold foamed molded product | Quality of molded product | Density of molded product | g/L | 25 | 25 | 25 | 25 | 25 | 25 | 25 | 25 | 35 |
| | | Internal fusibility | - | Excellent | Excellent | Excellent | Excellent | Excellent | Excellent | Excellent | Excellent | Excellent |
| | | Color unevenness at surface | - | Good | Good | Good | Good | Good | Good | Good | Good | Good |
| | | Blackness at surface | - | 92 | 91 | 93 | 89 | 91 | 94 | 93 | 90 | 89 |
| | Punch-ability | Crushing at location of blade insertion | - | Excellent | Good | Excellent | Good | Good | Excellent | Excellent | Good | Good |
| | | Cracking in the vicinity of location of blade insertion | - | Good | Good | Excellent | Good | Good | Excellent | Excellent | Good | Good |
| | | State of cut surface | - | Good | Good | Good | Good | Good | Good | Good | Good | Good |
| | Crack resistance | Crack occurrence rate | % | 6 | 10 | 4 | 10 | 10 | 4 | 4 | 10 | 10 |

[Table 14]

| | | | | | Comparative Examples | | | | | | | | Reference Example |
|---|---|---|---|---|---|---|---|---|---|---|---|---|---|
| | | | | B1 | B2 | B3 | B4 | B5 | B6 | B7 | B8 | | B1 |
| Polyolefin-based resin expanded particles | First-step expanded particles | Bead property | Expansion ratio | time | 17 | 16 | 16 | 16 | 16 | 16 | 16 | 16 | 16 |
| | | | Apparent density | g/L | 30 | 32 | 31 | 32 | 32 | 32 | 32 | 32 | 32 |
| | | | Average cell diameter | μm | 80 | 100 | 90 | 90 | 100 | 100 | 90 | 95 | 160 |
| | Second-step expanded particles | Bead property | Expansion ratio | time | 24 | 24 | 24 | 24 | 24 | 24 | 24 | 24 | 24 |
| | | | Apparent density | g/L | 21 | 21 | 21 | 21 | 21 | 21 | 21 | 21 | 21 |
| | | | Average cell diameter | μm | 90 | 115 | 100 | 105 | 115 | 115 | 105 | 110 | 185 |

63

| | | | | Comparative Examples | | | | | | | | Reference Example |
|---|---|---|---|---|---|---|---|---|---|---|---|---|
| | | | | B1 | B2 | B3 | B4 | B5 | B6 | B7 | B8 | B1 |
| Polyolefin-based resin in-mold foamed molded product | Quality of molded product | Density of molded product | g/L | 25 | 25 | 25 | 25 | 25 | 25 | 25 | 25 | 25 |
| | | Internal fusibility | - | Excellent | Excellent | Excellent | Excellent | Excellent | Excellent | Excellent | Excellent | Excellent |
| | | Color unevenness at surface | - | Fail | Fail | Fail | Fail | Fail | Fail | Fail | Fail | Good |
| | | Blackness at surface | - | 79 | 84 | 80 | 81 | 83 | 83 | 81 | 82 | 94 |
| | Punchability | Crushing at location of blade insertion | - | Fail | Fail | Fail | Fail | Fail | Fail | Fail | Fail | Fail |
| | | Cracking in the vicinity of location of blade insertion | - | Fail | Fail | Fail | Fail | Fail | Fail | Fail | Fail | Fail |
| | | State of cut surface | - | Fail | Fail | Fail | Fail | Fail | Fail | Fail | Fail | Fail |
| | Crack resistance | Crack occurrence rate | % | 34 | 34 | 34 | 30 | 32 | 32 | 30 | 30 | 40 |

EP 3 862 386 A1

64

Each of Examples B1 to B18 is about polyolefin-based resin expanded particles and a polyolefin-based resin in-mold foamed molded product in accordance with an embodiment of the present invention. Specifically, each of Examples B1 to B18 is about (i) polyolefin-based resin expanded particles produced from a blend of a polyolefin-based resin (a) (having a flexural rigidity, measured in accordance with JIS K7106, of more than 8000 kg/cm$^2$ and not more than 13500 kg/cm$^2$), a higher fatty acid amide (b), and an ethylene-based copolymer (c) in amounts falling within the ranges specified in an embodiment of the present invention and further a coloring agent (g) and (ii) a polyolefin-based resin in-mold foamed molded product obtained by subjecting the polyolefin-based resin expanded particles to in-mold foam molding. It was demonstrated that the polyolefin-based resin expanded particles of Examples B1 to B18 have a larger average cell diameter than the polyolefin-based resin expanded particles of Comparative Example B1 to B8. It was demonstrated that, as a result, with use of the polyolefin-based resin expanded particles of any of Examples B1 to B18, the obtained polyolefin-based resin in-mold foamed molded product was excellent in colorability (blackness) with no color unevenness.

It was demonstrated that, with use of the polyolefin-based resin expanded particles of any of Examples B1 to B18, the obtained polyolefin-based resin in-mold foamed molded product was less prone to cracking and chipping when recovered from a mold and was excellent in strength, quality (especially internal fusibility), and punchability.

The polyolefin-based resin expanded particles of Comparative Examples B1 to B3 contain the coloring agent (g) but do not contain the ethylene-based copolymer (c). It was demonstrated that, as a result, the polyolefin-based resin expanded particles of Comparative Examples B1 to B3 have a smaller average cell diameter than the polyolefin-based resin expanded particles of Examples B1 to B8. It was demonstrated that, as a result, with the use of the polyolefin-based resin expanded particles of any of Comparative Examples B1 to B3, the obtained polyolefin-based resin in-mold foamed molded product had color unevenness and was inferior in colorability (blackness).

The polyolefin-based resin expanded particles of Comparative Example B4 contain the ethylene-1-butene copolymer in addition to the polypropylene-based resin and further contain the coloring agent (g), but does not contain the ethylene-based copolymer (c). It was demonstrated that, as a result, the polyolefin-based resin expanded particles of Comparative Example B4 have a smaller average cell diameter than the polyolefin-based resin expanded particles of Examples B1 to B8. It was demonstrated that, as a result, with the use of the polyolefin-based resin expanded particles of Comparative Example B4, the obtained polyolefin-based resin in-mold foamed molded product had color unevenness and was inferior in colorability (blackness).

Compared with Comparative Example B4, the polyolefin-based resin expanded particles of Examples B5 and B6 contain the ethylene-1-butene copolymer in addition to the polypropylene-based resin and further contain the higher fatty acid amide (b) and the coloring agent (g). It was demonstrated that the polyolefin-based resin expanded particles of Examples B5 and B6 have a larger average cell diameter than the polyolefin-based resin expanded particles of Comparative Example B4. It was demonstrated that, as a result, with the use of the polyolefin-based resin expanded particles of Example B5 or B6, the obtained polyolefin-based resin in-mold foamed molded product had no color unevenness and was excellent in colorability (blackness).

The polyolefin-based resin expanded particles of Comparative Examples B5 and B6 contain the coloring agent (g) and the copolymer (d) but do not contain the ethylene-based copolymer (c). It was demonstrated that, as a result, the polyolefin-based resin expanded particles of Comparative Examples B5 and B6 have a smaller average cell diameter than the polyolefin-based resin expanded particles of Examples B1 to B8. It was demonstrated that, as a result, with the use of the polyolefin-based resin expanded particles of Comparative Example B5 or B6, the obtained polyolefin-based resin in-mold foamed molded product had color unevenness and was inferior in colorability (blackness).

The polyolefin-based resin expanded particles of Comparative Example B7 contain the coloring agent (g) and the olefin-based elastomer (e) and the polyolefin-based resin expanded particles of Comparative Example B8 contain the coloring agent (g) and the acrylate-based copolymer (f), but both the polyolefin-based resin expanded particles of Comparative Examples B7 and B8 do not contain the ethylene-based copolymer (c). It was demonstrated that, as a result, the polyolefin-based resin expanded particles of Comparative Examples B7 and B8 have a smaller average cell diameter than the polyolefin-based resin expanded particles of Examples B1 to B8. It was demonstrated that, as a result, with the use of the polyolefin-based resin expanded particles of Comparative Example B7 or B8, the obtained polyolefin-based resin in-mold foamed molded product had color unevenness and was inferior in colorability (blackness).

Reference Example B1 contains the coloring agent (g) but does not have the higher fatty acid amide (b) added thereto. It was demonstrated that, as a result, Reference Example B1 does not undergo a phenomenon in which the average cell diameter decreases because of the coloring agent (g).

Each of Comparative Examples B1 to B8 does not contain the ethylene-based copolymer (c), and Reference Example B1 contains neither the higher fatty acid amide (b) nor the ethylene-based copolymer (c). It was demonstrated that, as a result, with the use of the polyolefin-based resin expanded particles of any of Comparative Examples B1 to B8 and Reference Example B1, the obtained polyolefin-based resin in-mold foamed molded product had crushing at the location of blade insertion and/or cracking in the vicinity of the location of blade insertion, had a cut surface in "Fail" state, and was inferior in crack occurrence rate.

[Examples C]

The following description will discuss an embodiment of the present invention with reference to Examples C1 to C14 and Comparative Examples C1 to C12. Note that the present invention is not limited to such Examples C.

Components and other additives used in Examples C1 to C14 and Comparative Examples C1 to C12 are as follows.

(1) The polyolefin-based resins (a) (components (a)), the higher fatty acid amides (b) (components (b)), the ethylene-based copolymers (c) (components (c)), the copolymers (d) (components (d)), the olefin-based elastomers (e) (components (e)), and the acrylate-based copolymers (f) (components (f)) are the same as the respective components used in Examples A and B.

(2) Other additives

An expansion nucleating agent, a water absorbing substance, a dispersing agent, and a dispersion auxiliary agent are the same as the respective components used in Examples A.

(3) Blowing agent

- Carbon dioxide [manufactured by AIR WATER INC.]

Examples C1 to C14 and Comparative Examples C1 to C12 were evaluated by the methods described earlier in the section "Examples A", except for the following evaluations.

(Density of polyolefin-based resin in-mold foamed molded product (block))

The length, width, and thickness of a polyolefin-based resin in-mold foamed molded product (block) obtained were measured with calipers. From these measurements, a volume V ($cm^3$) of the polyolefin-based resin in-mold foamed molded product was calculated. Thereafter, a weight W (g) of the obtained polyolefin-based resin in-mold foamed molded product (block) was measured. The weight was divided by the volume V ($cm^3$) of the polyolefin-based resin in-mold foamed molded product to obtain the density of the polyolefin-based resin in-mold foamed molded product (block). The unit used for the density of the polyolefin-based resin in-mold foamed molded product (block) was g/L.

(Internal fusibility of polyolefin-based resin in-mold foamed molded product (block))

A 5 mm deep cut was made in the thickness direction in the obtained polypropylene-based resin in-mold foamed molded product (block) with a cutter, and then the in-mold foamed molded product was torn along the cut by hand. An area of the surface resulting from the tearing, distant inwardly by 10 mm from each of the opposite surfaces of the in-mold foamed molded product in the thickness direction, was visually checked. The percentage of broken expanded particles (internally broken expanded particles), not the particles separated at interfaces, was calculated. Then, internal fusibility was judged by the following criteria.

Excellent: The percentage of internally broken expanded particles was 80% or more.

Good: The percentage of internally broken expanded particles was 60% or more and less than 80%.

Poor: The percentage of internally broken expanded particles was less than 60%.

Note that the state in which the percentage of internally broken expanded particles is less than 60%, based on which the internal fusibility is judged as being poor, shows that the degree of fusion is low. In other words, the criterion based on which the internal fusibility is judged as being poor can be expressed as follows: the percentage of the surfaces of expanded particles appearing at the surface resulting from the tearing is not less than 40%.

(Rate of success in ejection of polyolefin-based resin in-mold foamed molded product (box) (hereinafter "ejection success rate"))

The same process as described in the section "Preparation of polyolefin-based resin in-mold foamed molded product (box)" (described later) was carried out, except that the pressure of air was 0.10 MPa (gage pressure). In this way, twenty polyolefin-based resin in-mold foamed molded products (boxes) (n = 20) were prepared for each of Examples C1 to C14 and Comparative Examples C1 to C12. The number of in-mold foamed molded products which were left in the stationary mold due to the expelled air and which were removed from the stationary mold without problem by the ejecting member, out of the twenty in-mold foamed molded products, was measured (such a number is "number A"). The ejection success rate of a polyolefin-based resin in-mold foamed molded product was determined using the following

equation:

$$\text{Ejection success rate (\%) of polyolefin-based resin in-mold foamed molded product} = A/20 \times 100.$$

(Minimum air pressure necessary for ejecting polyolefin-based resin in-mold foamed molded product (box) from mold (hereinafter "minimum air pressure necessary for ejection"))

The same process as described in the section "Preparation of polyolefin-based resin in-mold foamed molded product (box)" (described later) was carried out, except that the pressure of air was varied at 0.02 MPa intervals within the range of from 0.02 MPa to 0.16 MPa (gage pressure). In this way, ten polyolefin-based resin in-mold foamed molded products (boxes) (n = 10) were prepared at each gage pressure for each of Examples C1 to C14 and Comparative Examples C1 to C12. The lowest pressure of air, at which all the ten in-mold foamed molded products were left in the stationary mold due to the expelled air and removed from the stationary mold without problem by the ejecting member, was defined as the minimum air pressure necessary for ejection of a polyolefin-based resin in-mold foamed molded product.

<Examples C1 to C14, Comparative Examples C1 to C12>

[Preparation of polyolefin-based resin particles]

Polyolefin-based resin particles (1.2 mg/particle) were produced by the same method as described in Examples A. The amounts of the respective components blended (parts by weight) were in accordance with Tables 15 to 18. A polyolefin-based resin composition obtained during the production of the polyolefin-based resin particles was measured for flexural rigidity by the foregoing method. The results thereof are shown in Tables 15 to 18.

[Table 15]

| | | | Examples | | | | | | |
|---|---|---|---|---|---|---|---|---|---|
| | | | C1 | C2 | C3 | C4 | C5 | C6 | C7 |
| Polyolefin-based resin particles | Component (a) | Polypropylene-based resin A | part by weight | 100 | 100 | 100 | 95 | 100 | 100 | 100 |
| | | Ethylene-1-butene copolymer | part by weight | | | | 5 | | | |
| | Component (b) | Erucic acid amide | part by weight | 1.0 | 1.0 | 1.0 | 1.0 | 1.0 | 1.0 | 1.0 |
| | | Ethylene bis(stearic acid amide) | part by weight | | | | | | | |
| | | Oleic acid amide | part by weight | | | | | | | |
| | Component (c) | Ethylene-based copolymer A | part by weight | 4.00 | 4.00 | 3.80 | 3.80 | | | |
| | | Ethylene-based copolymer B | part by weight | | | | | 3.80 | | |
| | | Ethylene-based copolymer C | part by weight | | | | | | | |
| | Component (d) | Copolymer A | part by weight | | | | | | 0.15 | 0.15 |
| | | Copolymer B | part by weight | | | | | | | 2.0 |

| | | | Examples | | | | | | |
|---|---|---|---|---|---|---|---|---|---|
| | | | C1 | C2 | C3 | C4 | C5 | C6 | C7 |
| Component (e) | Rubber A | part by weight | | | | | | | 1.0 |
| Component (f) | Acrylate-based copolymer A | part by weight | | | 0.20 | 0.20 | | 0.20 | |
| | Acrylate-based copolymer B | part by weight | | | | | 0.20 | | |
| Water absorbing substance | Glycerin | part by weight | | 0.20 | 0.20 | 0.20 | 0.20 | 0.20 | 0.20 |
| Physical property of polyolefin- based resin composition | Flexural rigidity | kg/cm$^2$ | 9800 | 9800 | 9800 | 9600 | 9600 | 10000 | 9900 |

[Table 16]

| | | | | Examples | | | | | | |
|---|---|---|---|---|---|---|---|---|---|---|
| | | | | C8 | C9 | C10 | C11 | C12 | C13 | C14 |
| Polyolefin- based resin particles | Component (a) | Polypropylene-based resin A | part by weight | 95 | 100 | 100 | 100 | 100 | 100 | 100 |
| | | Ethylene-1-butene copolymer | part by weight | 5 | | | | | | |
| | Component (b) | Erucic acid amide | part by weight | 1.0 | | | 0.1 | 2.4 | 1.0 | 1.0 |
| | | Ethylene bis(stearic acid amide) | part by weight | | 1.0 | | | | | |
| | | Oleic acid amide | part by weight | | | 1.0 | | | | |
| | Component (c) | Ethylene-based copolymer A | part by weight | | | | | | 0.01 | 5.00 |
| | | Ethylene-based copolymer B | part by weight | | | | | | | |
| | | Ethylene-based copolymer C | part by weight | 0.15 | 0.15 | 0.15 | 0.15 | 0.15 | | |

(continued)

| | | | Examples | | | | | | |
|---|---|---|---|---|---|---|---|---|---|
| | | | C8 | C9 | C10 | C11 | C12 | C13 | C14 |
| Component (d) | Copolymer A | part by weight | 2.0 | | | | | | |
| | Copolymer B | part by weight | | | | | | | |
| Component (e) | Rubber A | part by weight | 1.0 | | | | | | |
| Component (f) | Acrylate-based copolymer A | part by weight | | | | | | | |
| | Acrylate-based copolymer B | part by weight | 0.85 | | | | | | |
| Water absorbing substance | Glycerin | part by weight | 0.20 | 0.20 | 0.20 | 0.20 | 0.20 | 0.20 | 0.20 |
| Physical property of polyolefin-based resin composition | Flexural rigidity | kg/cm$^2$ | 9600 | 10000 | 10000 | 10000 | 10000 | 10000 | 9800 |

[Table 17]

| | | | | Comparative Examples | | | | | |
|---|---|---|---|---|---|---|---|---|---|
| | | | | C1 | C2 | C3 | C4 | C5 | C6 |
| Polyolefin-based resin particles | Component (a) | Polypropylene-based resin A | part by weight | 100 | 100 | 95 | 95 | 100 | 100 |
| | | Ethylene-1-butene copolymer | part by weight | | | 5 | 5 | | |
| | Component (b) | Erucic acid amide | part by weight | | 1.0 | | 1.0 | | |
| | | Ethylene bis (stearic acid amide) | part by weight | | | | | | |
| | | Oleic acid amide | part by weight | | | | | | |
| | Component (c) | Ethylene-based copolymer A | part by weight | | | | | 4.00 | |
| | | Ethylene-based copolymer B | part by weight | | | | | | |
| | | Ethylene-based copolymer C | part by weight | | | | | | |
| | Component (d) | Copolymer A | part by weight | | | | | | 2.0 |
| | | Copolymer B | part by weight | | | | | | |
| | Component (e) | Rubber A | part by weight | | | | | | |
| | Component (f) | Acrylate-based copolymer A | part by weight | | | | | | |
| | | Acrylate-based copolymer B | part by weight | | | | | | |
| | Water absorbing substance | Glycerin | part by weight | 0.20 | 0.20 | 0.20 | 0.20 | 0.20 | 0.20 |
| | Physical property of polyolefin-based resin composition | Flexural rigidity | kg/cm$^2$ | 10000 | 10000 | 9800 | 9800 | 9800 | 9800 |

[Table 18]

| | | | | Comparative Examples | | | | | |
|---|---|---|---|---|---|---|---|---|---|
| | | | | C7 | C8 | C9 | C10 | C11 | C12 |
| Polyolefin - based resin particles | Component (a) | Polypropylene-based resin A | part by weight | 100 | 100 | 100 | 100 | 100 | 100 |
| | | Ethylene-1-butene copolymer | part by weight | | | | | | |
| | Component (b) | Erucic acid amide | part by weight | | | | 1.0 | 1.0 | 1.0 |
| | | Ethylene bis (stearic acid amide) | part by weight | | | | | | |
| | | Oleic acid amide | part by weight | | | | | | |
| | Component (c) | Ethylene-based copolymer A | part by weight | | | | | 15.00 | 25.00 |
| | | Ethylene-based copolymer B | part by weight | | | | | | |
| | | Ethylene-based copolymer C | part by weight | | | | | | |
| | Component (d) | Copolymer A | part by weight | | | | 2.0 | | |
| | | Copolymer B | part by weight | 2.0 | | | | | |
| | Component (e) | Rubber A | part by weight | | 1.0 | | | | |
| | Component (f) | Acrylate- based copolymer A | part by weight | | | 2.00 | | | |
| | | Acrylate- based copolymer B | part by weight | | | | | | |
| | Water absorbing substance | Glycerin | part by weight | 0.20 | 0.20 | 0.20 | 0.20 | 0.20 | 0.20 |
| | Physical property of polyolefin - based resin composition | Flexural rigidity | kg/cm$^2$ | 9800 | 10000 | 10000 | 9800 | 9500 | 9100 |

[Preparation of polyolefin-based resin expanded particles (first-step expanded particles)]

Into a 10 L pressure-resistant vessel, the following were introduced so as to prepare a dispersion slurry including a blowing agent: 100 parts by weight of the polyolefin-based resin particles obtained; 200 parts by weight of water as an aqueous dispersion medium; 0.3 parts by weight of kaolin as a dispersing agent; 0.004 parts by weight of sodium dodecylbenzenesulfonate as a dispersion auxiliary agent; and 2.6 parts by weight of carbon dioxide as a blowing agent. While the dispersion slurry was stirred, (a) an expansion temperature (temperature inside the pressure-resistant vessel) was brought to 147°C to 149°C and (b) an expansion pressure (internal pressure of the vessel) was brought to 3.2 MPa. Once the temperature and the pressure inside the pressure-resistant vessel reached a predetermined expansion temperature and predetermined expansion pressure, the temperature and pressure inside the pressure-resistant vessel were maintained at the predetermined expansion temperature and predetermined expansion pressure for another 30 minutes. Thereafter, carbon dioxide was supplied so that, while maintaining the predetermined expansion pressure in the pressure-resistant vessel, the dispersion slurry was expelled into an area of atmospheric pressure via an orifice (diameter: ø 3 mm) provided in a lower portion of the pressure-resistant vessel. This produced first-step expanded particles of the polyolefin-based resin. Thereafter, the first-step expanded particles of the polyolefin-based resin were dried at 75°C for 24 hours.

The obtained first-step expanded particles exhibited two peaks derived from the polyolefin-based resin in a DSC curve obtained by DSC measurements.

[Preparation of polyolefin-based resin expanded particles (second-step expanded particles)]

Second-step expanded particles of a polyolefin-based resin were obtained via a method including the following steps (1) to (4) in the following order. (1) The first-step expanded particles obtained in each Example were supplied to a 1 $m^3$ pressure-resistant vessel. (2) Air pressurization was used to impart an internal pressure of 0.20 MPa to 0.30 MPa (absolute pressure) to the first-step expanded particles thus supplied. (3) Next, the first-step expanded particles were transferred to a second-step expansion device. (4) Thereafter, the first-step expanded particles were heated and further expanded with steam at 0.035 MPa to 0.060 MPa (gage pressure) in the second-step expansion device to obtain second-step expanded particles which were substantially spherical.

The second-step expanded particles thus obtained exhibited two peaks derived from the polyolefin-based resin in a DSC curve obtained by DSC measurements.

[Preparation of polyolefin-based resin in-mold foamed molded product (block)]

A polyolefin-based resin in-mold foamed molded product was prepared via a method including the following steps (1) to (6) in the following order. (1) The obtained polyolefin-based resin expanded particles (second-step expanded particles) were introduced into pressure-resistant vessel, and impregnated with pressurized air by raising the pressure inside the pressure-resistant vessel by injecting air into the pressure-resistant vessel, thereby bringing the internal pressure of the second-step expanded particles to 0.20 MPa (absolute pressure). (2) The second-step expanded particles imparted with internal pressure were filled into the mold cavity of a mold installed on a molding machine. The mold used here is a mold which has a block-shape mold cavity measuring 400 mm (length) × 300 mm (width) × 50 mm (thickness). Used as a filling method was the foregoing method (a1), and a mold gap of 5 mm was employed. (3) After filling, the second-step expanded particles were heated for 10 seconds with steam at 0.32 MPa (gage pressure), while a drain valve of a molding machine's drain line was in the open state. (4) Next, the second-step expanded particles were heated with steam at the same gage pressure for another 10 seconds while the drain valve of the molding machine's drain line was in the closed state, thereby fusing the polyolefin-based resin expanded particles (second-step expanded particles) together to obtain a polyolefin-based resin in-mold foamed molded product. (5) While the drain valve was in the open state, cooling water was used to (a) cool the inside of the mold and the surface of the molded product and (b) condense steam inside the mold to obtain condensed water, and the cooling water and the condensed water were drained. (6) The mold was opened, and the obtained polyolefin-based resin in-mold foamed molded product was removed from the mold.

The obtained polyolefin-based resin in-mold foamed molded product (block) was measured for density and evaluated for internal fusibility.

[Preparation of polyolefin-based resin in-mold foamed molded product (box)]

A polyolefin-based resin in-mold foamed molded product (box) was prepared via a method including the following steps (1) to (6) in the following order. (1) The obtained polyolefin-based resin expanded particles (second-step expanded particles) were introduced into a pressure-resistant vessel, and impregnated with pressurized air by raising the pressure inside the pressure-resistant vessel by injecting air into the pressure-resistant vessel, thereby bringing the internal pressure of the second-step expanded particles to 0.20 MPa (absolute pressure). (2) The second-step expanded particles imparted with internal pressure were filled into the mold cavity of a mold installed on a molding machine. The mold used here is a mold which includes a movable mold that can be driven and a stationary mold and in which a box-shape mold cavity measuring 350 mm (length) × 200 mm (width) × 150 mm (thickness) is defined by the movable mold and the stationary mold. Used as a filling method was the foregoing method (a1), and a mold gap of 5 mm was employed. (3) After filling, the second-step expanded particles were heated for 12 seconds with steam at 0.32 MPa (gage pressure), while a drain valve of a molding machine's drain line was in the open state. (4) Next, the second-step expanded particles were heated with steam at the same gage pressure for another 12 seconds while the drain valve of the molding machine's drain line was in the closed state, thereby fusing the polyolefin-based resin expanded particles (second-step expanded particles) together to obtain a polyolefin-based resin in-mold foamed molded product. (5) While the drain valve was in the open state, cooling water was used to (a) cool the inside of the mold and the surface of the molded product and (b) condense steam inside the mold to obtain condensed water, and the cooling water and the condensed water were drained. (6) The mold was opened, and the obtained polyolefin-based resin in-mold foamed molded product was removed from the mold with an ejecting member.

The foregoing step (6) is discussed more specifically. The mold was opened by driving the movable mold. It is noted here that, while the mold was being opened, specifically, while the distance between the movable mold and the stationary mold was changed from 5 mm to 80 mm, air was expelled from a gas expelling section of the movable mold into an area of the mold cavity of the movable mold. Then, the polyolefin-based resin in-mold foamed molded product remaining in the stationary mold due to the expelled air was removed from the stationary mold with the ejecting member of the stationary mold. The pressure of air was a pressure within the range of from 0.02 MPa to 0.16 MPa (gage pressure).

The ejection success rate and the minimum air pressure necessary for ejection were evaluated by varying the pressure of expelled air in the foregoing production method.

The results of evaluations are shown in Tables 19 to 22.

EP 3 862 386 A1

[Table 19]

| | | | | | Examples | | | | | | |
|---|---|---|---|---|---|---|---|---|---|---|---|
| | | | | | C1 | C2 | C3 | C4 | C5 | C6 | C7 |
| Polyolefin-based resin expanded particles | First-step expanded particles | Bead property | Expansion ratio | time | 15 | 16 | 16 | 16 | 16 | 16 | 16 |
| | | | Apparent density | g/L | 32 | 32 | 32 | 32 | 31 | 32 | 31 |
| | | | Average cell diameter | μm | 200 | 255 | 260 | 260 | 255 | 255 | 260 |
| | Second-step expanded particles | Bead property | Expansion ratio | time | 24 | 24 | 24 | 24 | 24 | 24 | 24 |
| | | | Apparent density | g/L | 21 | 21 | 21 | 21 | 21 | 21 | 21 |
| | | | Average cell diameter | μm | 230 | 290 | 295 | 295 | 290 | 290 | 295 |
| Polyolefin - based resin in-mold foamed molded product | | Quality of molded product | Density of molded product | g/L | 25 | 25 | 25 | 25 | 25 | 25 | 25 |
| | | | Internal fusibility | - | Excellent | Excellent | Excellent | Excellent | Excellent | Excellent | Excellent |
| | | Punchability | Crushing at location of blade insertion | - | Excellent | Excellent | Excellent | Excellent | Excellent | Excellent | Excellent |
| | | | Cracking in the vicinity of location of blade insertion | - | Excellent | Excellent | Excellent | Excellent | Excellent | Excellent | Excellent |
| | | | State of cut surface | - | Good | Excellent | Excellent | Excellent | Excellent | Morethan excellent | Morethan excellent |
| | | Crack resistance | Crack occurrence rate | % | 4 | 4 | 2 | 2 | 4 | 2 | 2 |
| | | Mold release properties | Ejection success rate | % | 100 | 100 | 100 | 100 | 100 | 100 | 100 |
| | | | Minimum air pressure necessary for ejection | MPa | 0.06 | 0.06 | 0.06 | 0.06 | 0.06 | 0.04 | 0.04 |

76

[Table 20]

| | | | | | Examples | | | | | | |
| --- | --- | --- | --- | --- | --- | --- | --- | --- | --- | --- | --- |
| | | | | | C8 | C9 | C10 | C11 | C12 | C13 | C14 |
| Polyolefin-based resin expanded particles | First-step expanded particles | Bead property | Expansion ratio | time | 16 | 16 | 16 | 16 | 16 | 16 | 16 |
| | | | Apparent density | g/L | 32 | 32 | 32 | 32 | 32 | 32 | 32 |
| | | | Average cell diameter | μm | 280 | 255 | 250 | 265 | 235 | 250 | 270 |
| | Second-step expanded particles | Bead property | Expansion ratio | time | 24 | 24 | 24 | 24 | 24 | 24 | 24 |
| | | | Apparent density | g/L | 21 | 21 | 21 | 21 | 21 | 21 | 21 |
| | | | Average cell diameter | μm | 320 | 290 | 285 | 295 | 280 | 285 | 300 |
| Polyolefin-based resin in-mold foamed molded product | | Quality of molded product | Density of molded product | g/L | 25 | 25 | 25 | 25 | 25 | 25 | 25 |
| | | | In ternal fusibility | - | Excellent | Excellent | Excellent | Excellent | Excellent | Excellent | Excellent |
| | | Punchability | Crushing at location of blade insertion | - | More than excellent | Excellent | Excellent | Excellent | Excellent | Excellent | Excellent |
| | | | Cracking in the vicinity of location of blade insertion | - | Excellent | Excellent | Excellent | Excellent | Excellent | Excellent | Excellent |
| | | | State of cut surface | - | More than excellent | More than excellent | More than excellent | Excellent | More than excellent | Excellent | More than excellent |
| | | Crack resistance | Crack occurrence rate | % | 0 | 2 | 2 | 4 | 2 | 6 | 4 |
| | | Mold release properties | Ejection success rate | % | 100 | 100 | 100 | 100 | 100 | 100 | 100 |
| | | | Minimum air pressure necessary for ejection | MPa | 0.02 | 0.04 | 0.04 | 0.04 | 0.04 | 0.06 | 0.04 |

[Table 21]

| | | | | | Comparative Examples | | | | | |
|---|---|---|---|---|---|---|---|---|---|---|
| | | | | | C1 | C2 | C3 | C4 | C5 | C6 |
| Polyolefin-based resin expanded particles | First-step expanded particles | Bead property | Expansion ratio | time | 16 | 16 | 16 | 16 | 16 | 16 |
| | | | Apparent density | g/L | 32 | 31 | 31 | 31 | 31 | 31 |
| | | | Average cell diameter | μm | 200 | 170 | 200 | 170 | 200 | 200 |
| | Second- step expanded particles | Bead property | Expansion ratio | time | 24 | 24 | 24 | 24 | 24 | 24 |
| | | | Apparent density | g/L | 21 | 21 | 21 | 21 | 21 | 21 |
| | | | Average cell diameter | μm | 230 | 195 | 230 | 195 | 230 | 230 |
| Polyolefin -based resin in-mold foamed molded product | | Quality of molded product | Density of molded product | g/L | 25 | 25 | 25 | 25 | 25 | 25 |
| | | | In ternal fusibility | - | Excellent | Excellent | Excellent | Excellent | Excellent | Exce -llent |
| | | Punchability | Crushing at location of blade insertion | - | Fail | Fail | Fail | Fail | Fail | Fail |
| | | | Cracking in the vicinity of location of blade insertion | - | Fail | Fail | Fail | Fail | Pass | Fail |
| | | | State of cut surface | - | Good | Good | Good | Good | Good | Good |
| | | Crack resistance | Crack occurrence rate | % | 24 | 22 | 24 | 22 | 20 | 22 |
| | | Mold release properties | Ejection success rate | % | 60 | 60 | 60 | 60 | 70 | 65 |
| | | | Minimum air pressure necessary for ejection | MPa | 0.14 | 0.14 | 0.16 | 0.16 | 0.12 | 0.14 |

[Table 22]

| | | | | | Comparative Examples | | | | | |
|---|---|---|---|---|---|---|---|---|---|---|
| | | | | | C7 | C8 | C9 | C10 | C11 | C12 |
| Polyolefin - based resin expanded particles | First-step expanded particles | Bead property | Expansion ratio | time | 16 | 16 | 16 | 16 | 16 | 16 |
| | | | Apparent density | g/L | 31 | 31 | 32 | 31 | 32 | 32 |
| | | | Average cell diameter | μm | 200 | 200 | 200 | 200 | 260 | 260 |
| | Second-step expanded particles | Bead property | Expansion ratio | time | 24 | 24 | 24 | 24 | 24 | 24 |
| | | | Apparent density | g/L | 21 | 21 | 21 | 21 | 21 | 21 |
| | | | Average cell diameter | μm | 230 | 230 | 230 | 230 | 300 | 300 |
| Polyolefin -based resin in-mold foamed molded product | | Quality of molded product | Density of molded product | g/L | 25 | 25 | 25 | 25 | 25 | 25 |
| | | | Internal fusibility | - | Excellent | Excellent | Excellent | Excellent | Fail | Fail |
| | | Punch-ability | Crushing at location of blade insertion | - | Fail | Fail | Fail | Fail | Excellent | Excellent |
| | | | Cracking in the vicinity of location of blade insertion | - | Fail | Fail | Fail | Fail | Excellent | Excellent |
| | | | State of cut surface | - | Good | Good | Good | Good | Good | Good |
| | | Crack resistance | Crack occurrence rate | % | 22 | 24 | 24 | 22 | 4 | 4 |
| | | Mold release properties | Ejection success rate | % | 65 | 60 | 60 | 65 | 100 | 100 |
| | | | Minimum air pressure necessary for ejection | MPa | 0.14 | 0.14 | 0.14 | 0.14 | 0.04 | 0.04 |

Each of Examples C1 to C14 is about polyolefin-based resin expanded particles and a polyolefin-based resin in-mold foamed molded product in accordance with an embodiment of the present invention. Specifically, each of Examples C1 to C14 is about (i) polyolefin-based resin expanded particles produced from a blend of a polyolefin-based resin (a) (having a flexural rigidity, measured in accordance with JIS K7106, of more than 8000 kg/cm$^2$ and not more than 13500 kg/cm$^2$), a higher fatty acid amide (b), and an ethylene-based copolymer (c) which were blended in amounts falling within the ranges specified in an embodiment of the present invention and (ii) a polyolefin-based resin in-mold foamed molded product obtained by subjecting the polyolefin-based resin expanded particles to in-mold foam molding by a production method in accordance with an embodiment of the present invention. It was demonstrated that, with use of the polyolefin-based resin expanded particles of any of Examples C1 to C14, the obtained polyolefin-based resin in-mold foamed molded product was excellent in quality (especially internal fusibility) and mold release properties.

It was also demonstrated that, with use of the polyolefin-based resin expanded particles of any of Examples C1 to C14, the obtained polyolefin-based resin in-mold foamed molded product is less prone to cracking and chipping when recovered from a mold and is excellent in strength, quality (especially internal fusibility), and punchability.

The polyolefin-based resin expanded particles of each of Comparative Examples C1 to C10 (i) contain neither the higher fatty acid amide (b) nor the ethylene-based copolymer (c), (ii) contain the higher fatty acid amide (b) but do not contain the ethylene-based copolymer (c), or (iii) do not contain the higher fatty acid amide (b) but contain the ethylene-based copolymer (c). It was demonstrated that, as a result, with the use of the polyolefin-based resin expanded particles of any of Comparative Examples C1 to C10, the obtained polyolefin-based resin in-mold foamed molded product was inferior in mold release properties.

In particular, the polyolefin-based resin expanded particles of Comparative Example C10 contain the copolymer (d) but do not contain the ethylene-based copolymer (c). In other words, the polyolefin-based resin expanded particles of Comparative Example C10 are the same in composition as Example C2, except that the copolymer (d) is contained instead of the ethylene-based copolymer (c). However, it was demonstrated that, even when the polyolefin-based resin expanded particles of Comparative Example C10 were used, the obtained polyolefin-based resin in-mold foamed molded product was inferior in mold release properties.

The polyolefin-based resin expanded particles of Comparative Example C4 contain an ethylene-1-butene copolymer in addition to the polypropylene-based resin, but do not contain the ethylene-based copolymer (c). It was demonstrated that, as a result, with the use of the polyolefin-based resin expanded particles of Comparative Example C4, the obtained polyolefin-based resin in-mold foamed molded product was inferior in mold release properties.

The polyolefin-based resin expanded particles Comparative Examples C11 and C12 contain the polyolefin-based resin (a), the higher fatty acid amide (b), and the ethylene-based copolymer (c), but the amount of the ethylene-based copolymer (c) contained (blended) is large, which is outside the range according to the present invention. It was demonstrated that, as a result, with the use of the polyolefin-based resin expanded particles of Comparative Example C11 or C12, the obtained polyolefin-based resin in-mold foamed molded product was inferior in internal fusibility, despite good mold release properties. It is inferred that this is because the polyolefin-based resin expanded particles of Comparative Examples C11 and C12 increased in expanding force during in-mold foam molding, expanded earlier than expected during heating, and steam was not distributed uniformly over the expanded particles. The phrase "steam was not distributed uniformly over the expanded particles" can also be described as "steam was not distributed sufficiently within the mold cavity".

Each of Comparative Examples B1 to B8 does not contain the ethylene-based copolymer (c), and Reference Example B1 contains neither the higher fatty acid amide (b) nor the ethylene-based copolymer (c). It was demonstrated that, as a result, with the use of the polyolefin-based resin expanded particles of any of Comparative Examples B1 to B8 and Reference Example B1, the obtained polyolefin-based resin in-mold foamed molded product had crushing at the location of blade insertion and cracking in the vicinity of the location of blade insertion, had a cut surface in "Fail" state, and was inferior in crack occurrence rate.

Industrial Applicability

An embodiment of the present invention makes it possible to obtain polyolefin-based resin expanded particles which enable a polyolefin-based resin in-mold foamed molded product that is less prone to cracking and chipping when recovered from a mold and that is excellent in strength. Furthermore, an embodiment of the present invention makes it possible to obtain polyolefin-based resin expanded particles which enable a polyolefin-based resin in-mold foamed molded product that is excellent in colorability with no color unevenness. Furthermore, an embodiment of the present invention makes it possible to obtain polyolefin-based resin expanded particles which enable a polyolefin-based resin in-mold foamed molded product that is excellent in quality and mold release properties. A polyolefin-based resin in-mold foamed molded product obtained by in-mold foam molding with use of polypropylene-based resin expanded particles in accordance with an embodiment of the present invention can be suitably used in a variety of applications such as shock-absorbing packing materials, shipping materials, thermal insulating materials, civil engineering and construction materials, and automotive components.

Reference Signs List

1, 1' first area
2 second area
3 body
4 frame member
10, 20, 30, 40, 50, 60 polyolefin-based resin in-mold foamed molded product

**Claims**

1.  Polyolefin-based resin expanded particles comprising:

    parts by weight of a polyolefin-based resin (a);
    not less than 0.1 parts by weight and less than 2.5 parts by weight of a higher fatty acid amide (b); and
    not less than 0.01 parts by weight and not more than 5.00 parts by weight of an ethylene-based copolymer (c), wherein
    the polyolefin-based resin (a) has a flexural rigidity, measured in accordance with JIS K7106, of more than 8000 kg/cm$^2$ and not more than 13500 kg/cm$^2$, and
    the ethylene-based copolymer (c) contains, as structural units:

    a structural unit (c1) derived from ethylene; and
    at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

2.  The polyolefin-based resin expanded particles as set forth in claim 1, wherein the ethylene-based copolymer (c) is an ethylene-ethyl (meth)acrylate-butyl (meth)acrylate-2-hydroxypropyl (meth)acrylate-styrene copolymer.

3.  The polyolefin-based resin expanded particles as set forth in claim 1 or 2, wherein:

    the ethylene-based copolymer (c) is a graft copolymer comprised of a copolymer constituting a main chain and a copolymer constituting a side chain;
    the copolymer constituting the main chain is an ethylene-ethyl (meth)acrylate copolymer; and
    the copolymer constituting the side chain is a butyl (meth)acrylate-2-hydroxypropyl (meth) acrylate-styrene copolymer.

4.  The polyolefin-based resin expanded particles as set forth in any one of claims 1 to 3, further comprising not less than 0.2 parts by weight and not more than 5.0 parts by weight of a copolymer (d),
    the copolymer (d) containing, as structural units: a structural unit (dl) derived from ethylene; and at least one type of structural unit (d2) derived from at least one type of vinyl monomer.

5.  The polyolefin-based resin expanded particles as set forth in any one of claims 1 to 4, further comprising not less than 0.2 parts by weight and not more than 5.0 parts by weight of an olefin-based elastomer (e).

6.  The polyolefin-based resin expanded particles as set forth in any one of claims 1 to 5, further comprising not less than 0.01 parts by weight and not more than 2.00 parts by weight of an acrylate-based copolymer (f),
    the acrylate-based copolymer (f) containing, as structural units, at least two types of structural units respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

7.  A polyolefin-based resin in-mold foamed molded product obtained by subjecting polyolefin-based resin expanded particles according to any one of claims 1 to 6 to in-mold foam molding.

8. The polyolefin-based resin in-mold foamed molded product as set forth in claim 7, further comprising a frame member molded together with the polyolefin-based resin expanded particles.

9. A method of producing polyolefin-based resin expanded particles, comprising the steps of:

obtaining a dispersion slurry, which includes (i) an aqueous dispersion medium and (ii) polyolefin-based resin particles and an inorganic blowing agent which are dispersed in the aqueous dispersion medium, by mixing the polyolefin-based resin particles, the aqueous dispersion medium, and the inorganic blowing agent in a pressure-resistant vessel; and

obtaining polyolefin-based resin expanded particles by raising a temperature and a pressure inside the pressure-resistant vessel and then expelling the dispersion slurry from the pressure-resistant vessel into an area having a pressure lower than the raised pressure inside the pressure-resistant vessel, so that the polyolefin-based resin particles are expanded, wherein

the polyolefin-based resin particles contain:

parts by weight of a polyolefin-based resin (a);

not less than 0.1 parts by weight and less than 2.5 parts by weight of a higher fatty acid amide (b); and

not less than 0.01 parts by weight and not more than 5.00 parts by weight of an ethylene-based copolymer (c),

the polyolefin-based resin (a) has a flexural rigidity, measured in accordance with JIS K7106, of more than 8000 $kg/cm^2$ and not more than 13500 $kg/cm^2$, and

the ethylene-based copolymer (c) contains, as structural units:

a structural unit (c1) derived from ethylene; and

at least two types of structural units (c2) respectively derived from at least two types of vinyl monomers selected from the group consisting of methyl (meth)acrylate, ethyl (meth)acrylate, butyl (meth)acrylate, stearyl (meth)acrylate, 2-hydroxypropyl (meth)acrylate, 2-hydroxyethyl (meth)acrylate, and styrene.

FIG. 1

(a)

10

1

X
Z
Y

(b)

1

X
Z
Y

FIG. 2

(a)

20

2

X
Z
Y

(b)

2

X
Y
Z

## FIG. 3

(a)

(b)

# FIG. 4

(a)

(b)

FIG. 5

（a）                                                    50

X
↑   ↗ Z
│
└──→ Y

（b）                          （c）

H₂                            L₁

X                             Z
↑                             ↑
⊗──→ Y                        ⊗──→ Y
Z                             X

FIG. 6

(a)

X
Z
Y

(b)

H₂

X
Y
Z

(c)

L₁

Z
Y
X

FIG. 7

(a)

70

1

X

Z

Y

(b)

(c)

H₃

R

L₂

X

Y

Z

Z

Y

X

# FIG. 8

（a）

80

3

4

X

Z

Y

（b）

3

4

X

Y

Z

（c）

4

3

Z

X

Y

# INTERNATIONAL SEARCH REPORT

| International application No. |
| --- |
| PCT/JP2019/038913 |

**A. CLASSIFICATION OF SUBJECT MATTER**
Int.Cl. C08J9/18(2006.01)i, C08K5/20(2006.01)i, C08L23/00(2006.01)i, C08L23/08(2006.01)i, C08L33/06(2006.01)i

According to International Patent Classification (IPC) or to both national classification and IPC

**B. FIELDS SEARCHED**

Minimum documentation searched (classification system followed by classification symbols)
Int.Cl. C08J9/18, C08K5/20, C08L23/00, C08L23/08, C08L33/06

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-138020 A (JSP CO., LTD.) 19 June 2008, entire text, in particular, claims, paragraphs [0021]-[0027] (Family: none) | 1-9 |
| A | KR 10-1362541 B1 (JSP CO., LTD.) 13 February 2014, entire text, in particular, claims, paragraphs [0028]-[0034] (Family: none) | 1-9 |
| A | JP 2008-255286 A (KANEKA CORP.) 23 October 2008, entire text, in particular, claims, paragraphs [0023]-[0025] (Family: none) | 1-9 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 November 2019 (19.11.2019) | 03 December 2019 (03.12.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/038913 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2015/098619 A1 (KANEKA CORP.) 02 July 2015, entire text & US 2016/0319095 A1 & EP 3088454 A1 & CN 105849167 A | 1-9 |
| A | JP 4-253741 A (MITSUBISHI YUKA BADISCHE CO., LTD.) 09 September 1992, entire text (Family: none) | 1-9 |
| A | JP 2009-114359 A (KANEKA CORP.) 28 May 2009, entire text (Family: none) | 1-9 |
| P, A | WO 2018/225649 A1 (KANEKA CORP.) 13 December 2018, entire text (Family: none) | 1-9 |

Form PCT/ISA/210 (continuation of second sheet) (January 2015)

**REFERENCES CITED IN THE DESCRIPTION**

**Patent documents cited in the description**

- JP 8059876 A
- WO 2004046242 A
- JP 2008138020 A
- JP 7300536 A
- JP 11322995 A
- JP 3181302 U
- JP 2000265046 A
- JP 2014201601 A
- JP 2015131949 A
- WO 2011136092 A